# EUROPEAN PATENT SPECIFICATION

(11) **EP 2 112 182 B1**
(45) Date of publication and mention of the grant of the patent: **27.02.2019**
(21) Application number: 09005780.3
(22) Date of filing: 24.04.2009
(51) Int. Cl.: C08F 290/06, C08F 290/14, C08F 2/48, G02B 5/20, C08L 101/00

(54) **Polymerizable composition, light-shielding color filter, black curable composition, light-shielding color filter for solid-state image pickup device and method of producing the same, and solid-state image pickup device**
Polymerisierbare Zusammensetzung, lichtabschirmender Farbfilter, härtbare schwarze Zusammensetzung, lichtabschirmender Farbfilter für eine Festkörperbildaufnahmevorrichtung sowie Herstellungsverfahren dafür und Festkörperbildaufnahmevorrichtung
Composition polymérisable, filtre de couleur à protection lumineuse, composition durcissable noire, filtre de couleur à protection lumineuse, dispositif de capture d'image à l'état solide et son procédé de production, et dispositif de capture d'image à l'état solide

(30) Priority: 25.04.2008 JP 2008115184; 26.06.2008 JP 2008167063; 26.06.2008 JP 2008167065
(43) Date of publication of application: 28.10.2009
(73) Proprietor: FUJIFILM Corporation, Minato-ku Tokyo (JP)
(72) Inventor: Tsuchimura, Tomotaka, Haibara-gun Shizuoka-ken (JP); Maruyama, Yoichi, Haibara-gun Shizuoka-ken (JP); Shimada, Kazuto, Haibara-gun Shizuoka-ken (JP); Fujimori, Toru, Haibara-gun Shizuoka-ken (JP); Kaneko, Yushi, Haibara-gun Shizuoka-ken (JP); Einaga, Hiroyuki, Haibara-gun Shizuoka-ken (JP)
(74) Representative: Hoffmann Eitle

(56) References cited:
- WO-A-2005/111674
- JP-A- 6 324 207
- JP-A- 7 325 400
- JP-A- 10 001 638
- JP-A- 59 054 265
- JP-A- 2001 115 043
- US-A- 4 071 424
- US-A1- 2005 258 406

## Description

### BACKGROUND OF THE INVENTION

### Field of the invention

The present invention relates to a polymerizable composition, a light-shielding color filter, a black curable composition, a light-shielding color filter for a solid-state image pickup device and a method of producing the same, and a solid-state image pickup device.

### Description of Related Art

Color filters used in liquid crystal display devices are provided with light-shielding color filters in order to, for example, shield transmission of light between color pixels and improve contrast. The light-shielding color filters are called black matrices. Solid-state image pickup devices are also provided with light-shielding films in order to, for example, prevent generation of noise and improve image quality.

Black curable compositions containing black colorants, such as carbon black or titanium black, are known as compositions for forming black matrices for liquid crystal display devices and light-shielding color filters for solid-state image pickup devices (see, for example, Japanese Patent Application Laid-Open (JP-A) Nos. 10-246955, 9-54431, 10-46042, 2006-36750, and 2007-115921).

Black matrices for liquid crystal display devices are required to have light-shielding property in, mainly, a visible-light region. Light-shielding color filters for solid-state image pickup devices are required to have light-shielding property in an infrared region as well as in the visible-light region.

Further, light-shielding color filters for next-generation solid-state image pickup devices are desired to have improved light-shielding properties and reduced thickness. In order to satisfy both demands, it is necessary to increase the content of black colorant in the light-shielding color filters.

However, if the content of black colorant in a conventional black curable composition for forming a light-shielding color filter for a solid-state image pickup device is increased, light is shielded when a black curable composition layer formed by applying the black curable composition to a substrate is imagewise exposed for forming a desired pattern. Therefore, it has been usually difficult for light from a light source used for image formation to reach the bottom part of the black curable composition layer, resulting in insufficient curing of the black curable composition.

Since the curing of the black curable composition is insufficient, there have been problems in that the surface of the black curable composition layer is washed off during developing, or the portion to be developed is not sufficiently developed during post-exposure developing and the black curable composition remains in unexposed portions, resulting in deterioration of the pattern shape.

Light-shielding color filters for solid-state image pickup devices should shield light in an infrared region of from 800 nm to 1300 nm as well as light in the visible-light region, in order to prevent generation of noise. When photosensitive resin compositions containing black pigments used in black matrices of liquid crystal display devices and the like, such as carbon black, are used to form light-shielding color filters for solid-state image pickup devices, light-shielding properties in an infrared region are insufficient; in order to satisfy the demand for light-shielding properties in an infrared region, it has been necessary to increase the carbon black content and/or the thickness of the black layer of the light-shielding color filters.

When carbon black is used and UV rays or the like are used for exposure for curing, the transmittance to light having a wavelength in a range of from 300 nm to 500 nm is remarkably low and curing is difficult; as a result, the demands have not been satisfied. Although titanium black has higher light-shielding properties in an infrared region than that of carbon black, and has higher transmittance within the range of from 300 nm to 500 nm than that of carbon black, the transmittance is still insufficient; as a result, curing is insufficient and sensitivity is low.

Further, light-shielding color filters for solid-state image pickup devices are desired to have improved light-shielding properties and reduced thickness.. In order to satisfy both demands, it is necessary to increase the content of black colorant in the light-shielding color filters. When the content of titanium black is increased in order to obtain high light-shielding properties, the transmittance to exposure light is decreased. As a result, although curing reaction proceeds at the irradiated surface of the light-shielding color filter, curing reaction hardly proceeds at a portion near the substrate, and adhesiveness of the color filter to the substrate is deteriorated. If the exposure light amount is increase for the purpose of preventing the deterioration of the adhesiveness, difficult problems arise in the design of fine patterns because, for example, the productivity may be decreased, the pixel size of the pattern becomes larger than the desired size, or the pattern shape becomes a tapered-shape rather than a rectangular shape.

US-A-2005/0258406, corresponding to WO-A-20051111674, discloses a black resist composition for a color filter. The composition contains titanium black (A) with an average primary particle size of 110 nm or less and carbon black (B) with an average primary particle size of 60 nm or less, where the ratio in mass between the titanium black (A) and the titanium black (B) is 100:5 to 1000. The composition may further include a binder resin with a carboxyl group and an ethylenic unsaturated group. The composition may further include a photopolymerization initiator which may be e.g. a hexaarylbiimidazole-series compound or an aminoacetophenone-series compound.

JP-A-2001-115043 discloses a colored composition comprising a colorant, a resin and an insulating material in an amount of 1-35 wt.% based on the colorant which is preferably coated with the insulating material. The colorant preferably contains a black colorant, especially titanium black or carbon black. The insulating material preferably comprises at least one of silica, alumina or zirconia. The colored composition may include a dispersing agent and a solvent, and may further include (i) a photopolymerizable monomer and a photopolmerization initiator, (ii) a crosslinking agent and a photoacid generator or (iii) a photopolymerizable monomer and a diazo-based or azide-based compound. The colored composition may be used to form a black matrix as an element of a liquid crystal display device.

### SUMMARY OF THE INVENTION

While a black matrix for a liquid crystal display device is required to have light-shielding properties in, mainly, a visible-light region, a light-shielding color filter is required to have light-shielding properties in an infrared region as well as in the visible-light region.

While a black matrix for liquid crystal display device is desired to have finer resolution, a light-shielding color filter for a solid-state image pickup device (especially, a light-shielding color filter for shielding a surface (hereinafter sometimes referred to as "rear surface") of the support that is at the opposite side to a surface having a light-receiving element thereon from light) is desired to uniformly shield a larger area than in the case of the black matrix for a liquid crystal display device.

However, when a conventional photosensitive composition is used to form a light-shielding color filter having a large area as a color filter for a solid-state image pickup device, a region (step) having a smaller film thickness than that of the central region of the light-shielding color filter may be generated at a peripheral portion of the light-shielding color filter, which may result in decreased light-shielding properties at the peripheral portion of the light-shielding color filter.

If the content of black colorant is increased in order to obtain higher light-shielding properties, residual matter tends to occur at a peripheral portion of the light-shielding color filter, and sensitivity may be reduced. Further, when the quantity of photoinitiator is increased so as to improve sensitivity, storage stability may be decreased.

The present invention has been made in view of the above circumstance, and objects of the invention include the following.

A first aspect of the present invention aims at providing a polymerizable composition having high curing sensitivity and with which a high-precision light-shielding film pattern can be formed while decrease in light-shielding properties at peripheral areas is suppressed and generation of residual matter in unexposed areas is suppressed.

The first aspect of the present invention also aims at providing a light-shielding color filter in which decrease in light-shielding properties at peripheral areas is suppressed, and a solid-state image pickup device having a light-shielding color filter in which decrease in light-shielding properties at peripheral areas is suppressed.

A second aspect of the present invention aims at providing a black curable composition which cures with high sensitivity even at a low exposure amount, with which generation of residual matter in developed areas is reduced, and with which a light-shielding color filter for a solid-state image pickup device having an improved pattern shape can be formed.

The second aspect of the present invention also aims at providing a light-shielding color filter for a solid-state image pickup device having excellent light-shielding properties in a wide wavelength range, a method of producing the same, and a solid-state image pickup device.

A third aspect of the present invention aims at providing a black curable composition that is useful for forming a light-shielding color filter for a solid-state image pickup device, which has high sensitivity and is capable of forming a high-precision pattern and with which a light-shielding color filter having light-shielding properties in a wide range of from a UV region to an infrared region and excellent adhesiveness to a support can be obtained.

The third aspect of the present invention also aims at providing a light-shielding color filter for a solid-state image pickup device which is formed using the black curable composition of the third aspect and which has a color pattern achieving light-shielding in a wide range of from a UV region to an infrared region, and a solid-state image pickup device having the light-shielding color filter, in which generation of noise is prevented and image quality is improved.

The following specific measures address the objects of the first aspect.
<1> A polymerizable composition including (A1) a titanium black dispersion containing titanium black and an alkali-soluble resin having at least one unsaturated double bond, (B1) a polymerizable compound, and (C1) an oxime photopolymerization initiator.
<3> The polymerizable composition of <1>, wherein the content of titanium black with respect to the total solid content of the polymerizable composition is from 40 % by mass to 80 % by mass.
<4> The polymerizable composition of any one of <1> or <3>, wherein the polymerizable composition is used to form a light-shielding color filter. (Use of the polymerizable composition of <1> or <3> in preparation of a light-shielding color filter)
<5> A light-shielding color filter including a colored region provided on a support, wherein the colored region is formed using the polymerizable composition of <4>.
<6> A solid-state image pickup device including the light-shielding color filter of <5>
   In the first aspect, the term "light-shielding color filter" refers to a light-shielding pattern obtained by exposing a polymerizable composition including at least a titanium black dispersion, a polymerizable compound, and a photopolymerization initiator to light and developing the composition. The color of the "light-shielding color filter" in the first aspect may be an achromatic color such as black or gray, or a color obtained by mixing an achromatic color, such as black or gray, with a chromatic color.
   Since the "light-shielding color filter" is obtained by exposing a polymerizable composition including at least a titanium black dispersion, a polymerizable compound, and a photopolymerization initiator to light and developing the composition, the "light-shielding color filter" may be also called "light-shielding film" or "light-shielding filter".
   The following specific measures address the objects of the second aspect.
<7> A black curable composition including (A2) titanium black, (B2) an alkali-soluble resin having a weight average molecular weight of from 2000 to less than 20,000, (C2) a solvent, (D2) an oxime photopolymerization initiator, and (E2) a compound having an ethylenic unsaturated double bond.
<8> The black curable composition of <7>, wherein the (B2) alkali-soluble resin having a weight average molecular weight of from 2000 to less than 20,000 has a ratio of weight average molecular weight to number average molecular weight (molecular weight distribution) of less than 3.0.
<9> The black curable composition of <7> or <8>, wherein the acid value of the (B2) alkali-soluble resin having a weight average molecular weight of from 2000 to less than 20,000 is from 50mgKOH/g to 200mgKOH/g.
<11> The black curable composition of any one of <7> to <9>, wherein the content of the oxime photopolymerization initiator with respect to the total solid content of the black curable composition is from 3% by mass to 20% by mass.
<12> A method of producing a light-shielding color filter for a solid-state image pickup device, the method including applying the black curable composition of any one of <7> to <11> to a support, exposing the applied black curable composition to light through a mask, and developing the composition to form a pattern.
<13> A light-shielding color filter for a solid-state image pickup device, having a pattern that is formed using the black curable composition of any one of <7> to <11>.
<14> A solid-state image pickup device including the light-shielding color filter of <13>.
   In the second aspect, the term "light-shielding color filter" refers to a light-shielding pattern obtained by exposing a photosensitive resin composition including at least a black colorant, a photopolymerizable compound, a resin, a photopolymerization initiator, and a solvent to light and developing the resin composition. The color of the "light-shielding color filter" in the second aspect may be an achromatic color such as black or gray, or a color obtained by mixing an achromatic color, such as black or gray, with a chromatic color.
   Since the "light-shielding color filter" is obtained by exposing a photosensitive resin composition including at least a black colorant, a photopolymerizable compound, a resin, a photopolymerization initiator, and a solvent to light and developing the resin composition, the "light-shielding color filter" may be also called "light-shielding film" or "light-shielding filter".
   The following specific measures address the objects of the third aspect.
<15> A black curable composition including (A3) titanium black, (B3) an alkali-soluble resin having a weight average molecular weight of from 20,000 to 100,000, (C3) a solvent, (D3) a photopolymerization initiator, and (E3) a compound having an ethylenic unsaturated double bond.
<16> The black curable composition of <15>, wherein the (B3) alkali-soluble resin has a ratio of weight average molecular weight to number average molecular weight of from 1.1 to 3.0.
<17> The black curable composition of <15> or <16>, wherein the acid value of the (B3) alkali-soluble resin is from 50mgKOH/g to 200mgKOH/g.
<18> The black curable composition of any one of <15> to <17>, wherein the content of monomer remaining in the (B3) alkali-soluble resin is 10% by mass or less.
<19> The black curable composition of any one of <15> to <18>, wherein the (D3) photopolymerization initiator is an oxime photopolymerization initiator represented by the following Formula (3). 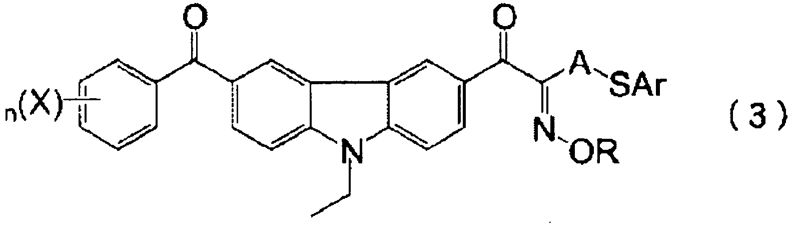
   In Formula (3), R and X each independently represent a monovalent substituent, A represents a divalent organic group, Ar represents an aryl group, and n represents an integer of from 1 to 5.
<20> A iight-shieiding color filter for a solid-state image pickup device, wherein the light-shielding color filter is formed using the black curable composition of any one of <15> to <19>.
<21> An antireflection film for a solid-state image pickup device, wherein the antireflection film is formed using the black curable composition of any one of <15> to <19>.
<22> A method of producing a light-shielding color filter for a solid-state image pickup device, the method including applying the black curable composition of any one of <15> to <19> to a support, exposing the applied black curable composition to light through a mask, and developing the composition to form a pattern.
<23> A solid-state image pickup device including the light-shielding color filter of <20>.

In the third aspect, the term "light-shielding color filter" refers to a light-shielding pattern obtained by exposing a black curable composition including at least (A3) titanium black, (B3) an alkali-soluble resin having a weight average molecular weight of from 20,000 to 100,000, (C3) a solvent, (D3) an oxime photopolymerization initiator, and (E3) a compound having an ethylenic unsaturated double bond to light and developing the composition. The color of the "light-shielding color filter" in the third aspect may be an achromatic color such as black or gray, or a color obtained by mixing an achromatic color, such as black or gray, with a chromatic color.

Since the "light-shielding color filter" is obtained by exposing a black curable composition including at least (A3) titanium black, (B3) an alkali-soluble resin having a weight average molecular weight of from 20,000 to 100,000, (C3) a solvent, (D3) an oxime photopolymerization initiator, and (E3) a compound having an ethylenic unsaturated double bond to light and developing the composition, the "light-shielding color filter" may be also called "light-shielding film" or "light-shielding filter".

According to the first aspect of the present invention, a polymerizable composition having high curing sensitivity and excellent storage stability, with which generation of residual matter in unexposed areas is suppressed, is provided.

According to the first aspect of the present invention, a polymerizable composition having high curing sensitivity, with which a high-precision light-shielding pattern can be formed while suppressing decrease in light-shielding properties in peripheral areas and generation of residual matter in unexposed areas, is also provided.

According to the first aspect of the present invention, a light-shielding color filter in which decrease in light-shielding properties at peripheral areas is suppressed, and a solid-state image pickup device having a light-shielding color filter in which decrease in light-shielding properties at peripheral areas is suppressed, are also provided.

According to the second aspect of the present invention, a black curable composition which cures with high sensitivity even at a low exposure amount, with which generation of residual matter in developed areas is reduced, and with which a light-shielding color filter for a solid-state image pickup device having an improved pattern shape can be formed, is provided.

According to the second aspect of the present invention, a light-shielding color filter for a solid-state image pickup device having excellent light-shielding properties in a wide wavelength range, a method of producing the same, and a solid-state image pickup device are also provided.

According to the third aspect of the present invention, a black curable composition which is useful for forming a light-shielding color filter for a solid-state image pickup device, which has high sensitivity and is capable of forming a high-precision pattern, and with which a light-shielding color filter having light-shielding properties in a wide range of from a UV region to an infrared region and excellent adhesiveness to a support can be formed, is provided.

By using the black curable composition of the third aspect of the present invention, a light-shielding color filter for a solid-state image pickup device which has a fine color pattern achieving light-shielding in a wide range of from a UV region to an infrared region, and a solid-state image pickup device having the light-shielding color filter, in which generation of noise is prevented and image quality is improved, can be provided.

### BRIEF DESCRIPTION OF THE DRAWING

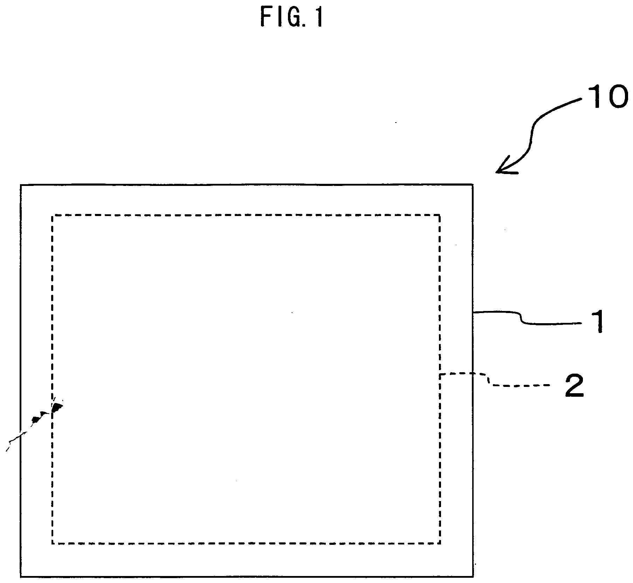

Fig. 1 is a schematic diagram showing a state in which a step is generated in a light-shielding color filter.

### DESCRIPTION OF THE PRESENT INVENTION

The present invention is described in the following. In the present specification, when a group (an atom group) is described without an indication of "substituted" or "unsubstituted", the description is intended to include both a group not having an additional substituent and a group having one or more additional substituents. For example, the scope of an expression, "alkyl group", includes not only an alkyl group not having a substituent (i.e., an unsubstituted alkyl group), but also an alkyl group having a substituent (i.e., a substituted alkyl group). Further, an acrylic group and a methacrylic group are collectively referred to as "(meth)acrylic group".

The polymerizable composition of a first embodiment of the present invention includes (A1) a titanium black dispersion containing (a1) an alkali-soluble resin having at least one unsaturated double bond and (a2) titanium black, (B1) a polymerizable compound, and (C1) a photopolymerization initiator. Respective components contained in the polymerizable composition are described below.

### Polymerizable Composition

### (A1) Titanium Black Dispersion

The (A1) titanium black dispersion in the first embodiment of the present invention is a composition including titanium black as a colorant and an alkali-soluble resin having at least one unsaturated double bond. In the titanium black dispersion, titanium black is dispersed in an appropriate liquid.

Incorporation of titanium black in the form of a preformed titanium black dispersion into the polymerizable composition results in improvement of the dispersibility and dispersion stability of the titanium black.

### Black Curable Composition

The black curable composition of the second embodiment of the invention includes (A2) titanium black, (B2) an alkali-soluble resin having a weight average molecular weight of from 2000 to less than 20,000, (C2) a solvent, (D2) a photopolymerization initiator, and (E2) a compound having an ethylenic unsaturated double bond.

The black curable composition of the second embodiment may optionally contain at least one of (F) a sensitizer or (G) a co-sensitizer, as long as effects of the invention are not impaired. The black curable composition of the second embodiment may contain other additives.

The black curable composition of the third embodiment of the invention includes (A3) titanium black, (B3) an alkali-soluble resin having a weight average molecular weight in the range of from 20,000 to 100,000, (C3) a solvent, (D3) a photopolymerization initiator, and (E3) a compound having an ethylenic unsaturated double bond.

### (a2) Titanium Black, (A2) Titanium Black, and (A3) Titanium Black

(a2) titanium black, (A2) titanium black, and (A3) titanium black are described first. The (a2) titanium black, (A2) titanium black or (A3) titanium black of the invention refers to a black particle containing a titanium atom. The following description of titanium black is common to the first to third embodiments, unless otherwise specified. The titanium black is preferably a lower titanium oxide or titanium oxynitride. The surfaces of the titanium black particles may be modified, as necessary, for the purpose of improving the dispersibility of the titanium black and suppressing aggregation of the titanium black particles. The modification may be coating of the titanium black particles with, for example, silicon oxide, titanium oxide, germanium oxide, aluminum oxide, magnesium oxide, or zirconium oxide. The modification of the titanium black particle surface may be performed using a water-repellent material such as those shown in JP-A No. 2007-302836.

A colorant may be added to the black curable composition of the second or third embodiment, for the purpose of regulating the light-shielding properties toward light having a desired wavelength. Examples of the colorant include a conventional pigment having a chromatic color such as red, blue, green, yellow, cyan, magenta, violet, or orange; a black pigment such as carbon black, iron oxide, manganese oxide, or graphite; and a dye.

The black curable composition of the second or third embodiment may contain a single black pigment only, or two or more black pigments in combination, for the purpose of regulating the dispersibility and coloring power of the titanium black. The black pigment or black pigments may be selected from a composite oxide of, for example, Cu, Fe, Mn, V, or Ni cobalt oxide, iron oxide, carbon black, or aniline black. In this case, it is preferred that the proportion of the mass of titanium black to the total mass of pigment contained in the black curable composition of the second or third embodiment is 50% by mass or more.

The content of the pigment used together with titanium black is preferably in the range of from 2 to 50 parts by mass, more preferably in the range of from 2 to 30 parts by mass, and most preferably in the range of from 2 to 10 parts by mass, with respect to 100 parts by mass of the mixture of the titanium black and the pigment used together the titanium black. When the black pigment satisfies the above range, the light-shielding power becomes high, which is preferable.

The content of titanium black in the black pigment is preferably in the range of 30 to 100 parts by mass, more preferably in the range of 50 to 100 parts by mass, and still more preferably in the range of 75 to 100 parts by mass, with respect to 100 parts by mass of the black pigment. When the amount of titanium black is within the range, light of a wide wavelength range from a visible region to an infrared region can be shielded.

In the first to third embodiments, the titanium black may be a commercially available product. Examples of commercially available titanium black products include TITANIUM BLACK 10S, 12S, 13R, 13M, 13M-C, 13R, and 13R-N (trade name, manufactured by Mitsubishi Material Corp.,) and TILACK D (trade name, manufactured by Ako Chemical Co., Ltd.).

A produced titanium black may be used as the titanium black. Examples of the method of producing titanium black include, but are not limited to, a method in which a mixture of titanium dioxide and metallic titanium is heated in a reducing atmosphere so as to cause reduction reaction (JP-A No. 49-5432), a method in which ultrafine titanium dioxide particles obtained by high-temperature hydrolysis of titanium tetrachloride is reduced in a reducing atmosphere containing hydrogen (JP-A No. 57-205322), a method in which titanium dioxide or titanium hydroxide is reduced at a high temperature in the presence of ammonia (JP-A No. 60-65069, and JP-A No. 61-201610), and a method in which a vanadium compound is attached to titanium dioxide or titanium hydroxide, and is reduced at a high temperature in the presence of ammonia (JP-A No. 61-201610).

The amount of the titanium black dispersion to be incorporated into the polymerizable composition of the first embodiment may be regulated so that the content of titanium black in the polymerizable composition is set within the range of from 30% by mass to 94% by mass in terms of solid content. The content of titanium black in the polymerizable composition is more preferably from 40% by mass to 92% by mass, and still more preferably from 40% by mass to 80% by mass.

When the content of titanium black is set in the range, the curability of the polymerizable composition becomes excellent and a uniform film can be formed. Furthermore, since titanium black is contained at a high concentration, sufficient light-shielding properties is obtained, and the polymerizable composition containing the titanium black dispersion can be suitably used for forming a light-shielding color filter.

The content of the (A2) or (A3) titanium black is preferably from 30% by mass to 90% by mass, and more preferably from 40% by mass to 70% by mass, with respect to the total solid content of the black curable composition of the second or third embodiment from the viewpoint of light-shielding properties.

In the first embodiment, the average primary particle diameter of the titanium black particles is not particularly restricted. The average primary particle diameter is preferably from 3 nm to 2000 nm, more preferably from 10 nm to 500 nm, and still more preferably from 10 nm to 100 nm, from the viewpoint of dispersibility and coloring power.

In the second embodiment, the average primary particle diameter of the titanium black particles is not particularly restricted. The average primary particle diameter is preferably from 3 nm to 2000 nm, and more preferably from 10 nm to 500 nm, from the viewpoint of the dispersibility and coloring power of the titanium black.

In the third embodiment, the average primary particle diameter of the titanium black particles is not particularly restricted. The average primary particle diameter is preferably from 3 nm to 300 nm, and more preferably from 10 nm to 150 nm, from the viewpoint of dispersibility and light-shielding properties.

In the first, second, and third embodiments, the specific surface area of the titanium black is not particularly restricted. However, the specific surface area of the titanium black particles measured by the BET method after the surfaces of the titanium black particles are treated with a water-repellent agent is usually from 5 to 150 m²/g and preferably from 20 to 100 m²/g.

In the second and third embodiments, it is preferable that a titanium black dispersion containing titanium black is prepared in advance of formation of a black curable composition. The titanium black dispersion composition can be obtained by, for example, dispersing the titanium black particles and a black pigment such as carbon black or the above-described pigment to be used together with the titanium black particles, in a solvent in the presence of a dispersant.

As a dispersant, any of the dispersants described below can be preferably used. The dispersant may be added during the processing of the pigment so as to form a dispersant-coated pigment. Alternatively, the dispersant may be added when a pigment such as titanium black is dispersed by using a dispersing device such as a beads mill.

In the second and third embodiments, a preparation mode of the dispersion composition is not particularly restricted. For example, the dispersion composition may be obtained by subjecting a pigment, a dispersant and a solvent to a finely dispersing treatment with beads made of, for example, glass or zirconia and having a particle diameter of from 0.01 to 1 mm, using, for example, a vertical or horizontal sand grinder, a pin mill, a slit mill, or a ultrasonic disperser.

Before the dispersing with beads is performed, a kneading-dispersing may be performed while applying a strong shearing force using a two-roll mille, a three-roll mill, a ball mill, a tron mill, a disper mill, a kneader, a cokneader, a homogenizer, a blender, or a uniaxial or biaxial extruder.

Details regarding the kneading and dispersing are described in, for example, "Paint Flow and Pigment Dispersion", by T. C. Patton (published by John Wiley and Sons Co. 1964).

In the titanium black dispersion contained in the polymerizable composition of the first embodiment, a dispersant (hereinafter, in some cases, referred to as "pigment dispersant") is preferably contained for the purpose of regulating the dispersibility of the titanium black. Furthermore, a pigment dispersant is preferably added to the black curable composition of the second or third embodiment from the viewpoint of improving the dispersibility of the titanium black. Still furthermore, in what follows, the pigment dispersant is detailed. The following description of the pigment dispersant is common to all of the first to third embodiments, unless otherwise specified.

### Pigment Dispersant

Examples of pigment dispersants usable in the titanium black dispersion of the first embodiment or the black curable composition of the second or third embodiment include polymer dispersants [for example, polyamidoamines and salts thereof, polycarboxylic acids and salts thereof, high-molecular-weight unsaturated acid esters, modified polyurethanes, modified polyesters, modified poly(meth)acrylates, (meth)acrylic copolymers, and formalin condensates of naphthalene sulfonic acid], polyoxyethylene alkyl phosphoric acid esters, polyoxyethylene alkylamines, alkanolamines, and pigment derivatives.

The polymer dispersants can be further categorized into straight chain polymers, terminal modified polymers, graft polymers, and block polymers, based on their structures.

A polymer dispersant is supposed to be adsorbed on the surface of the pigment and the below-mentioned optional pigment, and works to prevent the pigment from re-flocculating. Accordingly, preferable structures of the polymer dispersant include terminal modified polymers, graft polymers, and block polymers, each of which has an anchoring site to the pigment surface.

On the other hand, the pigment derivative has an effect of promoting adsorption of the polymer dispersant by modifying the pigment surface.

Examples of pigment dispersants usable in the first, second or third embodiment include DISPERBYK 101 (polyamidoamine phosphate), 107 (carboxylic acid ester), 110 (acid group-containing copolymer), 130 (polyamide), 161, 162, 163, 164, 165, 166, and 170 (high-molecular-weight copolymer), and BYK-P104 and P105 (high-molecular-weight unsaturated polycarboxylic acid) (trade name, all manufactured by BYK Chemie); EFKA 4047, 4050, 4010, and 4165 (polyurethane dispersants), EFKA 4330, 4340 (block copolymer), 4400, 4402 (modified polyacrylate), 5010 (polyester amide), 5765 (high-molecular-weight polycarboxylic acid salgt), 6220 (fatty acid polyester), 6745 (phthalocyanine derivative), and 6750 (azo pigment derivative) (trade name, all manufactured by EFKA); AJISPER PB821 and PB822 (trade name, manufactured by Ajinomoto Fine-Techno Co., Inc.); FLOWLEN TG-710 (urethane oligomer) and POLYFLOW Nos. 50E and 300 (acrylic copolymer) (trade name, all manufactured by Kyoeisha Chemical Co., Ltd.); DISPARLON KS-860, 873SN, 874, #2150 (aliphatic polycarboxylic acid), #7004 (polyether ester), DA-703-50, DA-705, and DA-725 (trade name, all manufactured by Kusumoto Chemicals, Ltd.); DEMOL RN, N (naphthalenesulfonic acid formalin polycondensate), MS, C, SN-B (aromatic sulfonic acid formalin polycondensate), HOMOGENOL L- 18 (high-molecular-weight polycarboxylic acid), EMULGEN 920, 930, 935, and 985 (polyoxyethylene nonyl phenyl ether), and ACETAMIN 86 (stearylamine acetate) (trade name, all manufactured by Kao Corporation); SOLSPERSE 5000 (phthalocyanine derivative), 22000 (azo pigment derivative), 13240 (polyester amine), 3000, 17000, 27000 (polymer having a functional part at a terminal), 24000, 28000, 32000, and 38500 (graft polymers) (trade name, all manufactured by The Lubrizol Corporation); and NIKKOL T106 (polyoxyethylene sorbitan monooleate) and MYS-IEX (polyoxyethylene monostearate) (trade name, all manufactured by Nikko Chemicals Co., Ltd).

The dispersant may be used singly or in combination of two or more thereof. In the first embodiment, it is preferable to use a combination of a pigment derivative and a polymer dispersant from the viewpoint of suppressing a change in viscosity of the dispersion liquid over time. Use of a combination of a pigment derivative and a polymer dispersant is preferable also in the second or third embodiment.

The black curable composition of the second embodiment preferably contains the (A2) titanium black in the form of a titanium black dispersion liquid obtained using the polymer dispersant. When preparing such a titanium black dispersion liquid, the amount of the polymer dispersant to be added to 100 parts by mass of the titanium black is preferably from 5 to 200 parts by mass, and more preferably from 10 to 100 parts by mass. When the amount of the polymer dispersant is 5 parts by mass or more, the surface state of the titanium black may be sufficiently modified. When the amount of the polymer dispersant is 200 parts by mass or less, intrincically required characteristics of the titanium black, such as light-shielding properties and coloring power, are not impaired.

The amount (in terms of solid content) of the dispersant to be added in the third embodiment is preferably from 3 to 100% by mass, more preferably from 5 to 100% by mass, and particularly preferably from 5 to 50% by mass, with respect to the total amount of the pigments including titanium black. When the amount of the dispersant is within the range, a sufficient pigment dispersing effect can be obtained. However, an optimum addition amount of the dispersant may be appropriately adjusted depending on a combination of the size of the titanium black, the type and size of the optional pigment used together, and the type of the solvent.

When the amount of the dispersant is less than 5% by mass, there is a possibility that the surface state of the titanium black may not be modified sufficiently. When the amount of the dispersant exceeds 100% by mass, the amount of the polymer dispersed and blended together with the titanium black is increased, whereby intrincically required characteristics of the titanium black, such as light-shielding properties and coloring power, may be impaired.

Examples of solvent species usable in the dispersion composition of the second or third embodiments include the solvents mentioned below as solvents usable in the black curable composition. The amount of the solvent used in the dispersion composition may be appropriately regulated in accordance with the dispersing method.

The (A1) titanium black dispersion of the first embodiment may contain one black pigment, or two or more black pigments, which may be selected from composite oxides such as a composite oxide of Cu, Fe, Mn, V or Ni, cobalt oxide, iron oxide, carbon black, aniline black, manganese oxide, or graphite, for the purpose of regulating the dispersibility and coloring power. In this case, the content of titanium black in the total pigment is preferably 50% by mass or more, more preferably 55% by mass or more, and still more preferably 60% by mass or more.

Furthermore, a known colorant may be added to the (A1) titanium black dispersion of the first embodiment for the purpose of regulating the shielding property of light having a desired wavelength, and examples of the coloraint include a conventional pigment such as a red, blue, green, yellow, cyan, magenta, violet or orange pigment, and a dye.

In the first embodiment, the content of other optional pigment used together with titanium black is preferably in the range of from 2 parts by mass to 50 parts by mass, more preferably in the range of from 2 parts by mass to 30 parts by mass, and still more preferably in the range of from 2 parts by mass to 10 parts by mass, with respect to 100 parts by mass of the total sum of the amount of titanium black and the amount of the optional pigment used together.

In the preparation of the titanium black dispersion according to the first embodiment, the amount of the polymer component contained in the titanium black dispersion is preferably in the range of from 5 parts by mass to 200 parts by mass, and more preferably in the range of from 10 parts by mass to 100 parts by mass, with respect to 100 parts by mass of titanium black.

When the amount of the polymer component is 5 parts by mass or more, a surface state of the black colorant may be maintained excellent. When the amount of the polymer component is 200 parts by mass or less, intrincically required characteristics of the black colorant, such as light-shielding properties and coloring power, may be improved.

Specifically, when a polymer dispersant is used, the amount of the polymer dispersant to be used is preferably in the range of from 5 parts by mass to 100 parts by mass, and more preferably in the range of from 10 parts by mass to 80 parts by mass, with respect to 100 parts by mass of pigment (total pigment including titanium black).

When a pigment derivative is used, the amount of the pigment derivative to be used is preferably in the range of from 1 parts by mass to 30 parts by mass, more preferably in the range of from 3 parts by mass to 20 parts by mass, and still more preferably in the range of from 5 parts by mass to 15 parts by mass, with respect to 100 parts by mass of pigment.

### - (a1) Alkali-soluble Resin Having At Least One Unsaturated Double Bond -

The titanium black dispersion in the polymerizable composition of the first embodiment includes, in addition to the titanium black, an alkali-soluble resin having at least one unsaturated double bond (hereinafter sometimes referred to as "alkali-soluble resin (T)"). In the titanium black dispersion, the alkali-soluble resin works as a dispersing resin for titanium black. Since the titanium black dispersion of the polymerizable composition in the first embodiment contains, in addition to titanium black, an alkali-soluble resin (T) that works as a dispersing resin for titanium black, the polymer dispersant per se, which is indispensable for dispersing titanium black, has both of alkali-solubility and curability; as the result, the polymerizable composition is improved particularly in both of the curability of an exposed portion and the alkali-developability of an unexposed portion.

The alkali-soluble resin (T) used in the first embodiment has, in its structure, an acid group that imparts alkali-solubility to the resin and at least one unsaturated double bond, thereby improving various properties such as removability of a non-image portion. A preferable specific example of a structure containing an unsaturated double bond is a structure having, in a side chain or side chains thereof, at least one type of group selected from groups represented by the Partial Structures (a) to (c) shown below. The resin, which is soluble in an alkaline aqueous solution and used as a binder resin of a negative image recording material, may have, in a side chain or side chains thereof, at least one type of group selected from groups represented by Partial Structures (a) to (c). The resin may have, in a side chain or side chains thereof, plural groups selected from groups represented by Partial Structures (a) to (c). For example, the resin may have, in a side chain or side chains thereof, a group represented by Partial Structure (a), a group represented by Partial Structure (b), and a group represented by Partial Structure (c) simultaneously.

In what follows, side chains represented by Partial Structures (a) to (c) are detailed.

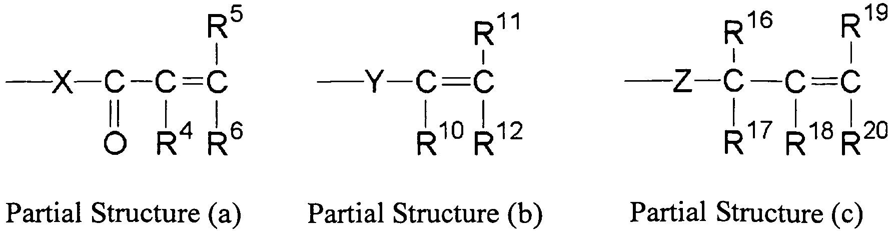

In Partial Structures (a) to (c), R⁴ to R⁶, R¹⁰ to R¹², and R¹⁶ to R²⁰ each independently represent a monovalent substituent, X and Z each independently represent an oxygen atom, a sulfur atom, or -N(R²²)-, and R²² represents a hydrogen atom or a monovalent organic group. Y represents an oxygen atom, a sulfur atom, a phenylene group that may have a substituent, or -N(R²³)-, and R²³ represents a hydrogen atom or a monovalent organic group.

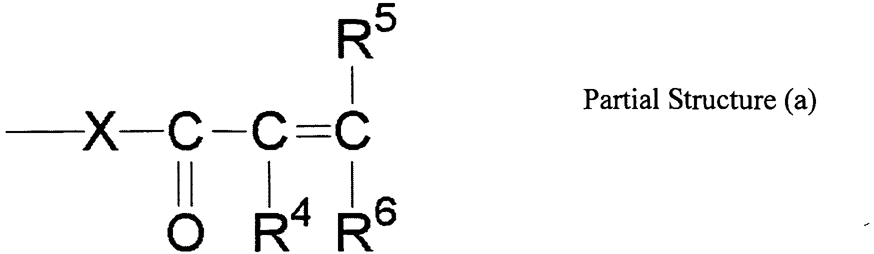

In Partial Structure (a), R⁴ to R⁶ each independently represent a monovalent substituent. R⁴ is preferably a hydrogen atom or an alkyl group that may have a substituent. In particular, a hydrogen atom and a methyl group are preferred in consideration of their high radical reactivity. R⁵ and R⁶ may each independently represent a hydrogen atom, a halogen atom, an amino group, a carboxyl group, an alkoxycarbonyl group, a sulfo group, a nitro group, a cyano group, an alkyl group that may have a substituent, an aryl group that may have a substituent, an alkoxy group that may have a substituent, an aryloxy group that may have a substituent, an alkylamino group that may have a substituent, an arylamino group that may have a substituent, an alkylsulfonyl group that may have a substituent, or an arylsulfonyl group that may have a substituent. In particular, a hydrogen atom, a carboxyl group, an alkoxycarbonyl group, an alkyl group that may have a substituent, and an aryl group that may have a substituent are preferred, in consideration of their high radical reactivity.

X represents an oxygen atom, a sulfur atom, or -N(R²²)-, and R²² represents a hydrogen atom or a monovalent organic group. R²² may represent, for example, an alkyl group that may have a substituent. In particular, a hydrogen atom, a methyl group, an ethyl group and an isopropyl group are preferred in consideration of their high radical reactivity.

Examples of introducible substituents include an alkyl group, an alkenyl group, an alkynyl group, an aryl group, an alkoxy group, an aryloxy group, a halogen atom, an amino group, an alkylamino group, an arylamino group, a carboxyl group, an alkoxycarbonyl group, a sulfo group, a nitro group, a cyano group, an amide group, an alkylsulfonyl group, and an arylsulfonyl group.

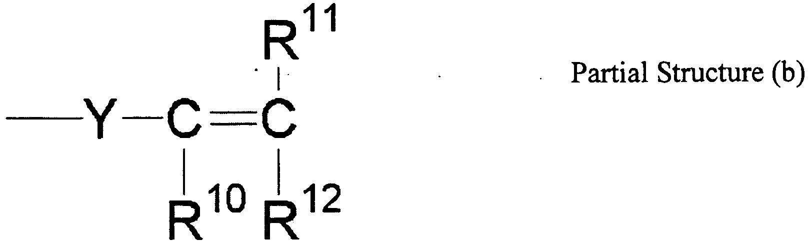

In Partial Structure (b), R¹⁰ preferably represents a hydrogen atom or an alkyl group that may have a substituent. In particular, a hydrogen atom and a methyl group are preferred in consideration of their high radical reactivity. R¹¹ and R¹² may each independently represent a hydrogen atom, a halogen atom, an amino group, a dialkylamino group, a carboxyl group, an alkoxycarbonyl group, a sulfo group, a nitro group, a cyano group, an alkyl group that may have a substituent, an aryl group that may have a substituent, an alkoxy group that may have a substituent, an aryloxy group that may have a substituent, an alkylamino group that may have a substituent, an arylamino group that may have a substituent, an alkylsulfonyl group that may have a substituent, or an arylsulfonyl group that may have a substituent. In particular, a hydrogen atom, a carboxyl group, an alkoxycarbonyl group, an alkyl group that may have a substituent, and an aryl group that may have a substituent are preferred, in consideration of their high radical reactivity.

Here, examples of introducible substituents include the groups mentioned as examples of introducible groups in the description of Partial Structure (a). Y represents an oxygen atom, a sulfur atom, a phenylene group that may have a substituent, or -N(R²³)-. R²³ represents a hydrogen atom or a monovalent organic group. R²³ may represent, for example, an alkyl group that may have a substituent. In particular, a hydrogen atom, a methyl group, an ethyl group, and an isopropyl group are preferred from the viewpoint of their high radical reactivity.

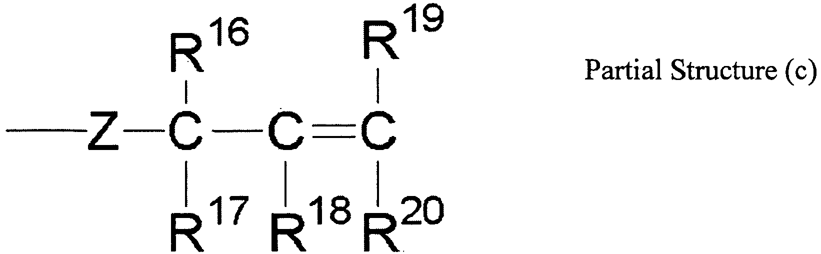

In Partial Structure (c), R¹⁶ to R²⁰ each independently represent a monovalent substituent. Preferable examples of R¹⁶ to R²⁰ include a hydrogen atom, a halogen atom, an amino group, a dialkylamino group, a carboxyl group, an alkoxycarbonyl group, a sulfo group, a nitro group, a cyano group, an alkyl group that may have a substituent, an aryl group that may have a substituent, an alkoxy group that may have a substituent, an aryloxy group that may have a substituent, an alkylamino group that may have a substituent, an arylamino group that may have a substituent, an alkylsulfonyl group that may have a substituent, and an arylsulfonyl group that may have a substituent. In particular, a hydrogen atom, a carboxyl group, an alkoxycarbonyl group, an alkyl group that may have a substituent, and an aryl group that may have a substituent are preferred.

Here, examples of introducible substituents include the groups mentioned as examples of introducible substituents in the description of Partial Structure (a). Furthermore, Z represents an oxygen atom, a sulfur atom, or -N(R²²)-, in which R²² has the same definition as that of R²² in Partial Structure (a), and preferable examples thereof are also the same.

Furthermore, the alkali-soluble resin (T) used in a titanium black dispersion contained in the polymerizable composition of the first embodiment has, in its structure, an acid group for improving various properties of the resin, such as alkali solubility of the resin itself which indicates removability of a non-image portion. The alkali-soluble resin (T) preferably contains a radical-polymerizable compound containing an acid group as a copolymerization component.

Examples of the acid group include a carboxyl group, a sulfonic acid group, a phosphoric acid group, and a phenolic hydroxyl group. In particular, a carboxyl group is particularly preferable. One type of, or two or more types of, these acid groups may be used. The content of the copolymerization component having an acid group is preferably from 5% by mole to 50% by mole, and more preferably from 10% by mole to 40% by mole, from the viewpoint of suppressing decrease in image strength caused by development with an alkaline water.

In addition to a copolymerization component (structural unit) having the specific functional group described above and a structural unit having an acid group (an alkali-soluble group), the alkali-soluble resin (T) used in the titanium black dispersion contained in the polymerizable composition of the first embodiment may further include, as copolymerization components, other structural units having various functions, for example, a structural unit having a functional group capable of interacting with titanium black or a functional group having affinity for a dispersant used in the dispersion, as long as the effects of the first embodiment is not impaired. Such other structural units may be incorporated in order to improve various properties such as image strength.

Examples of copolymerization components that are copolymerizable with the alkali-soluble resin (T) of the first embodiment include a radical copolymerizable compound selected from, for example, an acrylic acid ester, a methacrylic acid ester, a styrene, an acrylonitrile, and a methacrylonitrile.

Example thereof include: an acrylic acid ester such as an alkyl acrylate (in which the number of carbon atoms of the alkyl group is preferably from 1 to 20) (specifically, for example, benzyl acrylate, 4-biphenyl acrylate, butyl acrylate, sec-butyl acrylate, t-butyl acrylate, 4-t-butylphenyl acrylate, 4-chlorophenyl acrylate, pentachlorophenyl acrylate, 4-cyanobenzyl acrylate, cyanomethyl acrylate, cyclohexyl acrylate, 2-ethoxyethyl acrylate, ethyl acrylate, 2-ethylhexyl acrylate, heptyl acrylate, hexyl acrylate, isobornyl acrylate, isopropyl acrylate, methyl acrylate, 3,5-dimethyladamantyl acrylate, 2-naphthyl acrylate, neopentyl acrylate, octyl acrylate, phenetyl acrylate, phenyl acrylate, propyl acrylate, tolyl acrylate, amyl acrylate, tetrahydrofurfuryl acrylate, 2-hydroxyethyl acrylate, 3-hydroxypropyl acrylate, 2-hydroxypropyl acrylate, 4-hydroxybutyl acrylate, 5-hydroxypentyl acrylate, allyl acrylate, 2-allyloxyethyl acrylate, or propargyl acrylate);
a methacrylic acid ester such as an alkyl methacrylate (in which the alkyl group preferably contains 1 to 20 carbon atoms) (for example, benzyl methacrylate, 4-biphenyl methacrylate, butyl methacrylate, sec-butyl methacrylate, t-butyl methacrylate, 4-t-butylphenyl methacrylate, 4-chlorophenyl methacrylate, pentachlorophenyl methacrylate, 4-cyanophenyl methacrylate, cyanomethyl methacrylate, cyclohexyl methacrylate, 2-ethoxyethyl methacrylate, ethyl methacrylate, 2-ethylhexyl methacrylate, heptyl methacrylate, hexyl methacrylate, isobornyl methacrylate, isopropyl methacrylate, methyl methacrylate, 3,5-dimethyladamantyl methacrylate, 2-naphthyl methacrylate, neopentyl methacrylate, octyl methacrylate, phenetyl methacrylate, phenyl methacrylate, propyl methacrylate, tolyl methacrylate, amyl methacrylate, tetrahydrofurfuryl methacrylate, 2-hydroxyethyl methacrylate, 3-hydroxypropyl methacrylate, 2-hydroxypropyl methacrylate, 4-hydroxybutyl methacrylate, 5-hydroxypentyl methacrylate, allyl methacrylate, 2-allyloxyethyl methacrylate, or propargyl methacrylate);
a styrene such as styrene or an alkylstyrene (for example, methylstyrene, dimethylstyrene, trimethylstyrene, ethylstyrene, diethylstyrene, isopropylstyrene, butylstyrene, hexylstyrene, cyclohexylstyrene, decylstyrene, benzylstyrene, chloromethylstyrene, trifluoromethylstyrene, ethoxymethylstyrene, or acetoxymethylstyrene), an alkoxystyrene (for example, methoxystyrene, 4-methoxy-3-methylstyrene, or dimethoxystyrene), a halogenated styrene (for example, chlorostyrene, dichlorostyrene, trichlorostyrene, tetrachlorostyrene, pentachlorostyrene, bromostyrene, dibromostyrene, iodostyrene, fluorostyrene, trifluorostyrene, 2-bromo-4-trifluoromethyl styrene, or 4-fluoro-3-trifluoromethyl styrene); acrylonitrile; and methacrylonitrile.

In particular radical-polymerizable compounds, a methacrylic acid ester, acrylamide, methacrylamide, and a styrene are preferable. More preferable examples include benzyl methacrylate, t-butyl methacrylate, 4-t-butylphenyl methacrylate, pentachlorophenyl methacrylate, 4-cyanophenyl methacrylate, cyclohexyl methacrylate, ethyl methacrylate, 2-ethylhexyl methacrylate, isobornyl methacrylate, isopropyl methacrylate, methyl methacrylate, 3,5-dimethyladamantyl methacrylate, 2-naphthyl methacrylate, neopentyl methacrylate, phenyl methacrylate, tetrahydrofurfuryl methacrylate, 2-hydroxyethyl methacrylate, 3-hydroxypropyl methacrylate, 2-hydroxypropyl methacrylate, allyl methacrylate,
acrylamide, N-methylacrylamide, N-isopropylacrylamide, morpholinylacrylamide, piperidylacrylamide, N-t-butylacrylamide, N-cyclohexylacrylamide, N-phenylacrylamide, N-naphthylacrylamide, N-hydroxymethylacrylamide, N-hydroxyethylacrylamide, N-allylacrylamide, 4-hydroxyphenylacrylamide, 2-hydroxyphenylacrylamide, N,N-dimethylacrylamide, N,N-diisopropylacrylamide, N,N-di-t-butylacrylamide, N,N-dicyclohexylacrylamide, N,N-diphenylacrylamide, N,N-dihydroxyethylacrylamide, N,N-diallylacrylamide,
methacrylamide, N-methylmethacrylamide, N-isopropylmethacrylamide, morpholinylmethacrylamide, piperidylmethacrylamide, N-t-butylmethacrylamide, N-cyclohexylmethacrylamide, N-phenylmethacrylamide, N-naphthylmethacrylamide, N-hydroxymethylmethacrylamide, N-hydroxyethylmethacrylamide, N-allylmethacrylamide, 4-hydroxyphenylmethacrylamide, 2-hydroxyphenylmethacrylamide, N,N-dimethylmethacrylamide, N,N-diisopropylmethacrylamide, N,N-di-t-butylmethacrylamide, N,N-dicyclohexylmethacrylamide, N,N-diphenylmethacrylamide, N, N-dihydroxyethylmethacrylamide, N,N-diallylmethacrylamide,
styrene, methylstyrene, dimethylstyrene, trimethylstyrene, isopropylstyrene, butylstyrene, cyclohexylstyrene, chloromethylstyrene, trifluoromethylstyrene, ethoxymethylstyrene, acetoxymethylstyrene, methoxystyrene, 4-methoxy-3-methylstyrene, chlorostyrene, dichlorostyrene, trichlorostyrene, tetrachlorostyrene, pentachlorostyrene, bromostyrene, dibromostyrene, iodostyrene, fluorostyrene, trifluorostyrene, 2-bromo-4-trifluoromethylstyrene and 4-fluoro-3-trifluoromethylstyrene.

One of, or two or more of, these copolymerization components may be used. The content of these copolymerization components in the alkali-soluble resin (T) is preferably from 0% by mole to 90% by mole, and more preferably from 0% by mole to 60% by mole. When the content is within the range, satisfactory pattern can be performed.

Examples of the solvent used for synthesis of such a polymer compound include ethylene dichloride, cyclohexanone, methyl ethyl ketone, acetone, methanol, ethanol, propanol, butanol, ethyleneglycol monomethyl ether, ethyleneglycol monoethyl ether, 2-methoxyethyl acetate, 1-methoxy-2-propanol, 1-methoxy-2-propyl acetate, N,N-dimethyl formamide, N,N-dimethyl acetamide, dimethyl sulfoxide, toluene, ethyl acetate, methyl lactate and ethyl lactate. The solvent may be used singly or in combination of two or more thereof.

Specific examples of the alkali-soluble resin (T) include exemplary compounds 1 to 31 shown below.

| Exemplary Compound | Composition (% by mol) | Mw | Acid Value (mgKOH/g) |
|---|---|---|---|
| 1 | 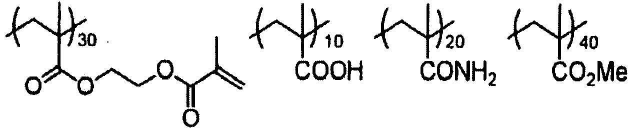 | 50000 | 64 |
| 2 | 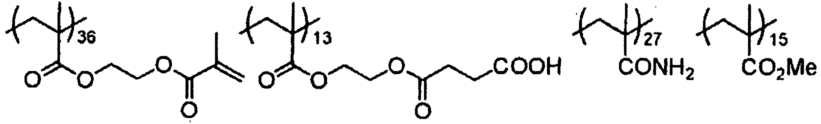 | 40000 | 46 |
| 3 | 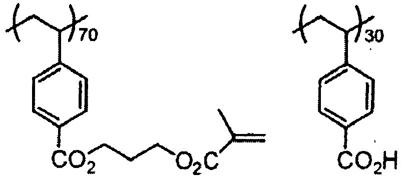 | 30000 | 67 |
| 4 | 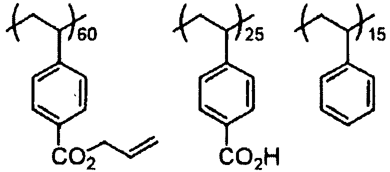 | 40000 | 62 |
| 5 | 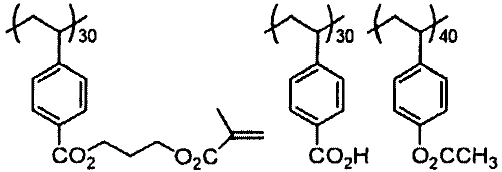 | 25000 | 79 |
| 6 | 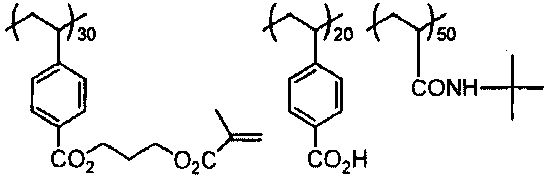 | 30000 | 67 |
| 7 | 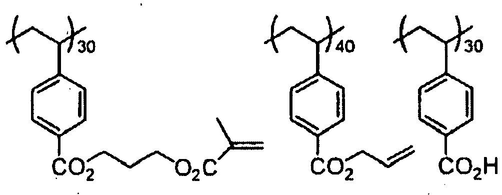 | 30000 | 62 |
| 8 | 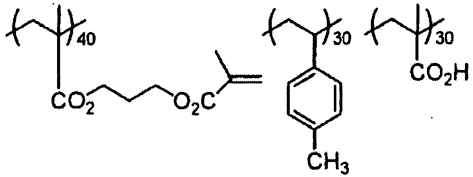 | 25000 | 73 |
| 9 | 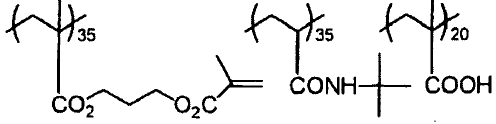 | 30000 | 67 |
| 10 | 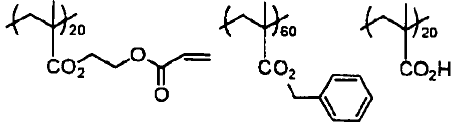 | 30000 | 70 |
| 11 | 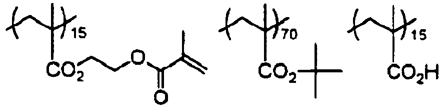 | 40000 | 59 |
| 12 | 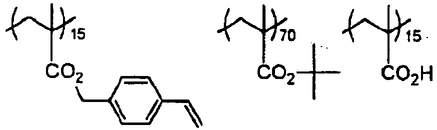 | 30000 | 59 |
| 13 | 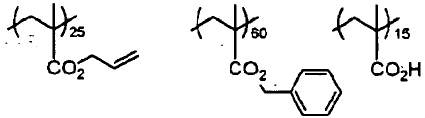 | 25000 | 56 |
| 14 | 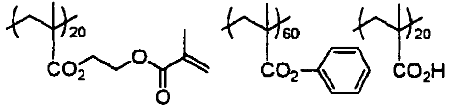 | 30000 | 74 |
| 15 | 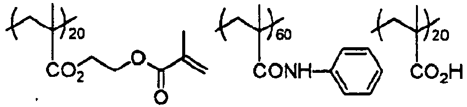 | 40000 | 73 |
| 16 | 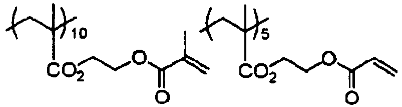 | 25000 | 51 |
| | 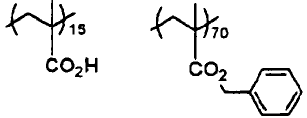 | | |
| 17 | 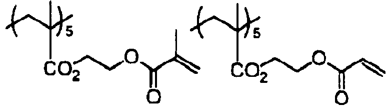 | 30000 | 77 |
| | 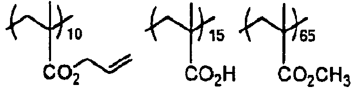 | | |
| 18 | 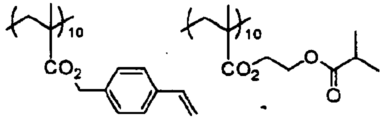 | 30000 | 69 |
| | 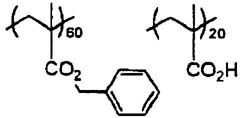 | | |
| 19 | 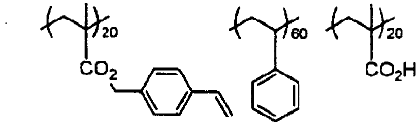 | 30000 | 93 |
| 20 | 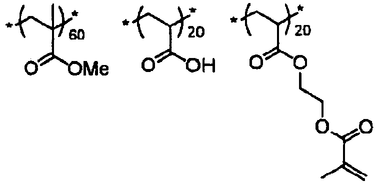 | 30000 | 103 |
| 21 | 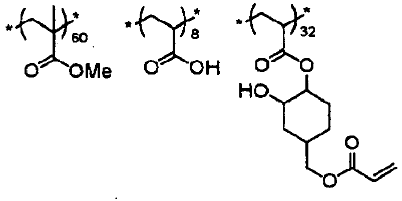 | 25000 | 30 |
| 22 | 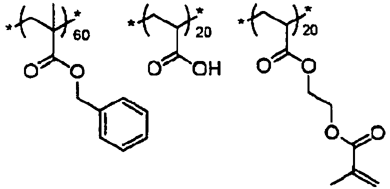 | 30000 | 72 |
| 23 | 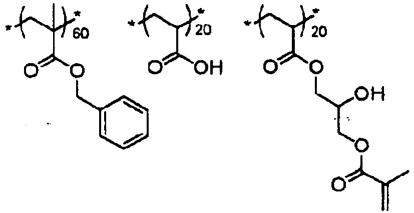 | 30000 | 70 |
| 24 | 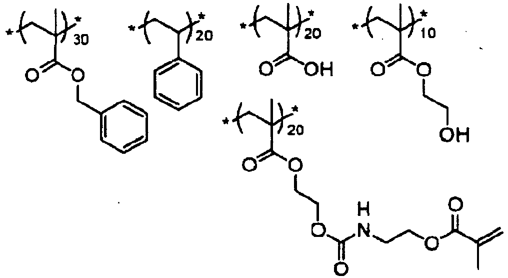 | 20000 | 70 |
| 25 | 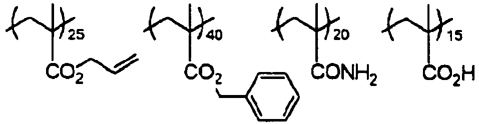 | 30000 | 64 |
| 26 | 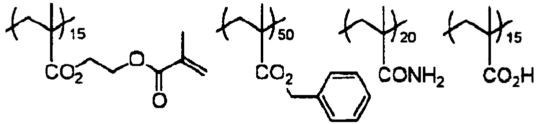 | 30000 | 57 |
| 27 | 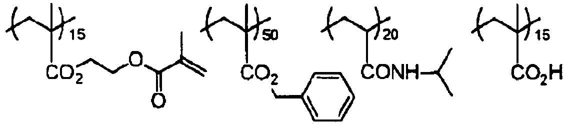 | 35000 | 54 |
| 28 | 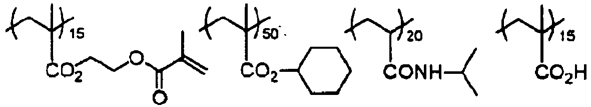 | 30000 | 55 |
| 29 | 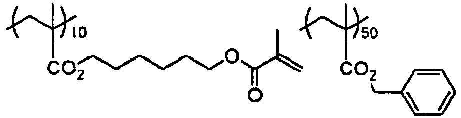 | 30000 | 77 |
| | 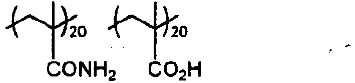 | | |
| 30 | 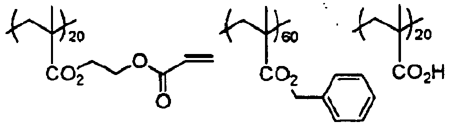 | 25000 | 70 |
| 31 | 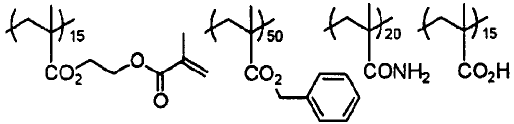 | 30000 | 57 |

The alkali-soluble resin (T) is preferably a resin having a structural unit represented by Formula (4) shown below and at least one structural unit selected from the group consisting of structural units represented by Formulas (1) to (3) shown below, from the viewpoint of polymerizability and alkali developability.

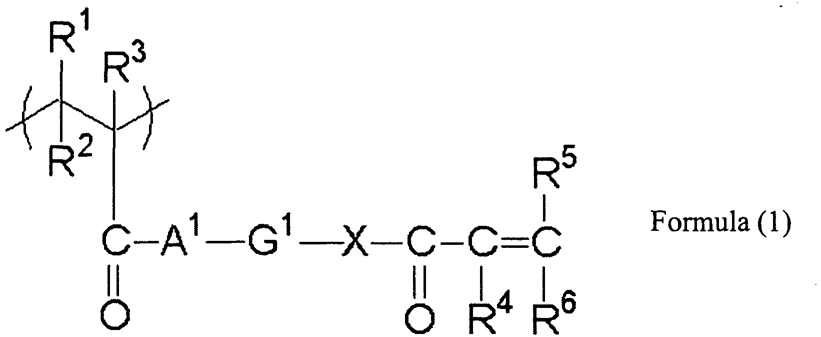

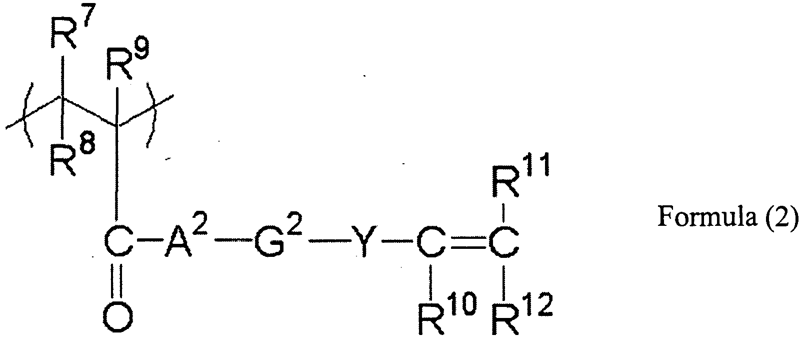

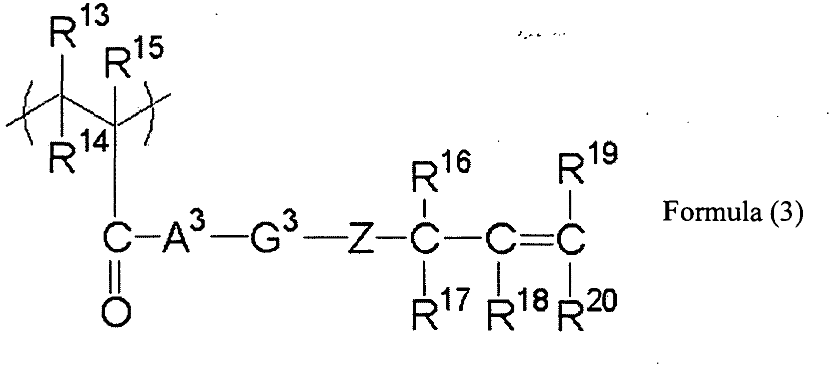

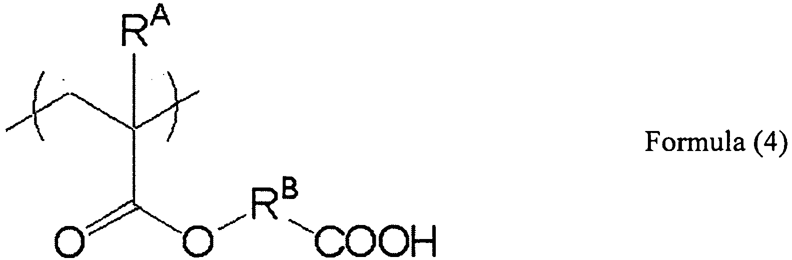

In Formulas (1) to (3), A¹, A², and A³ each independently represent an oxygen atom, a sulfur atom, or -N(R²¹)-, and R²¹ represents an alkyl group that may have a substituent. G¹, G² and G³ each independently represent a divalent organic group. X and Z each independently represent an oxygen atom, a sulfur atom, or -N(R²²)-, and R²² represents an alkyl group that may have a substituent. Y represents an oxygen atom, a sulfur atom, a phenylene group that may have a substituent, or -N(R²³)-, and R²³ represents an alkyl group that may have a substituent. R¹ to R²⁰ each independently represent a monovalent substituent.

In Formula (1), R¹ to R³ each independently represent a monovalent substituent, for example, a hydrogen atom or an alkyl group that may have a substituent. In particular, R¹ and R² each preferably represent a hydrogen atom, and R³ preferably represents a hydrogen atom or a methyl group.

In Formula (1), R⁴ to R⁶ each independently represent a monovalent substituent. R⁴ may represent, for example, a hydrogen atom or na alkyl group that may have a substituent. In particular, a hydrogen atom, a methyl group, or an ethyl group is preferred. R⁵ and R⁶ in Formula (1) each independently represent a hydrogen atom, a halogen atom, an alkoxycarbonyl group, a sulfo group, a nitro group, a cyano group, an alkyl group that may have a substituent, an aryl group that may have a substituent, an alkoxy group that may have a substituent, an aryloxy group that may have a substituent, an alkylsulfonyl group that may have a substituent, or an arylsulfonyl group that may have a substituent. In particular, a hydrogen atom, an alkoxycarbonyl group, an alkyl group that may have a substituent, and an aryl group that may have a substituent are preferred.

Here, examples of introducible substituents include a methoxycarbonyl group, an ethoxycarbonyl group, an isopropyloxycarbonyl group, a methyl group, an ethyl group, and a phenyl group.

In Formula (1), A¹ represents an oxygen atom, a sulfur atom, or -N(R²¹)-, and X represents an oxygen atom, a sulfur atom, or -N(R²²)-. Here, R²¹ and R²² may represent, for example, an alkyl group that may have a substituent.

G¹ in Formula (1) represents a divalent organic group. G¹ preferably represents an alkylene group that may have a substituent, and more preferably an alkylene group having 1 to 20 carbon atoms that may have a substituent, a cycloalkylene group having 3 to 20 carbon atoms that may have a substituent, or an aromatic group having 6 to 20 carbon atoms that may have a substituent. In particular, a straight chain or branched alkylene group having 1 to 10 carbon atoms that may have a substituent, a cycloalkylene group having 3 to 20 carbon atoms that may have a substituent, and an aromatic group having 6 to 12 carbon atoms that may have a substituent are preferred from the viewpoint of performances such as strength and developability.

Here, a substituent introduced into G¹ may be, for example, a hydroxyl group or a substituent other than a substituent (for example, an amino group, a thiol group, or a carboxyl group, but excluding a hydroxyl group) having a heteroatom to which a hydrogen atom is bonded.

It is preferred that, in a structural unit represented by Formula (1) in the first embodiment, A¹ represents an oxygen atom, a sulfur atom, or -N(R²¹)-, X represents an oxygen atom, a sulfur atom, or N(R²²)-, G¹ represents an alkylene group that may have a substituent, R¹ and R² each represent a hydrogen atom, R³ represents a hydrogen atom or a methyl group, R⁴ represents a hydrogen atom or an alkyl group, R⁵ and R⁶ each independently represent a hydrogen atom, an alkoxycarbonyl group, an alkyl group, or an aryl group, and R²¹ and R²² each represent an alkyl group.

In Formula (2), R⁷ to R⁹ each independently represent a monovalent substituent, for example, a hydrogen atom or an alkyl group that may have a substituent. In particular, R⁷ and R⁸ each preferably represent a hydrogen atom, and R⁹ preferably represents a hydrogen atom or a methyl group.

R¹⁰ to R¹² in Formula (2) each independently represent a monovalent substituent. Examples thereof include a hydrogen atom, a halogen atom, a dialkylamino group, an alkoxycarbonyl group, a sulfo group, a nitro group, a cyano group, an alkyl group that may have a substituent, an aryl group that may have a substituent, an alkoxy group that may have a substituent, an aryloxy group that may have a substituent, an alkylsulfonyl group that may have a substituent, and an arylsulfonyl group that may have a substituent. In particular, a hydrogen atom, an alkoxycarbonyl group, an alkyl group that may have a substituent, and an aryl group that may have a substituent are preferred.

Here, examples of introducible substituents include the substituents mentioned above as examples of introducible substituents in the description of Formula (1).

A² in Formula (2) represents an oxygen atom, a sulfur atom, or -N(R²¹)-, and R²¹ may represent, for example, a hydrogen atom or an alkyl group that may have a substituent.

G² in Formula (2) represents a divalent organic group. G² preferably represents an alkylene group that may have a substituent, and more preferably an alkylene group having 1 to 20 carbon atoms that may have a substituent, a cycloalkylene group having 3 to 20 carbon atoms that may have a substituent, or an aromatic group having 6 to 20 carbon atoms that may have a substituent. In particular, a straight chain or branched alkylene group having 1 to 10 carbon atoms that may have a substituent, a cycloalkylene group having 3 to 10 carbon atoms that may have a substituent, and an aromatic group having 6 to 12 carbon atoms that may have a substituent are preferred from the viewpoint of performances such as strength and developability.

Here, a substituent introduced into G² may be, for example, a hydroxyl group or a substituent other than a substituent (for example, an amino group, a thiol group, or a carboxyl group, but excluding a hydroxyl group) having a heteroatom to which a hydrogen atom is bonded.

When G² in Formula (2) has a substituent (excluding a hydroxyl group) having a heteroatom to which a hydrogen atom is bonded, use of an onium salt compound as the below-mentioned initiator may result in deterioration of the storage stability.

Y in Formula (2) represents an oxygen atom, a sulfur atom, -N(R²³)-, or a phenylene group that may have a substituent. Here, R²³ may represent, for example, a hydrogen atom or an alkyl group that may have a substituent.

It is preferred that, in a structural unit represented by Formula (2) in the first embodiment, R¹⁰ represents a hydrogen atom or an alkyl group, R¹¹ and R¹² each independently represent a hydrogen atom, an alkoxycarbonyl group, an alkyl group, or an aryl group, R⁷ and R⁸ each represent a hydrogen atom, R⁹ represents a hydrogen atom or a methyl group, A² represents an oxygen atom, a sulfur atom or -N(R²¹)-, G² represents a straight chain or branched alkylene group having 1 to 10 carbon atoms that may have a substituent, a cycloalkylene group having 3 to 10 carbon atoms that may have a substituent, or an aromatic group having 6 to 12 carbon atoms that may have a substituent, Y represents an oxygen atom, a sulfur atom, -N(R²³)-, or a phenylene group that may have a substituent, R²¹ and R²³ each represent a hydrogen atom or an alkyl group that may have a substituent.

In Formula (3), R¹³ to R¹⁵ each independently represent a monovalent substituent, for example, a hydrogen atom or an alkyl group that may have a substituent. In particular, R¹³ and R¹⁴ each preferably represent a hydrogen atom and R¹⁵ preferably represents a hydrogen atom or a methyl group.

In Formula (3), R¹⁶ to R²⁰ each independently represent a monovalent substituent. Examples of R¹⁶ to R²⁰ include a hydrogen atom, a halogen atom, a dialkylamino group, an alkoxycarbonyl group, a sulfo group, a nitro group, a cyano group, an alkyl group that may have a substituent, an aryl group that may have a substituent, an alkoxy group that may have a substituent, an aryloxy group that may have a substituent, an alkylsulfonyl group that may have a substituent, and an arylsulfonyl group that may have a substituent. In particular, a hydrogen atom, an alkoxycarbonyl group, an alkyl group that may have a substituent, and an aryl group that may have a substituent are preferred. Examples of introducible substituents include the substituents mentioned as examples of introducible substituents in the description of Formula (1).

A³ in Formula (3) represents an oxygen atom, a sulfur atom, or -N(R²¹), and Z represents an oxygen atom, a sulfur atom, or -N(R²²)-. Examples of R²¹ and R²² include those mentioned in the desciption of Formula (1).

G³ in Formula (3) represents a divalent organic group. G³ preferably represents an alkylene group that may have a substituent, and more preferably an alkylene group having 1 to 20 carbon atoms that may have a substituent, a cycloalkylene group having 3 to 20 carbon atoms that may have a substituent, or an aromatic group having 6 to 20 carbon atoms that may have a substituent. In particular, a straight chain or branched alkylene group having 1 to 10 carbon atoms that may have a substituent, a cycloalkylene group having 3 to 10 carbon atoms that may have a substituent, and an aromatic group having 6 to 12 carbon atoms that may have a substituent are preferred from the viewpoint of performances such as strength and developability.

Here, a substituent introduced into G³ is preferably a hydroxyl group or a substituent other than a substituent (for example, an amino group, a thiol group, or a carboxyl group, but excluding a hydroxyl group) having a heteroatom to which a hydrogen atom is bonded.

It is preferred that, in a structural unit represented by Formula (3) in the first embodiment, R¹³ and R¹⁴ each represent a hydrogen atom, R¹⁵ represents a hydrogen atom or a methyl group, R¹⁶ to R²⁰ each independently represent a hydrogen atom, an alkoxycarbonyl group, an alkyl group that may have a substituent, or an aryl group that may have a substituent, A³ represents an oxygen atom, a sulfur atom or -N(R²¹)-, Z represents an oxygen atom, a sulfur atom or -N(R²²)-, R²¹ and R²² are as described above in connection to Formula (1), and G³ represents a straight chain or branched alkylene group having 1 to 10 carbon atoms that may have a substituent, a cycloalkylene group having 3 to 10 carbon atoms that may have a substituent, or an aromatic group having 6 to 12 carbon atoms that may have a substituent.

The alkali-soluble resin (T) in the first embodiment preferably contains at least one type of structural unit selected from a structural unit represented by Formula (1), a structural unit represented by Formula (2), or a structural unit represented by Formula (3) at a content ratio that is at least 1.5 times the content ratio of a structural unit represented by Formula (4), from the viewpoint of suppressing thermal sagging during postbaking. The content ratio of the at least one type of structural unit selected from a structural unit represented by Formula (1), a structural unit represented by Formula (2), or a structural unit represented by Formula (3) is preferably at least 2.0 times the content ratio of the structural unit represented by Formula (4), and more preferably at least 3.0 times the content ratio of the structural unit represented by Formula (4), from the viewpoint of curability.

The alkali-soluble resin (T) in the first embodiment is preferably a compound that contains, in a molecule thereof, at least one type of structural unit selected from a structural unit represented by Formula (1), a structural unit represented by Formula (2), or a structural unit represented by Formula (3), at a content ratio of preferably from 35% by mole to less than 95% by mole, more preferably from 37% by mole to less than 90% by mole, and still more preferably from 40% by mole to less than 85% by mole, from the viewpoint of improving curability and reducing development residue. In particular, a resin that contains a structural unit represented by Formula (1) at a content ratio of from 40% by mole to less than 85% by mole is most preferred from the viewpoint of curability.

A polymer compound having at least one type of structural unit selected from a structural unit represented by Formula (1), a structural unit represented by Formula (2), or a structural unit represented by Formula (3) can be synthesized according to the synthesis methods described in paragraphs [0027] to [0057] of JP-A No. 2003-262958. In particular, Synthesis Method 1) in JP-A No. 2003-262958 is preferably used.

The alkali-soluble resin (T) is preferably a resin obtained according to a synthesis method (1) or (2) shown below.

### Synthesis Method (1)

A method in which a polymer synthesized using a compound represented by Formula (5) shown below as a copolymerization component is reacted with a base so as to extract a proton and eliminate L, thereby providing a desired polymer compound having a structure represented by Formula (1).

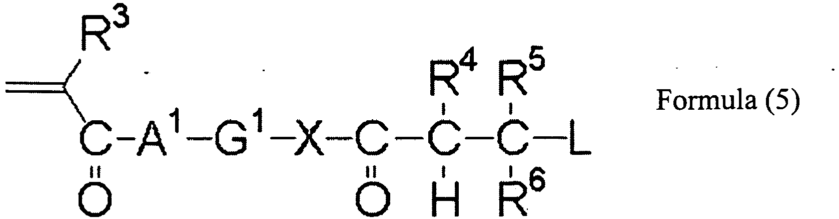

In Formula (5), L represents an anionic leaving group, preferably a halogen atom, an alkylsulfonyloxy group, or an arylsulfonyloxy group. R³ to R⁶, A¹, G¹ and X respectively have the same definitions and preferable examples as that in Formula (1).

As the base used to cause the elimination reaction, any of an inorganic compound or an organic compound may be used. Details and preferred embodiments of the method are described in paragraphs [0028] to [0033] of JP-A No. 2003-262958.

Preferable examples of the inorganic compound base include sodium hydroxide, potassium hydroxide, sodium carbonate, sodium hydrogen carbonate, potassium carbonate, and potassium hydrogen carbonate. Preferable examples of the organic compound base include a metal alkoxide such as sodium methoxide, sodium ethoxide, or potassium t-butoxide, and an organic amine compound such as triethylamine, pyridine, or diisopropylethylamine.

### Synthesis Method (2)

A method in which a polymer synthesized using a compound represented by Formula (6) shown below as a copolymerization component is treated with a base so as to eliminate a specific functional group, whereby X¹ is eliminated and a radical reactive group is obtained.

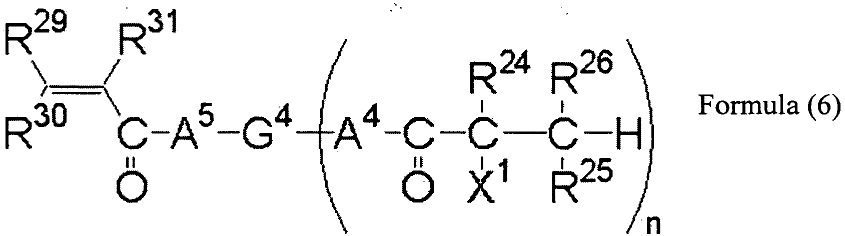

In Formula (6), A⁴ represents an oxygen atom, a sulfur atom, or -N(R²⁷)-; A⁵ represents an oxygen atom, a sulfur atom, or -NR²⁸-; R²⁴, R²⁵, R²⁶, R²⁹, R³⁰ and R³¹ each independently represent a hydrogen atom or a monovalent organic group; X¹ represents a group eliminated by the elimination reaction; G⁴ represents an organic linking group; n represents an integer of from 1 to 10.

In the first embodiment, particularly, A⁴ preferably represents an oxygen atom, R²⁴ preferably represents a methyl group, R²⁵, R²⁶, R²⁹ and R³⁰ each preferably represent a hydrogen atom, R³¹ preferably represents a hydrogen atom or a methyl group, X¹ preferably represents a bromine atom, and G⁴ preferably represents an ethylene group.

Details and preferred embodiments of the method are described in JP-ANo. 2003-335814.

Examples of the resin obtained according to the synthesis method (2) include polymer compounds described in JP-A No. 2003-335814, specifically, for example, (i) a polyvinyl polymer compound, (ii) a polyurethane polymer compound, (iii) a polyurea polymer compound, (iv) a poly(urethane-urea) polymer compound, (v) a polyester polymer compound, (vi) a polyamide polymer compound, (vii) an acetal-modified polyvinyl alcohol polymer compound, and specific compounds obtained from the respective descriptions thereof.

Specific examples of the compound represented by Formula (5) include compounds (M-1) to (M-12) shown below. However, the first embodiment is not restricted thereto.

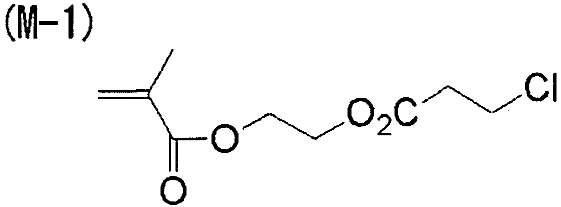

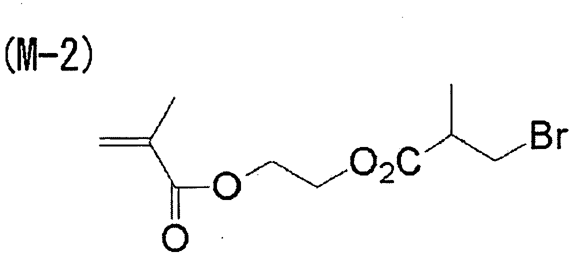

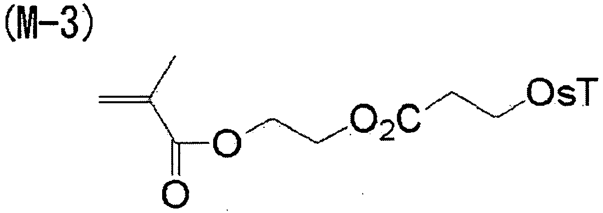

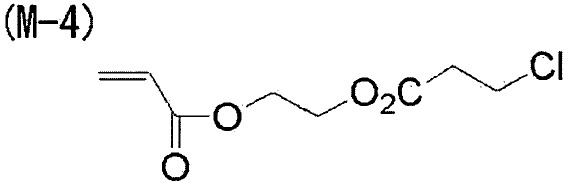

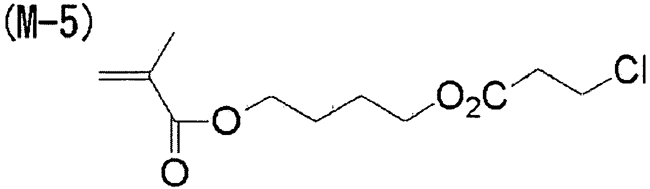

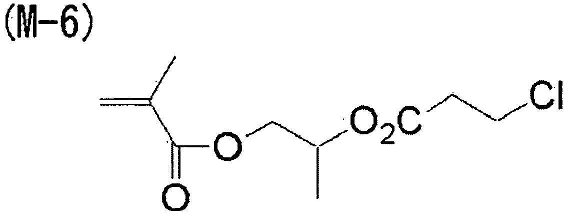

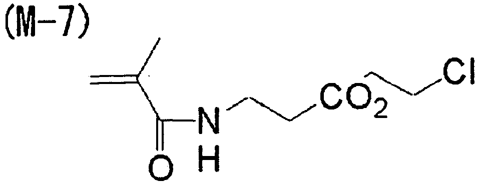

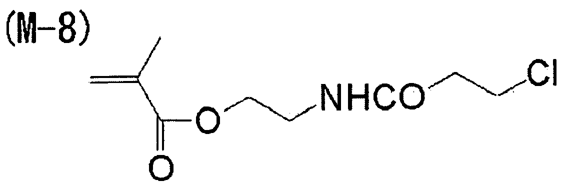

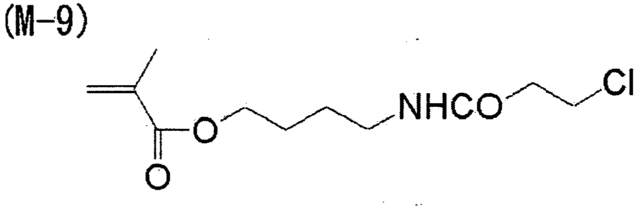

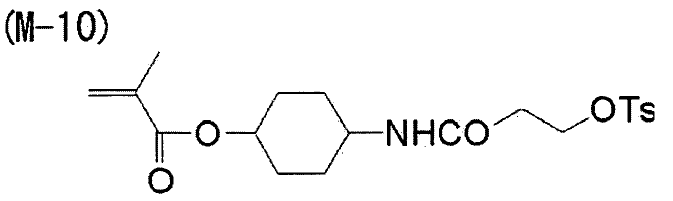

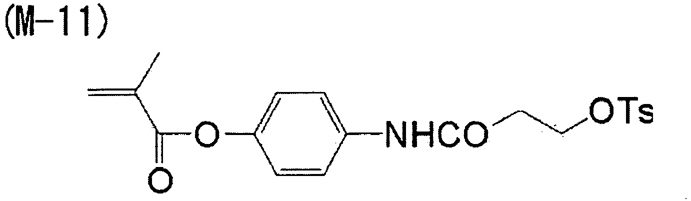

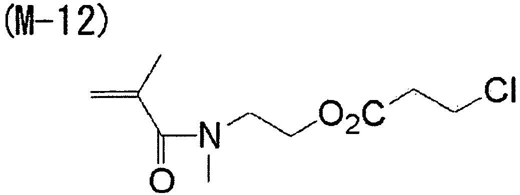

Examples of the compound represented by Formula (6) include compounds (i-1) to (i-50) shown below. However, the first embodiment is not restricted thereto.

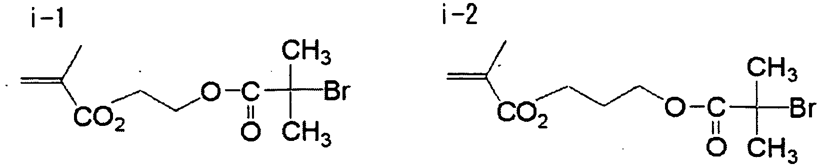

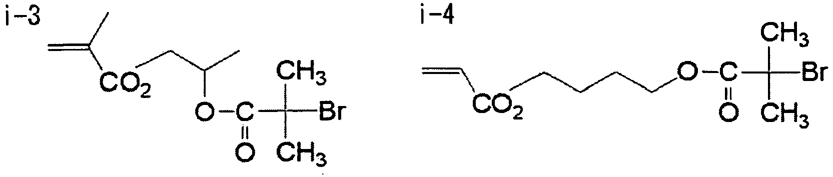

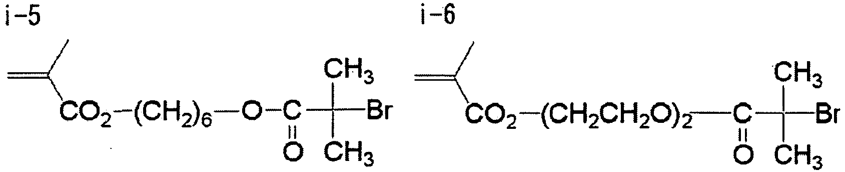

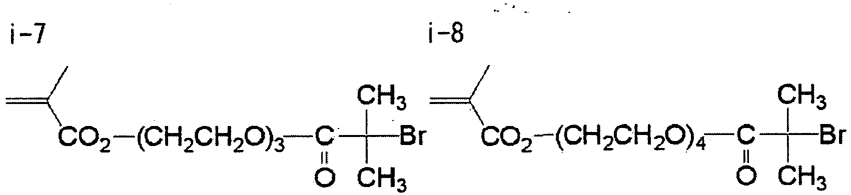

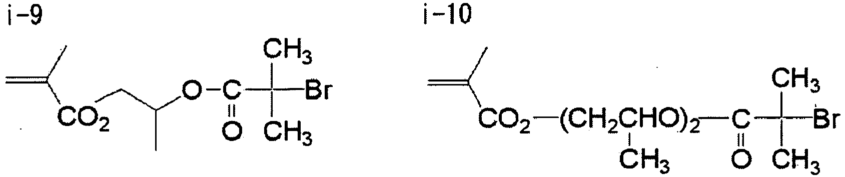

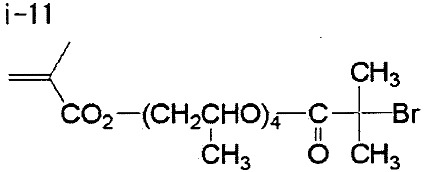

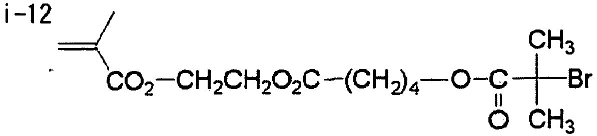

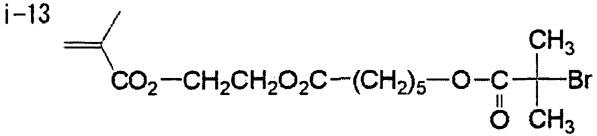

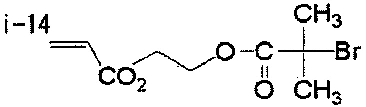

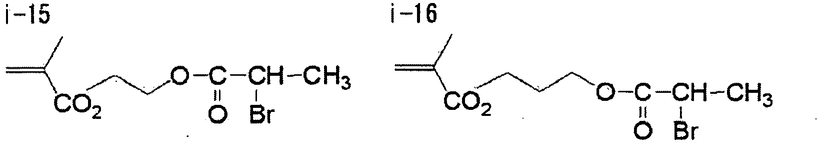

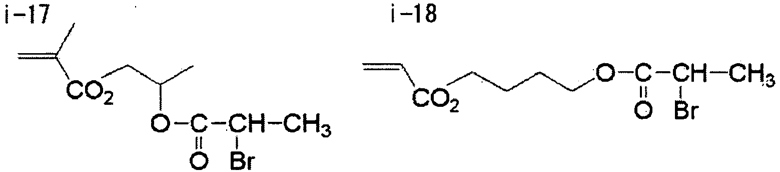

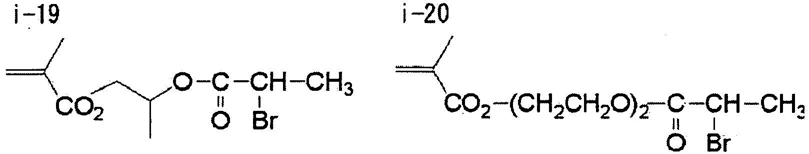

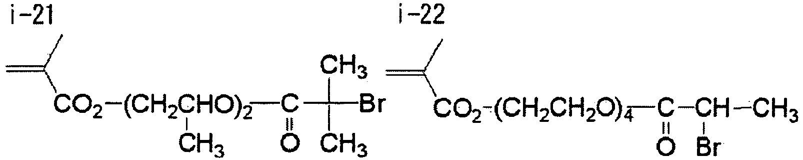

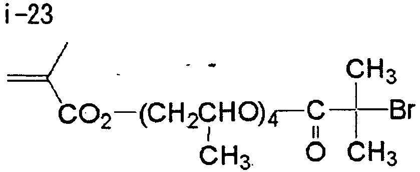

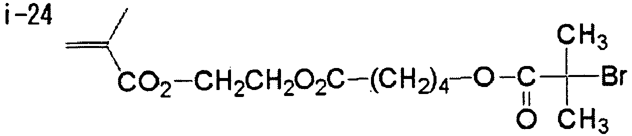

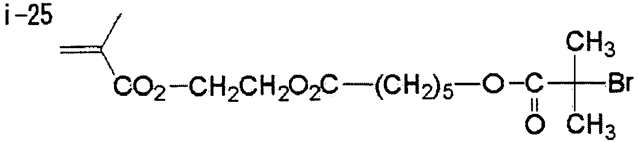

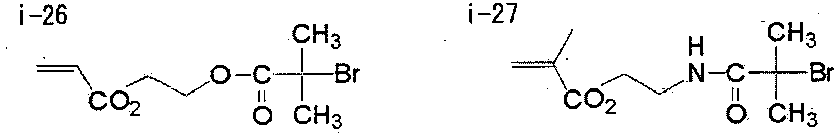

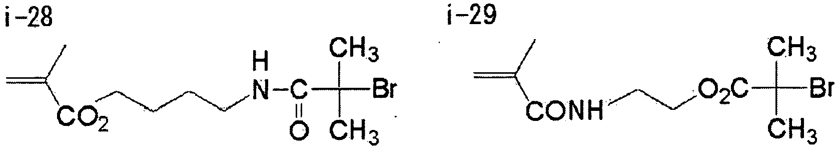

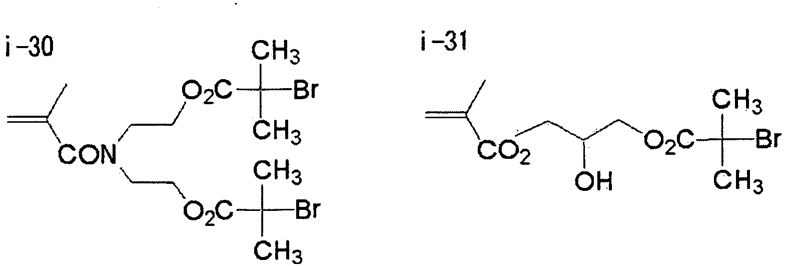

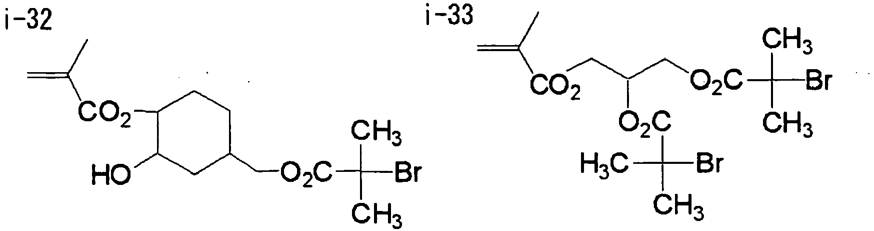

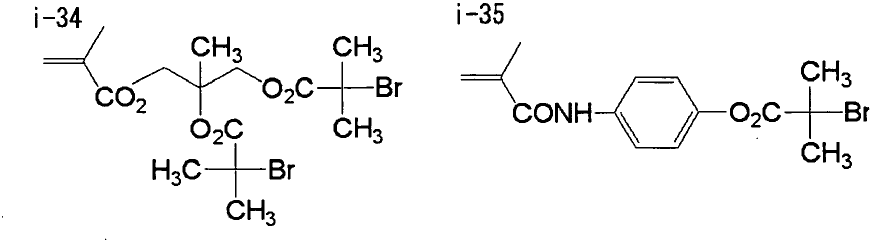

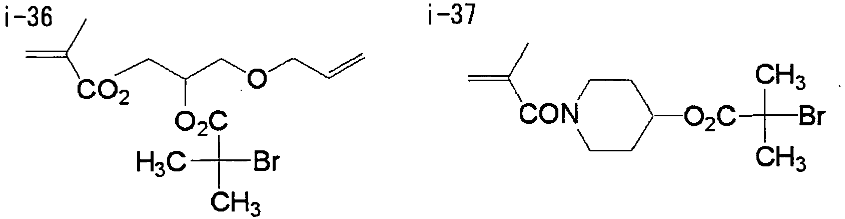

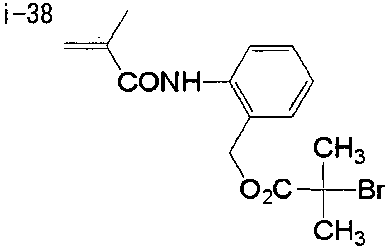

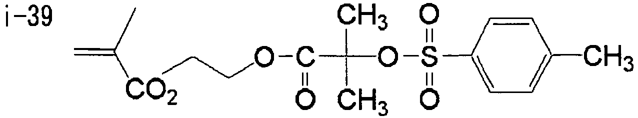

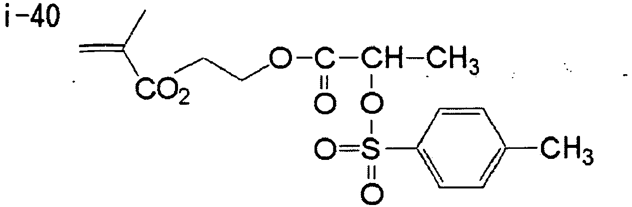

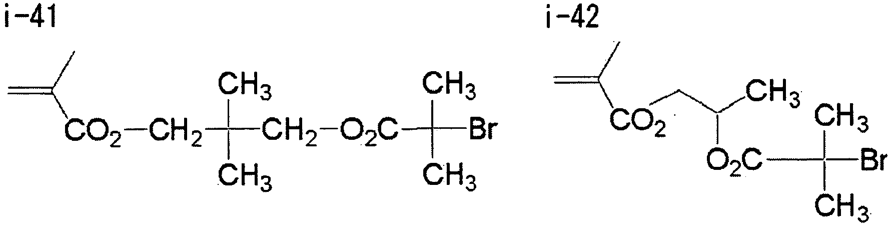

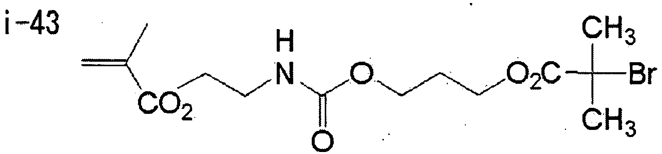

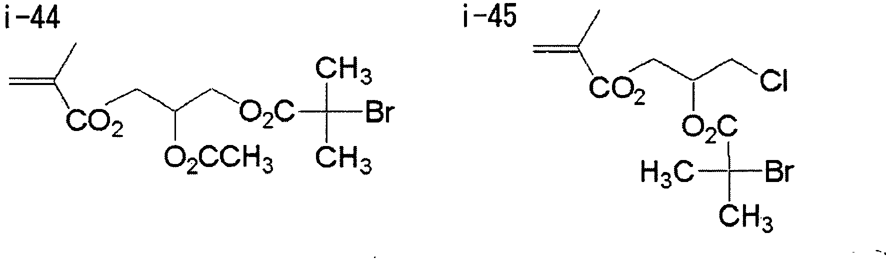

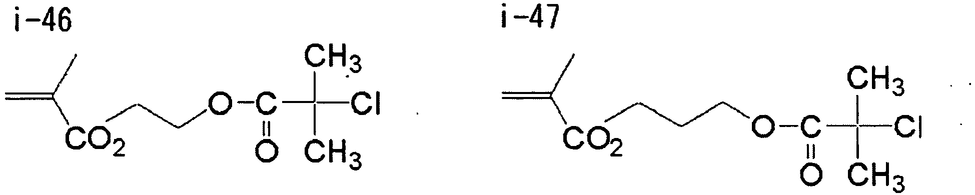

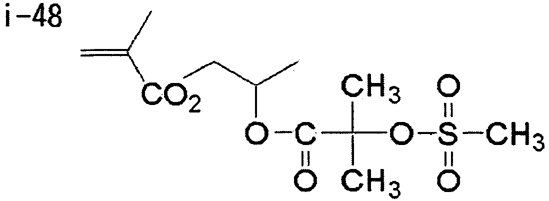

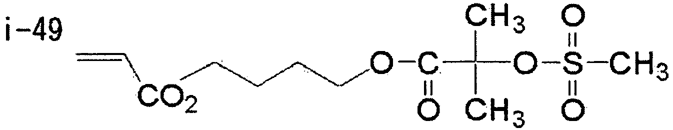

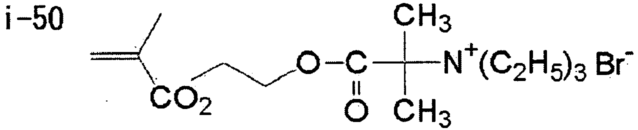

The alkali-soluble resin (T) in the first embodiment preferably contains a structural unit represented by Formula (4) shown below.

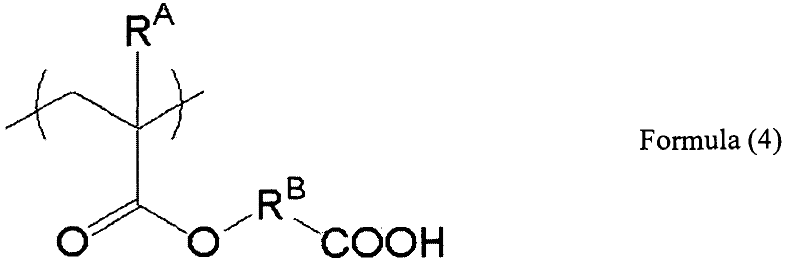

In Formula (4), R^{A} represents a hydrogen atom or an alkyl group having 1 to 6 carbon atoms, and R^{B} represents a divalent linking group.

R^{A} preferably represents a hydrogen atom or a methyl group.

R^{B} represents a divalent linking group, examples of which include an optionally substituted alkylene group having 1 to 12 carbon atoms, -U-R^{C}-V- (wherein, U and V each independently represent a direct bond or an alkylene group having 1 to 3 carbon atoms, and R^{C} represents an optionally substituted cyclohexyl ring, an optionally substituted benzene ring or an optionally substituted naphthalene ring), and -R^{D}-X-R^{E}- (wherein, R^{D} and R^{E} each independently represent an optionally substituted alkylene group having 1 to 10 carbon atoms, an optionally substituted benzene ring, or an optionally substituted naphthalene ring, X represents an ester bond, an amide bond, a urethane bond, an ether bond, a thioether bond, a carbonate bond, a urea bond, or an imide bond). In particular, R^{B} preferably represents a divalent linking group having 1 to 6 carbon atoms.

Among examples of the alkali-soluble resins (T) in the first embodiment, specific examples of a resin compound having at least one structural unit selected from the group consisting of structural units represented by Formulas (1) to (3) and having a structural unit represented by Formula (4) include exemplary compounds 101 to 121 shown in the following Tables.

| Exemplary Compound | Composition (% by mol) | Acid Value (mgKOH/g) | Mw |
|---|---|---|---|
| 101 | 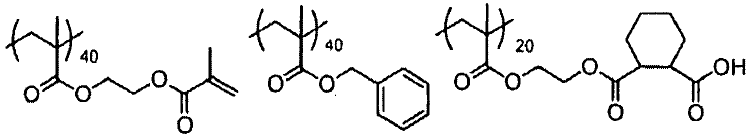 | 54 | 85000 |
| 102 | 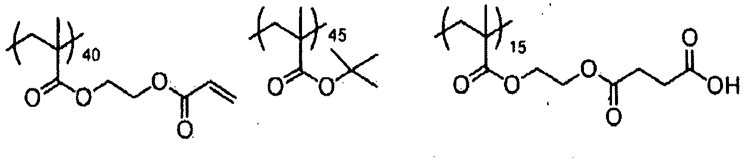 | 49 | 36000 |
| 103 | 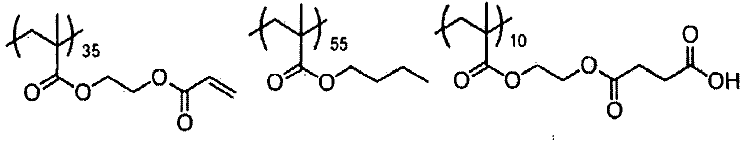 | 34 | 62000 |
| 104 | 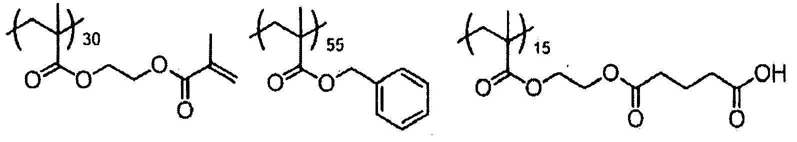 | 44 | 30000 |
| 105 | 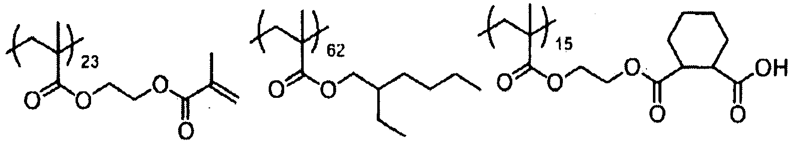 | 43 | 31000 |
| 106 | 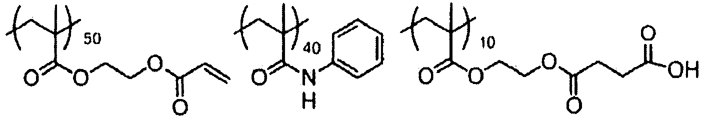 | 31 | 23000 |
| 107 | 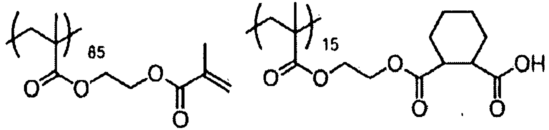 | 40 | 10000 0 |
| 108 | 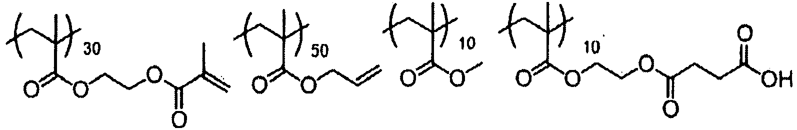 | 36 | 63000 |
| 109 | 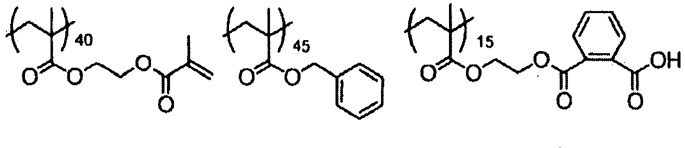 | 42 | 55000 |
| 110 | 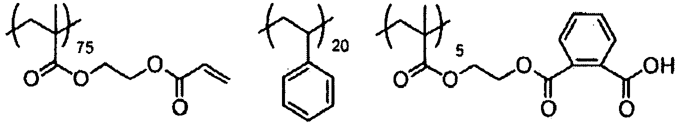 | 16 | 36000 |
| 111 | 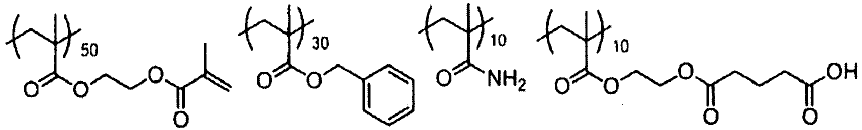 | 30 | 22000 |
| 112 | 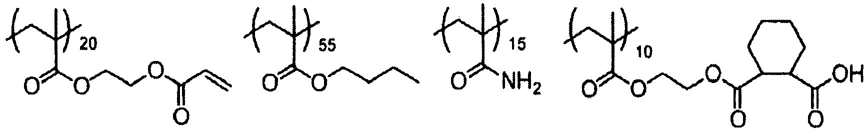 | 47 | 28000 |
| 113 | 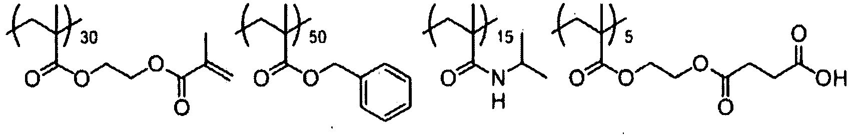 | 16 | 53000 |
| 114 | 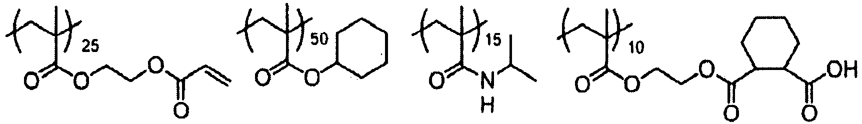 | 32 | 33000 |
| 115 | 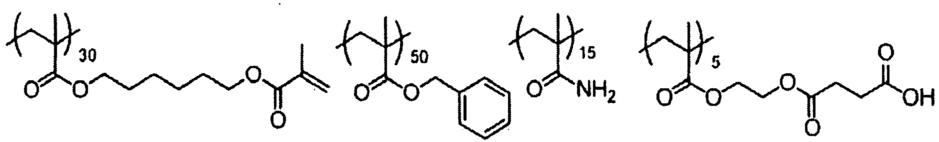 | 15 | 30000 |
| 116 | 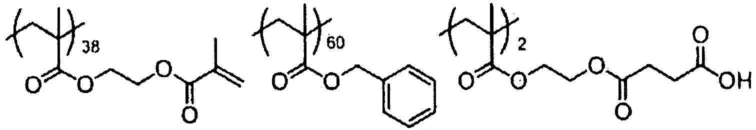 | 6.0 | 61000 |
| 117 | 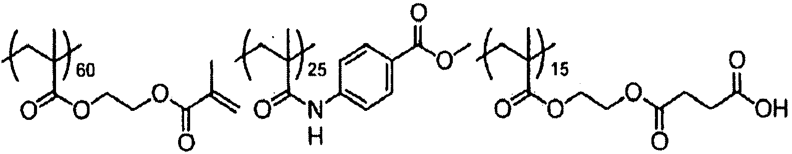 | 45 | 48000 |
| 118 | 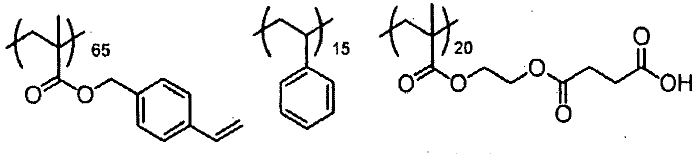 | 58 | 27000 |
| 119 | 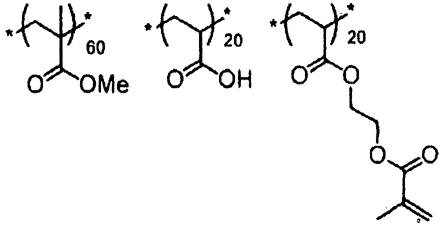 | 47 | 90000 |
| 120 | 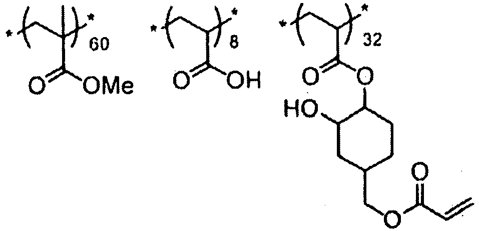 | 30 | 14000 |
| 121 | 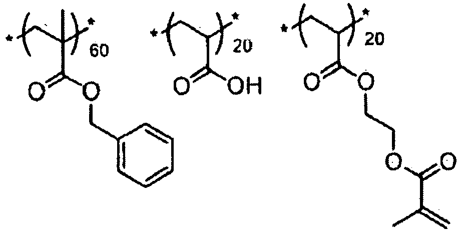 | 34 | 50000 |

The acid value of the alkali-soluble resin (T) is preferably from 5.0 mg KOH/g to 110 mg KOH/g, more preferably from 5.5 mg KOH/g to 75 mg KOH/g, and still more preferably from 6.0 mg KOH/g to 70 mg KOH/g. When the acid value is 110 mg KOH/g or less, peeling of a pattern during development is suppressed, and when the acid value is 5.0 mg KOH/g or more, alkali-developability is excellent.

In the first embodiment, the acid value of the alkali-soluble resin (T) is calculated from, for example, an average content of acid groups in the resin molecule. A resin having a desired acid value can be obtained by changing the content of a monomer unit containing an acid group in the alkali-soluble resin (T).

The weight average molecular weight of the alkali-soluble resin (T) in the first embodiment is preferably from 10,000 to 300,000, more preferably from 15,000 to 200,000, still more preferably from 20,000 to 100,000, and particularly preferably from 25,000 to 50,000, from the viewpoints of suppressing peeling of a pattern during development and improving developability.

The weight average molecular weight of the alkali-soluble resin (T) is measured using, for instance, a GPC.

The content of the alkali-soluble resin (T) with respect to the total solid content of the polymerizable composition of the first embodiment is preferably from 2% by mass to 60% by mass, from the viewpoint of improving polymerizability and alkali-developability, more preferably from 4% by mass to 50% by mass from the viewpoint of achieving both of suprression of pattern peeling and suppression of generation of development residue, and still more preferably from 6% by mass to 40% by mass.

### (B2) Alkali-soluble Resin Having Weight Average Molecular Weight of from 2000 to less than 20,000 and (B3) Alkali-soluble Resin Having Weight Average Molecular Weight of from 20,000 to 100,000

A black curable composition of the second embodiment contains (B2) an alkali-soluble resin having a weight average molecular weight of from 2000 to less than 20,000. A black curable composition of the third embodiment contains (B3) an alkali-soluble resin having a weight average molecular weight of from 20,000 to 100,000.

Each of the alkali-soluble resin having a weight average molecular weight of from 2000 to less than 20,000 (hereinafter sometimes referred to as "alkali-soluble resin (S)") and the alkali-soluble resin having a weight average molecular weight of from 20,000 to 100,000 (hereinafter sometimes referred to as "alkali-soluble resin (R)") is a linear organic high-molecular-weight polymer, and may be appropriately selected from alkali-soluble resins having at least one alkali-solubility enhancing group (for example, a carboxyl group, a phosphoric acid group, a sulfonic acid group, or a hydroxyl group) in a molecule thereof (preferably a molecule containing an acrylic copolymer or a styrene copolymer as a main chain). The following description of the alkali-soluble resin is common to the second and third embodiments unless otherwise specified.

The (B2) alkali-soluble resin having a weight average molecular weight of from 2000 to less than 20,000 in the second embodiment is preferably a polymer having a carboxylic acid in a side chain. Examples thereof include a methacrylic acid copolymer, an acrylic acid copolymer, an itaconic acid copolymer, a crotonic acid copolymer, a maleic acid copolymer, a partially-esterified maleic acid copolymer, an acidic cellulose derivative having a carboxyl group in a side chain, and a polymer obtained by adding an acid anhydride to a polymer having a hydroxyl group, such as those described in, for example, JP-A No. 59-44615, JP-B Nos. 54-34327, 58-12577 and 54-25957, JP-ANos. 59-53836 and 59-71048.

The (B2) alkali-soluble resin having a weight average molecular weight of from 2000 to less than 20,000 in the second embodiment has a weight average molecular weight of less than 20,000. Consequently, when the black curable composition of the invention is coated on a substrate, exposed to light, and developed, a residue of the black curable composition, which occurs as a result of incomplete removal of the black curable composition in a developed portion an unexposed portion that is not cured is suppressed, whereby the pattern shape is improved.

The alkali-soluble resin of the third embodiment has a weight average molecular weight in the range of from 20,000 to 100,000, as a result of which adhesiveness to a substrate is remarkably improved.

Although the reason for this is not clear, it is considered that the following mechanism works. The alkali-soluble resin is considered to be adsorbed to a substrate through an alkali-soluble portion (an acid group). However, as mentioned above, curing of the black curable composition containing titanium black is insufficient in the vicinity of the substrate. Therefore, the alkali-soluble resin having a molecular weight of less than 20,000 in a light-shielding color filter layer less interwind in the vicinity of a substrate surface and the substrate and the light-shielding color filter layer are not adhered to each other. As the result, adhesion to the substrate is decreased. However, the alkali-soluble resin having a weight average molecular weight in the range of from 20,000 to 100,000 is able to interwind sufficiently in the light-shielding layer due to its long polymer chain even when the degree of curing in the vicinity of the substrate is insufficient, and the substrate and the light-shielding film can be adhered to each other. Furthermore, when the molecular weight is larger, the polymer chain has more alkali-soluble groups therein and can be adsorbed to the substrate at many points. As the result, the adhesion to the substrate is further improved.

The weight average molecular weight (Mw) of the alkali-soluble resin (S) in the second embodiment or the alkali-soluble resin (R) in the third embodiment is a polystyrene-equivalent value measured according to a GPC (gel permeation chromatography) method. The gel filled into a column used in the GPC method is preferably a gel having an aromatic compound in a repeating unit. For instance, the gel may be a gel made of a styrene-divinylbenzene copolymer. It is preferable to use two to six columns that are connected to each other.

Examples of the solvent (eluent) used as a mobile phase include an ether solvent such as tetrahydrofuran and an amide solvent such as N-methyl pyrrolidinone. In particular, ether solvents such as tetrahydrofuran are preferred. The measurement is conducted at a solvent flow rate of preferably from 0.1 mL/min to 2 mL/min, and most preferably from 0.5 mL/min to 1.5 mL/min. When the measurement is conducted within the flow rate range described above, the measurement can be conducted more efficiently with less device load. The measurement temperature is preferably from 10 to 50°C and more preferably from 20 to 40°C.

In the invention, a weight average molecular weight of the alkali-soluble resin (S) or (R) is measured in more detail under conditions shown below.
Device: HLC-8220GPC (trade name, manufactured by Tosoh Corporation)
Detector: Differential refractometer (RI Detector)
Pre-column: TSKGUARDCOLUMN MP(XL) 6 mm × 40 mm (trade name, manufactured by Tosoh Corporation)
Sample side column: Four columns are directly connected to each other wherein each column is the following column (all manufactured by Tosoh Corporation) TSK-GEL MULTIPORE-HXL-M 7.8 mm × 300 mm
Reference side column: the same as the sample side column
Thermostat temperature: 40°C
Mobile phase: tetrahydrofuran
Mobile phase flow rate at the sample side: 1.0 mL/min
Mobile phase flow rate at the reference side: 0.3 mL/min
Concentration of sample: 0.1% by mass
Injected sample amount: 100 µL
Data sampling time: from 16 minuntes after sample injection to 46 minutes after sample injection
Sampling pitch: 300 msec

In the second embodiment, as mentioned above, the weight average molecular weight of the alkali-soluble resin is less than 20,000; accordingly, generation of a residue of the black curable composition is suppressed and the pattern shape is improved.

The weight average molecular weight of the alkali-soluble resin is preferably from 3000 to 15,000. When the weight average molecular weight is within the range, occurrence of coating irregularity is suppressed when spin coating is performed on a substrate.

In the second embodiment, the alkali-soluble resin has a ratio of weight average molecular weight to number average molecular weight (molecular weight distribution) (hereinafter, referred to as well as "Mw/Mn") of preferably less than 3.0, more preferably 2.5 or less, and particularly preferably less than 2.0. When the ratio Mw/Mn of the alkali-soluble resin is less than 3.0, low-molecular-weight components (oligomers) of the alkali-soluble resin are decreased, and the adhesion of the black curable composition of the second embodiment to a substrate is improved. The weight average molecular weight/number average molecular weight (molecular weight distribution) is measured using the GPC method.

The weight average molecular weight of the alkali-soluble resin of the third embodiment is preferably from 20,000 to 100,000 and most preferably from 25,000 to 50,000. When the weight average molecular weight is in the range, stability over time, as well as adhesiveness to a substrate, is excellent.

The ratio of weight average molecular weight to number average molecular weight (degree of polydispersion) of the alkali-soluble resin of the third embodiment is preferably in the range of from 1.1 to 3.0 and particularly preferably in the range of from 1.3 to 2.0. When the degree of polydispersion is within the range, low-molecular-weight components (oligomers) are decreased, and the adhesiveness to a substrate is further improved. The ratio of weight average molecular weight to number average molecular weight is measured using the GPC method.

In the second and third embodiments, regarding a specific structural units of the alkali-soluble resin (S) or (R), the alkali-soluble resin (S) or (R) is preferably a copolymer containing at least one type of carboxylic acid group-containing monomer represented by Formula (α) and at least one type of monomer represented by Formula (β).

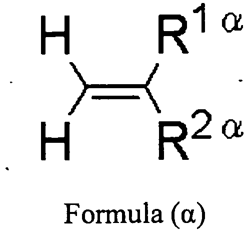

In Formula (α), R^{1α} represents a hydrogen atom, a substituted or unsubstituted alkyl group, or a halogen atom; R^{2α} represents -(COO)m-(R^{3α})n-CO₂H; R^{3α} represents a divalent linking group; and m and n each represent 0 or 1.

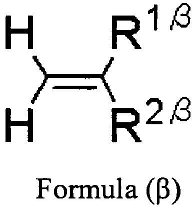

In Formula (β), R^{1β} represents a hydrogen atom, a substituted or unsubstituted alkyl group, or a halogen atom; R^{2β} represents -CO₂R^{3β}, an aryl group, a heterocyclic group, a cyano group or a carbamoyl group; and R^{3β} represents a substituted or unsubstituted alkyl group, a cycloalkyl group, or an aryl group.

The alkyl group that R^{1α} of Formula (α) may represent is preferably an alkyl group having 1 to 10 carbon atoms, and more preferably an alkyl group having 1 to 5 carbon atoms. Examples of the alkyl group include a methyl group, an ethyl group, a n-propyl group, an isopropyl group, a t-butyl group, a sec-butyl group, a n-pentyl group, a n-hexyl group, a n-heptyl group and a n-octyl group. A substituent that R^{1α} may have is not particularly restricted as long as it is a known substituent. Examples thereof include a halogen atom, a hydroxyl group, an alkoxy group (preferably an alkoxy group having 1 to 10 carbon atoms such as a methoxy group, an ethoxy group or a propoxy group), and an acyloxy group (preferably a formyloxy group, a substituted or unsubstituted alkylcarbonyloxy group having 2 to 30 carbon atoms, a substituted or unsubstituted arylcarbonyloxy group having 6 to 30 carbon atoms, such as a formyloxy group, an acetyloxy group, a pivaloyloxy group, a stearoyloxy group, a benzoyloxy group or a p-methoxyphenylcarbonyloxy group). In particular, a halogen atom and a hydroxyl group are particularly preferred.

R^{1α} most preferably represents a hydrogen atom, a fluorine atom, a chlorine atom, a methyl group, a trifluoromethyl group or a hydroxymethyl group.

In Formula (α), R^{2α} represents -(COO)m-(R^{3α})n-CO₂H. R^{3α} represents a divalent linking group, which may be selected from an alkylene group, a cycloalkylene group, an arylene group, or -R^{4α}-OC(O)R^{5α}- wherein R^{4α} and R^{5α} each represent an alkylene group having 1 to 10 carbon atoms, or an arylene group, and R^{4α} and R^{5α} may be same as each other or different from each other. The alkylene group as the divalent linking group is preferably an alkylene group having 1 to 20 carbon atoms, and most preferably an alkylene group having 1 to 10 carbon atoms. Examples of the alkylene group include a methylene group, an ethylene group, a propylene group, an isopropylene group, a butylene group, an isobutylene group, a pentylene group, a hexylene group, a heptylene group, an octylene group, a nonylene group, and a decylene group. The cycloalkylene group as the divalent linking group is preferably a cycloalkylene group having 3 to 30 carbon atoms, and most preferably a cycloalkylene group having 5 to 20 carbon atoms. Examples of the cycloalkylene group include a cyclopropylene group, a cyclobutylene group, a cyclopentylene group, a cyclohexylene group, a cycloheptylene group, a cyclocotylene group, a cyclononylene group, a cyclodecylene group, an ethynlylene group, and a propynylene group. The arylene group as the divalent linking group is preferably an arylene group having 6 to 30 carbon atoms, and most preferably an arylene group having 6 to 20 carbon atoms. Examples of the arylene group include an alkylphenylene group such as a phenylene group, a methylphenylene group, a dimethylphenylene group, an ethylphenylene group, or a diethylphenylene group; a cycloalkylphenylene group such as a cyclopentylphenylene group or a cyclohexylphenylene group; a diphenylene group such as a hydroxydiphenylene group, a fluorodiphenylene group, a chlorodiphenylene group, a bromodiphenylene group, an iododiphenylene group, or an acetyldiphenylene group; an alkylnaphthalene group such as a methylnaphthalene group, a dimethylnaphthalene group, an ethylnaphthalenne group, or a diethylnaphthalene group; a cycloalkylnaphthalene group such as a cyclopentylnaphthalene group or a cyclohexylnaphthalene group; a diphenyl group, a naphthalene group, a fluorophenylene group, a chlorophenylene group, a bromophenylene group, an iodophenylene group, an acetylphenylene group, a hydroxyphenylene group, and an anthrathenylene group.

R^{3α} most preferably represents an ethylene group, a propylene group, a cycloalkylene group, or a phenylene group.

m and n each represent 0 or 1. It is particularly preferred that both of m and n are 0 or both of m and n are 1.

The R^{1β} in Formula (β) represents a hydrogen atom, a substituted or unsubstituted alkyl group, or a halogen atom. A preferable range of R^{1β} is same as the preferable range of R^{1α} in Formula (α).

R^{2β} in Formula (β) represents -CO₂R^{3β}, an aryl group, a heterocyclic group, a cyano group, or a carbamoyl group. R^{3β} represents a substituted or unsubstituted alkyl group, a cycloalkyl group, or an aryl group. The alkyl group that R^{3β} may represent is preferably an alkyl group having 1 to 30 carbon atoms, and more preferably an alkyl group having 1 to 20 carbon atoms. Examples of the alkyl group include a methyl group, an ethyl group, a n-propyl group, an isopropyl group, a t-butyl group, a sec-butyl group, a n-pentyl group, a n-hexyl group, a heptyl group, and a n-octyl group.

Examples of a substituent that an alkyl group represented by R^{3β} may have include a halogen atom, a hydroxyl group, an aryl group, a heterocyclic group, an alkoxy group, and a polyalkyleneoxy group. The aryl group is preferably a substituted or unsubstituted aryl group having 6 to 30 carbon atoms such as a phenyl group, a p-tolyl group, a naphthyl group, an m-chlorophenyl group, or an o-hexadecanoylaminophenyl group. The heterocyclic group is preferably a 5- to 7-membered heterocyclic group that may be monocyclic or fused cyclic, substituted or unsubstituted, saturated or unsaturated, and aromatic or non-aromatic. The heterocyclic group is more preferably a heterocyclic group having at least heteroatom selected from a nitrogen atom, an oxygen atom, or a sulfur atom, wherein the ring-forming atoms are each selected from a carbon atom, a nitrogen atom, or a sulfur atom. The heterocyclic group is still more preferably a 5- or 6-membered aromatic heterocyclic group having 3 to 30 carbon atoms. Examples thereof include a 2-furyl group, a 2-thienyl group, a 2-pyridyl group, a 4-pyridyl group, a 2-pyrimidinyl group, and a 2-benzothiazolyl group. The alkoxy group is preferably a substituted or unsubstituted alkoxy group having 1 to 30 carbon atoms, such as a methoxy group, an ethoxy group, an isopropoxy group, a t-butoxy group, a n-octyloxy group, or a 2-methoxyethoxy group. The polyalkyleneoxy group is preferably a substituted or unsubstituted polyalkyleneoxy group having 1 to 30 carbon atoms such as a group represented by -O-(CH₂CH₂-O-)ₙZ (Z represents a hydrogen atom or an alkyl group having 1 to 5 carbon atoms, and n represents an integer of from 1 to 10.), a group represented by -O-(CH(CH₃)CH₂-O-)ₙZ (Z represents a hydrogen atom or an alkyl group having 1 to 5 carbon atoms, and n represents an integer of from 1 to 10), or a group represented by -O-(CH₂CH(CH₃)-O-)nZ (Z represents a hydrogen atom or an alkyl group having 1 to 5 carbon atoms, and n represents an integer of from 1 to 10).

The cycloalkyl group in R^{3β} is preferably a cycloalkyl group having 3 to 30 carbon atoms and more preferably a cycloalkyl group having 1 to 20 carbon atoms. Examples of the cycloalkyl group include a cyclohexyl group, a cyclopentyl group, a bicyclo[1.2.2]heptane-2-yl, and a bicyclo[2.2.2]octane-3-yl. Details of a substituent that a cycloalkyl group represented by R^{3β} may have are the same as the details of a substituent that an alkyl group represented by R^{3β} may have.

The aryl group that R^{3β} may represent is preferably an aryl group having 6 to 30 carbon atoms, and more preferably an aryl group having 6 to 20 carbon atoms. Examples of the aryl group include a phenyl group, a p-tolyl group, a naphthyl group, an m-chlorophenyl group, and an o-hexadecanoylaminophenyl group. Details of a substituent that the aryl group represented by R^{3β} may have are the same as the details of a substituent that an alkyl group represented R^{3β} may have.

The aryl group in R^{2β} is preferably an aryl group having 6 to 30 carbon atoms, and more preferably an aryl group having 6 to 20 carbon atoms. Examples of the aryl group include a phenyl group, a p-tolyl group, a naphthyl group, an m-chlorophenyl group, and an o-hexadecanoylaminophenyl group. Details of a substituent that an aryl group represented by R^{2β} may have are same as the details of a substituent that an alkyl group represented by R^{3β} may have.

The heterocyclic group in R^{2β} is preferably a heterocyclic group having 1 to 30 carbon atoms and more preferably a heterocyclic group having 1 to 20 carbon atoms. Examples of the heterocyclic group include an imidazole group, a pyrazole group, a pyrrolidone group, and a pyridine group. The substituents that the heterocyclic group in R^{2β} may have are same as the substituents that the alkyl group in R^{3β} may have.

The carbamoyl group in R^{2β} is preferably a carbamoyl group having 1 to 30 carbon atoms, and more preferably a carbamoyl group having 1 to 20 carbon atoms. Examples of the carbamoyl group include a carbamoyl group, a N-methylcarbamoyl group, a N,N-dimethylcarbamoyl group, a N,N-di-n-octylcarbamoyl group, and a N-(methylsulfonyl)carbamoyl group.

The alkali-soluble resin (S) or (R) is preferably a copolymer of (meth)acrylic acid and one or more other monomers that can be copolymerizable with the (meth)acrylic acid. Particularly preferable examples of other monomers copolymerizable with the (meth)acrylic acid include an alkyl (meth)acrylate, benzyl (meth)acrylate, an aryl (meth)acrylate, styrene, vinyltoluene, N-vinylpyrrolidone, N-vinylpyridine, N-vinylimidazole, N,N-dimethylacrylamide, and acrylonitrile, in which one or more hydrogen atoms in alkyl groups and aryl groups may be substituted by the substituents described above.

The acid value of the alkali-soluble resin (S) or (R) is preferably in the range of from 50 mgKOH/g to 200 mgKOH/g, more preferably in the range of from 50 mgKOH/g to 150 mgKOH/g, and still more preferably in the range of from 70 mgKOH/g to 120 mgKOH/g.

When the acid value is 200 or less, the specific acrylic resin does not excessively dissolve in an alkali and a range within which proper development can be performed (development latitude) can be maintained to be appropriate. When the acid value is 50 or more, the alkali-soluble resin (S) or (R) sufficiently dissolves in an alkali, and development does not take a long time. The acid value of the alkali-soluble resin (S) or (R) is preferably from 70 mgKOH/g to 120 mgKOH/g from the viewpoints of developability and dispersibility, in particular.

The acid value of the alkali-soluble resin (S) or (R) can be easily regulated to be within the above-described range by appropriately regulating a copolymerization ratio between the respective monomers. The weight average molecular weight of the alkali-soluble resin (S) or (R) can be easily regulated to be within the above-described range using an appropriate amount of a chain transfer agent suitable for the polymerization method when the monomers are copolymerized.

The alkali-soluble resin (S) or (R) is preferably produced by a radical polymerization method. When an acrylic resin is produced by a radical polymerization method, polymerization conditions, such as temperature, pressure, the type and amount of radical initiator, and the type of solvent, are as in an ordinary method.

The initiator used in the radical polymerization may be a commercially available initiator. Examples of the initiator include an azo initiator (such as 2,2'-azobis(isobutylonitrile), 2,2'-azobis(2,4-dimethylvaleronitrile), 2,2'-azobis(2-methylbutylonitrile), 2,2'-azobis(methyl 2-methylpropionate), 1,1'-azobis(cyclohexane-1-carbonitrile), or 2,2'-azobis[2-(2-imidazoline-2-yl)propane]); and a peroxide (such as benzoyl peroxide, peracetic acid, hydrogen peroxide, or ammonium persulfate). In particular, azo initiators are most preferred. The reaction temperature varies with the type of initiator, and is preferably from 40 to 120°C from the viewpoint of suitability for production.

The solvent used in the radical polymerization is not particularly limited. Preferable examples thereof include a hydrocarbon solvent (for example, n-hexane, n-heptane, n-decane, or petroleum ether); an aromatic solvent (for example, benzene, toluene, xylene, or mesitylene); an ester solvent (for example, ethyl acetate, butyl acetate, ethyl lactate, or 2-acetoxy-1-methoxypropane); an alcoholic solvent (for example, methanol, ethanol, n-propanol, isopropanol, n-butanol, n-octanol, or 1-methoxy-2-propanol); a ketone solvent (for example, acetone, methyl ethyl ketone, cyclopentanone, cyclohexanone, or isobutyl methyl ketone); an ether solvent (for example, diethyl ether, dibutyl ether, tetrahydrofuran, or 1,4-dioxane); an amide solvent (for example, N,N-dimethylformamide, N,N-dimethylacetoamide, or 1-methyl-2-pyrrolidinone); a sulfur-containing solvent (for example, dimethyl sulfoxide or sulfolane); a nitrile solvent (for example, acetonitrile or propionitrile); and water. In particular, ester solvents, alcoholic solvents, and ketone solvents are particularly preferred. The solvent may be used singly or in combination of two or more thereof. The amount of the solvent used is preferably from 1 to 10 times the weight of monomer, and is most preferably from 2 to 5 times the weight of monomer.

In the second embodiment, the alkali-soluble resin after polymerization is preferably reprecipitated to remove low-molecular-weight components such as residual monomers and oligomers that has not polymerized. As a result of the reprecipitation, the residual low-molecular-weight components are removed and the storage stability of the black curable composition is further improved. The solvent used in the reprecipitation is not particularly restricted as long as the solvent does not dissolve the polymer (alkali-soluble resin (S) obtained by polymerization), and water, alcoholic solvents and hydrocarbon solvents are preferred. The amount of the solvent used in the reprecipitation is preferably from 1 to 20 times the weight of the polymerization solution, and is more preferably from 2 to 10 times the weight of the polymerization solution.

In the third embodiment, in the alkali-soluble resin, the amount of residual monomer in the resin is preferably 10% by mass or less, more preferably 5% by mass or less, and most preferably 2% by mass or less. Thereby, the storage stability is improved. As methods of reducing the amount of residual monomer, (1) purification by reprecipitation and (2) additional addition of a radical polymerization initiator (performed after initial addition) can be mentioned, and the purification by reprecipitation is preferable due to its effectiveness in removal of the residual monomer. The solvent used when the reprecipitation is conducted is not particularly restricted as long as the solvent does not dissolve the polymer, and water, alcoholic solvents and hydrocarbon solvents are preferred. The amount of the solvent used in the reprecipitation is preferably from 1 part by mass to 20 times the weight of the polymerization solution, and more preferably from 2 to 10 times the weight of the polymerization solution. When a radical polymerization initiator is additionally added, the amount of the radical polymerization initiator is, with respect to 100 parts by mass of the resin, preferably from 0.01 to 10 parts by mass and most preferably from 0.05 to 5 parts by mass.

In the second and third embodiments, the alkali-soluble resin (S) or (R) is preferably produced by a dropping polymerization method. Thereby, the weight average molecular weight and molecular weight distribution of the resin may be appropriately controlled (in the second embodiment, the adhesion of the black curable composition to a substrate is improved). Furthermore, when the alkali-soluble resin (S) or (R) is produced, abrupt heat generation caused by runaway polymerization is inhibited from occurring, and therefore stable production can be realized.

The dropping time of the monomer solution during the dropping polymerization method is preferably from 1 to 24 hours and most preferably from 2 to 12 hours. When the dropping time is adjusted to be within the range, the molecular weight can be easily controlled and productivity can be improved.

The amount of the alkali-soluble resin (S) or (R) to be added into the black curable composition of the second or third embodiment is preferably 5 to 90% by mass, and more preferably 10 to 60% by mass, with respect to the total solid content of the black curable composition. When the amount of the alkali-soluble resin (S) or (R) is 5% by mass or more, decrease in film strength is suppressed. When the amount of the alkali-soluble resin (S) or (R) is 90% by mass or less, the amount of acid component is suppressed and solubility can be easily controlled, and furthermore, sufficient image density is obtained because decrease in pigment amount is relatively suppressed. An excellent coating film can be obtained in a high yield ratio particularly when coated by slit coating, which is suitable for coating on a wide substrate having a large area.

In order to improve crosslinking efficiency of the black curable composition in the invention, an alkali-soluble resin having a polymerizable group may be used singly or in a combination with an alkali-soluble resin not having a polymerizable group. As such an alkali-soluble resin having a polymerizable group, a polymer containing at least one of an aryl group, a (meth)acrylic group or an aryloxyalkyl group in a side chain is useful.

The alkali-soluble resin having a polymerizable group can be developed with an alkali developer and has photo-setting property and thermosetting property.

Examples of the "alkali-soluble resin having a polymerizable group" having such features (polymerizable group-containing alkali-soluble resin) are described below. However, the polymerizable group-containing alkali-soluble resin is not restricted to those described below as long as it contains an alkali-soluble group such as a COOH group or an OH group, and a group having a carbon-carbon unsaturated bond, which is a polymerizable group.
(1) A urethane-modified acrylic resin containing a polymerizable group, which is obtained by allowing an acrylic resin having a carboxyl group to react with a compound which has at least one (meth)acryloyl group and in which isocyanate groups and OH groups have been previously reacted with each other to leave one unreacted isocyanate group;
(2) a polymerizable group-containing acrylic resin obtained by allowing an acrylic resin containing a carboxyl group to react with a compound having both an epoxy group and a polymerizable double bond in a molecule thereof;
(3) an acid-pendant epoxy acrylate resin; and
(4) a polymerizable group-containing acrylic resin obtained by allowing an acrylic resin containing a OH group to react with a dibasic acid anhydride having a polymerizable double bond.

In particular, the resin of (1) or (2) is particularly preferred.

A specific example is a compound obtained by allowing a compound having an epoxy ring have reactivity with a OH group and having an unsaturated carbon-carbon bond (for example, glycidyl acrylate), to react with a copolymer of a monomer having a OH group (for example, 2-hydroxyethyl acrylate), a monomer having a COOH group (for example, methacrylic acid), and a monomer copolymerizable therwith (such as an acrylic or vinyl compound). Other than the epoxy ring, a compound having an acid anhydride, an isocyanate group, or an acryloyl group is also usable for the reaction with the OH group. Furthermore, a reaction product obtained by allowing a saturated or unsaturated polybasic acid anhydride to react with a compound obtained by reacting an unsaturated carboxylic acid such as acrylic acid with a compound having an epoxy ring, which is described in JP-A Nos. 6-102669 and 6-1938 may be used. Examples of a compound having both an alkali-solubilizing group, such as a COOH group, and an unsaturated carbon-carbon group include DIANAL NR (trade name, manufactured by Mitsubishi Rayon Co., Ltd.); PHOTOMER 6173 (trade name, manufactured by Diamond Shamrock Co., Ltd, COOH group-containing polyurethane acrylic oligomer); BISCOAT R-264 and KS RESIST 106 (trade name, manufactured by Osaka Organic Chemical Industries, Ltd.); CYCLOMER P and PRAXEL CF 200 (trade name, manufactured by Daicel Chemical Industries, Ltd.); and EBECRYL 3800 (trade name, manufactured by Daicel-UCB Co., Ltd.).

### (C) Solvent

The second or third black curable composition contains at least one solvent as a solvent of (C2) or (C3). The following description of solvent is commonly applied to the second and third embodiments. The solvent of (C2) or (C3) may be a liquid selected from organic solvents described below. The solvent may be selected considering the solubility of the respective components contained in a pigment dispersion liquid, such as the titanium black dispersion liquid, and the coating properties when used in the curable composition. The solvent is basically not particularly restricted as long as it satisfies desired properties, and is preferably selected in consideration of safety.

Preferable specific examples of the solvent include esters, for example, ethyl acetate, n-butyl acetate, isobutyl acetate, amyl formate, isoamyl acetate, butyl propionate, isopropyl butyrate, ethyl butyrate, butyl butyrate, methyl oxyacetate, ethyl oxyacetate, butyl oxyacetate, methyl methoxyacetate, ethyl methoxyacetate, butyl methoxyacetate, methyl ethoxyacetate, ethyl ethoxyacetate, methyl 3-oxypropionate, ethyl 3-oxypropionate, methyl 3-methoxypropionate, ethyl 3-methoxypropionate, methyl 3-ethoxypropionate, ethyl 3-ethoxypropionate, methyl 2-oxypropionate, ethyl 2-oxypropionate, propyl 2-oxypropionate, methyl 2-methoxypropionate, ethyl 2-methoxypropionate, propyl 2-methoxypropionate, methyl 2-ethoxypropionate, ethyl 2-ethoxypropionate, methyl 2-oxy-2-methylpropionate, ethyl 2-oxy-2-methylpropionate, methyl 2-methoxy-2-methylpropionate, ethyl 2-ethoxy-2-methylpropionate, methyl pyruvate, ethyl pyruvate, propyl pyruvate, methyl acetoacetate, ethyl acetoacetate, methyl 2-oxobutanoate, and ethyl 2-oxobutanoate;
ethers, for example, diethyleneglycol dimethyl ether, tetrahydrofuran, ethyleneglycol monomethyl ether, ethyleneglycol monoethyl ether, methyl cellosolve acetate (ethyleneglycol monomethyl ether acetate), ethyl cellosolve acetate (ethyleneglycol monoethyl ether acetate), diethyleneglycol monomethyl ether, diethyleneglycol monoethyl ether, diethyleneglycol monobutyl ether, diethyleneglycol monoethyl ether acetate, diethyleneglycol monobutyl ether acetate, propyleneglycol methyl ether, propyleneglycol monomethyl ether acetate, propyleneglycol ethyl ether acetate, and propyleneglycol propyl ether acetate; ketones, for example, methyl ethyl ketone, cyclohexanone, 2-heptanone, and 3-heptanone; and aromatic hydrocarbons, for example, toluene and xylene.

In particular, methyl 3-ethoxypropionate, ethyl 3-ethoxypropionate, ethyl cellosolve acetate, ethyl lactate, diethyleneglycol dimethyl ether, butyl acetate, methyl 3-methoxypropionate, 2-heptanone, cyclohexanone, diethyleneglycol monoethyl ether acetate, diethyleneglycol monobutyl ether acetate, propyleneglycol methyl ether, and propyleneglycol monomethyl ether acetate (PGMEA) are more preferred.

The content of the solvent of (C2) or (C3) in the black curable composition of the second or third embodiment is preferably from 2 to 90% by mass, more preferably from 2 to 80% by mass, and most preferably from 5 to 70% by mass, with respect to the total solid content of the black curable composition.

When a photopolymerization initiator and a compound having an ethylenic unsaturated double bond are further added to the pigment dispersion liquid of the invention, a black curable composition having excellent resolution, coloring properties, coating properties, and developability can be provided.

### <(C1) Photopolymerization Initiator, (D2) Photopolymerization Initiator, and (D3) Photopolymerization Initiator>

The polymerizable composition of the first embodiment includes (C1) an oxime photopolymerization initiator. The black curable composition of the second embodiment includes (D2) an oxime photopolymerization initiator. The black curable composition of the third embodiment includes (D3) an oxime photopolymerization initiator.

The oxime photopolymerization initiator of the first, second, or third embodiment is decomposed by light, thereby initiating and accelerating polymerization of the compound of (B1), (E2), or (E3) having an ethylenic unsaturated double bond. The photopolymerization initiator preferably has an absorption in the wavelength region of from 300 nm to 500 nm.
The photopolymerization initiator may be used singly, or in combination of two or more thereof. The following description of the photopolymerization initiator is common to the first to third embodiments unless otherwise specified.

Examples of the photopolymerization initiator of (CI), (D2), or (D3) include

Examples of the oxime ester compounds include compounds described in J.C.S. Perkin II (1979) 1653-1660. J.C.S. Perkin II (1979) 156-162, Journal of Photopolymer Science and Technology (1995) 202-232, and JP-ANo. 2000-66385; and the compounds described in JP-A No. 2000-80068 and Japanese Patent Application National Publication (Laid-Open) No. 2004-534797.

Among oxime compounds such as oxime ester compounds, a compound represented by the following Formula (3) is more preferable in view of sensitivity, stability over time, and coloring at the time of post-heating.

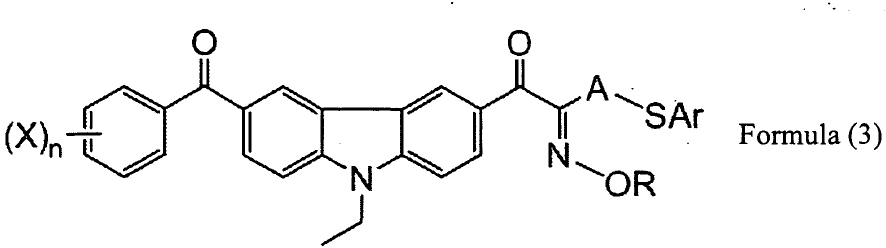

In Formula (3), R and X each independently represent a monovalent substituent, A represents a divalent organic group, Ar represents an aryl group, and n represents an integer of from 1 to 5.

The monovalent substituent represented by R is preferably a monovalent nonmetallic atom group, which may be selected from those described below.

Examples of the monovalent nonmetallic atom group represented by R include an alkyl group which may have a substituent, an aryl group which may have a substituent, an alkenyl group which may have a substituent, an alkynyl group which may have a substituent, an alkylsulfinyl group which may have a substituent, an arylsulfinyl group which may have a substituent, an alkylsulfonyl group which may have a substituent, an arylsulfonyl group which may have a substituent, an acyl group which may have a substituent, an alkoxycarbonyl group which may have a substituent, an aryloxycarbonyl group which may have a substituent, a phosphinoyl group which may have a substituent, a heterocyclic group which may have a substituent, an alkylthiocarbonyl group which may have a substituent, an arylthiocarbonyl group which may have a substituent, a dialkylaminocarbonyl group which may have a substituent, and a dialkylaminothiocarbonyl group which may have a substituent.

The alkyl group which may have a substituent is preferably an alkyl group having 1 to 30 carbon atoms, and examples thereof include a methyl group, an ethyl group, a propyl group, a butyl group, a hexyl group, an octyl group, a decyl group, a dodecyl group, an octadecyl grouop, an isopropyl group, an isobutyl group, a sec-butyl group, a tert-butyl group, a 1-ethylpentyl group, a cyclopentyl group, a cyclohexyl group, a trifluoromethyl grouop, a 2-ethylhexyl group, a phenacyl group, a 1-naphthoylmethyl group, a 2-naphthoylmethyl group, a 4-methylsulfanylphenacyl group, a 4-phenylsulfanylphenacyl group, a 4-dimethylaminophenacyl group, a 4-cyanophenacyl group, a 4-methylphenacyl group, a 2-methylphenacyl group, a 3-fluorophenacyl group, a 3-trifluoromethylphenacyl group, and a 3-nitrophenacyl group.

The aryl group which may have a substituent is preferably an aryl group having 6 to 30 carbon atoms, and examples thereof include a phenyl group, a biphenyl group, a 1-naphthyl group, a 2-naphthyl group, a 9-anthryl group, a 9-phenanthryl group, a 1-pyrenyl group, a 5-naphthacenyl group, a 1-indenyl group, a 2-azulenyl group, a 9-fluorenyl group, a terphenyl group, a quarterphenyl group, an o-tolyl group, a m-tolyl group, a p-tolyl group, a xylyl group, an o-cumenyl group, a m-cumenyl group, a p-cumenyl group, a mesityl group, a pentalenyl group, a binaphthalenyl group, a ternaphthalenyl group, a quarternaphthalenyl group, a heptalenyl group, a biphenylenyl group, an indacenyl group, a fluoranthenyl group, an acenaphthylenyl group, an aceanthrylenyl group, a phenalenyl group, a fluorenyl group, an anthryl group, a bianthracenyl group, a teranthracenyl group, a quarteranthracenyl group, an anthraquinonyl group, a phenanthryl group, a triphenylenyl group, a pyrenyl group, a chrysenyl group, a naphthacenyl group, a pleiadenyl group, a picenyl group, a perylenyl group, a pentaphenyl group, a pentacenyl group, a tetraphenylenyl group, a hexaphenyl group, a hexacenyl group, a rubicenyl group, a coronenyl group, a trinaphthylenyl group, a heptaphenyl group, a heptacenyl group, a pyranthrenyl group, and an ovalenyl group.

The alkenyl group which may have a substituent is preferably an alkenyl group having 2 to 10 carbon atoms, and examples thereof include a vinyl group, an allyl group, and a styryl group.

The alkynyl group which may have a substituent is preferably an alkynyl group having 2 to 10 carbon atoms, and examples thereof include an ethynyl group, a propynyl group, and a propargyl group.

The alkylsulfinyl group which may have a substituent is preferably an alkylsulfinyl group having 1 to 20 carbon atoms, and examples thereof include a methylsulfinyl group, an ethylsulfmyl group, a propylsulfinyl group, an isopropylsulfinyl group, a butylsulfinyl group, a hexylsulfinyl group, a cyclohexylsulfinyl group, an octylsulfinyl group, a 2-ethylhexylsulfinyl group, a decanoylsulfinyl group, a dodecanoylsulfinyl group, an octadecanoylsulfinyl group, a cyanomethylsulfinyl group, and a methoxymethylsulfinyl group.

The arylsulfinyl group which may have a substituent is preferably an arylsulfinyl group having 6 to 30 carbon atoms, and examples thereof include a phenylsulfinyl group, a 1-naphthylsulfinyl group, a 2-naphthylsulfinyl group, a 2-chlorophenylsulfinyl group, a 2-methylphenylsulfinyl group, a 2-methoxyphenylsulfinyl group, a 2-butoxyphenylsulfinyl group, a 3-chlorophenylsulfinyl group, a 3-trifluoromethylphenylsulfinyl group, a 3-cyanophenylsulfinyl group, a 3-nitrophenylsulfinyl group, a 4-fluorophenylsulfinyl group, a 4-cyanophenylsulfinyl group, a 4-methoxyphenylsulfinyl group, a 4-methylsulfanylphenylsulfinyl group, a 4-phenylsulfanylphenylsulfinyl group, and a 4-dimethylaminophenylsulfinyl group.

The alkylsulfonyl group which may have a substituent is preferably an alkylsulfonyl group having 1 to 20 carbon atoms, and examples thereof include a methylsulfonyl group, an ethylsulfonyl group, a propylsulfonyl group, an isopropylsulfonyl group, a butylsulfonyl group, a hexylsulfonyl group, a cyclohexylsulfonyl group, an octylsulfonyl group, a 2-ethylhexylsulfonyl group, a decanoylsulfonyl group, a dodecanoylsulfonyl group, an octadecanoylsulfonyl group, a cyanomethylsulfonyl group, a methoxymethylsulfonyl group, and a perfluoroalkylsulfonyl group.

The arylsulfonyl group which may have a substituent is preferably an arylsulfonyl group having 6 to 30 carbon atoms, and examples thereof include a phenylsulfonyl group, a 1-naphthylsulfonyl group, a 2-naphthylsulfonyl group, a 2-chlorophenylsulfonyl group, a 2-methylphenylsulfonyl group, a 2-methoxyphenylsulfonyl group, a 2-butoxyphenylsulfonyl group, a 3-chlorophenylsulfonyl group, a 3-trifluoromethylphenylsulfonyl group, a 3-cyanophenylsulfonyl group, a 3-nitrophenylsulfonyl group, a 4-fluorophenylsulfonyl group, a 4-cyanophenylsulfonyl group, a 4-methoxyphenylsulfonyl group, a 4-methylsulfanylphenylsulfonyl group, a 4-phenylsulfanylphenylsulfonyl group, and a 4-dimethylaminophenylsulfonyl group.

The acyl group which may have a substituent is preferably an acyl group having 2 to 20 carbon atoms, and examples thereof include an acetyl group, a propanoyl group, a butanoyl group, a trifluoromethylcarbonyl group, a pentanoyl group, a benzoyl group, a 1-naphthoyl group, a 2-naphthoyl group, a 4-methylsulfanylbenzoyl group, a 4-phenylsulfanylbenzoyl group, a 4-dimethylaminobenzoyl group, a 4-diethylaminobenzoyl group, a 2-chlorobenzoyl group, a 2-methylbenzoyl group, a 2-methoxybenzoyl group, a 2-butoxybenzoyl group, a 3-chlorobenzoyl group, a 3-trifluoromethylbenzoyl group, a 3-cyanobenzoyl group, a 3-nitrobenzoyl group, a 4-fluorobenzoyl group, a 4-cyanobenzoyl group, and a 4-methoxybenzoyl group.

The alkoxycarbonyl group which may have a substituent is preferably an alkoxycarbonyl group having 2 to 20 carbon atoms, and examples thereof include a methoxycarbonyl group, an ethoxycarbonyl group, a propoxycarbonyl group, a butoxycarbonyl group, a hexyloxycarbonyl group, an octyloxycarbonyl group, a decyloxycarbonyl group, an octadecyloxycarbonyl group, and a trifluoromethyloxycarbonyl group.

Examples of the aryloxycarbonyl group which may have a substituent include a phenoxycarbonyl group, a 1-naphthyloxycarbonyl group, a 2-naphthyloxycarbonyl group, a 4-methylsulfanylphenyloxycarbonyl group, a 4-phenylsulfanylphenyloxycarbonyl group, a 4-dimethylaminophenyloxycarbonyl group, a 4-diethylaminophenyloxycarbonyl group, a 2-chlorophenyloxycarbonyl group, a 2-methylphenyloxycarbonyl group, a 2-methoxyphenyloxycarbonyl group, a 2-butoxyphenyloxycarbonyl group, a 3-chlorophenyloxycarbonyl group, a 3-trifluoromethylphenyloxycarbonyl group, a 3-cyanophenyloxycarbonyl group, a 3-nitrophenyloxycarbonyl group, a 4-fluorophenyloxycarbonyl group, a 4-cyanophenyloxycarbonyl group, and a 4-methoxyphenyloxycarbonyl group.

The phosphinoyl group which may have a substituent is preferably a phosphinoyl group having 2 to 50 carbon atoms in total, and examples thereof include a dimethylphosphinoyl group, a diethylphosphinoyl group, a dipropylphosphinoyl group, a diphenylphosphinoyl group, a dimethoxyphosphinoyl group, a diethoxyphosphinoyl group, a dibenzoylphosphinoyl group, and a bis(2,4,6-trimethylphenyl)phosphinoyl group.

The heterocyclic group which may have a substituent is preferably an aromatic or aliphatic heterocyclic group containing at least one atom selected from nitrogen, oxygen, sulfur, and phosphorus atoms. Examples thereof include a thienyl group, a benzo[b]thienyl group, a naphtho[2,3-b]thienyl group, a thianthrenyl group, a furyl group, a pyranyl group, an isobenzofuranyl group, a chromenyl group, a xanthenyl group, a phenoxathiinyl group, a 2H-pyrrolyl group, a pyrrolyl group, an imidazolyl group, a pyrazolyl group, a pyridyl group, a pyrazinyl group, a pyrimidinyl group, a pyridazinyl group, an indolizinyl group, an isoindolyl group, a 3H-indolyl group, an indolyl group, a 1H-indazolyl group, a purinyl group, a 4H-quinolizinyl group, an isoquinolyl group, a quinolyl group, a phthalazinyl group, a naphthyridinyl group, a quinoxalinyl group, a quinazolinyl group, a cinnolinyl group, a pteridinyl group, a 4aH-carbazolyl group, a carbazolyl group, a β-carbolinyl group, a phenanthridinyl group, an acrindinyl group, a perimidinyl group, a phenanthrolinyl group, a phenazinyl group, a phenarsazinyl group, an isothiazolyl group, a phenothiazinyl group, an isoxazolyl group, a furazanyl group, a phenoxazinyl group, an isochromanyl group, a chromanyl group, a pyrrolidinyl group, a pyrrolinyl group, an imidazolidinyl group, an imidazolinyl group, a pyrazolidinyl group, a pyrazolinyl group, a piperidyl group, a piperazinyl group, an indolinyl group, an isoindolinyl group, a quinuclidinyl group, a morpholinyl group, and a thioxanthonyl group.

Examples of the alkylthiocarbonyl group which may have a substituent include a methylthiocarbonyl group, a propylthiocarbonyl group, a butylthiocarbonyl group, a hexylthiocarbonyl group, an octylthiocarbonyl group, a decylthiocarbonyl group, an octadecylthiocarbonyl group, and a trifluoromethylthiocarbonyl group.

Examples of the arylthiocarbonyl group which may have a substituent include a 1-naphthylthiocarbonyl group, a 2-naphthylthiocarbonyl group, a 4-methylsulfanylphenylthiocarbonyl group, a 4-phenylsulfanylphenylthiocarbonyl group, a 4-dimethylaminophenylthiocarbonyl group, a 4-diethylaminophenylthiocarbonyl group, a 2-chlorophenylthiocarbonyl group, a 2-methylphenylthiocarbonyl group, a 2-methoxyphenylthiocarbonyl group, a 2-butoxyphenylthiocarbonyl group, a 3-chlorophenylthiocarbonyl group, a 3-trifluoromethylphenylthiocarbonyl group, a 3-cyanophenylthiocarbonyl group, a 3-nitrophenylthiocarbonyl group, a 4-fluorophenylthiocarbonyl group, a 4-cyanophenylthiocarbonyl group, and a 4-methoxyphenylthiocarbonyl group.

Examples of the dialkylaminocarbonyl group which may have a substituent include a dimethylaminocarbonyl group, a diethylaminocarbonyl group, a dipropylaminocarbonyl group, and a dibutylaminocarbonyl group.

Examples of the dialkylaminothiocarbonyl group which may have a substituent include a dimethylaminothiocarbonyl group, a dipropylaminothiocarbonyl group and a dibutylaminothiocarbonyl group.

In order to achieve high sensitivity, R preferably represents an acyl group, and specifically, an acetyl group, a propionyl group, a benzoyl group, or a toluyl group is particularly preferred.

The divalent organic group represented by A may be an alkylene having 1 to 12 carbon atoms which may have a substituent, a cyclohexylene which may have a substituent, or an alkynylene which may have a substituent.

Examples of substituents introducible into these groups include a halogen group such as a fluorine, chlorine, bromine, or iodine atom; an alkoxy group such as a methoxy group, an ethoxy group, or a tert-butoxy group; an aryloxy group such as a phenoxy group or a p-tolyloxy group; an alkoxycarbonyl group such as a methoxycarbonyl group, a butoxycarbonyl group or a phenoxycarbonyl group; an acyloxy group such as an acetoxy group, a propionyloxy group, or a benzoyloxy group; an acyl group such as an acetyl group, a benzoyl group, an isobutyryl group, an acryloyl group, a methacryloyl group, or a methoxalyl group; an alkylsulfanyl group such as a methylsulfanyl group or a tert-butylsulfanyl group; an arylsulfanyl group such as a phenylsulfanyl group or a p-tolylsulfanyl group; an alkylamino group such as a methylamino group or a cyclohexylamino group; a dialkylamino group such as a dimethylamino group, a diethylamino group, a morpholino group, or a piperidino group; an arylamino group such as a phenylamino group or a p-tolylamino group; an alkyl group such as a methyl group, an ethyl group, a tert-butyl group, or a dodecyl group; an aryl group such as a phenyl group, a p-tolyl group, a xylyl group, a cumenyl group, a naphthyl group, an anthryl group, or a phenanthryl group; a hydroxyl group, a carboxyl group, a formyl group, a mercapto group, a sulfo group, a mesyl group, a p-toluenesulfonyl group, an amino group, a nitro group, a cyano group, a trifluoromethyl group, a trichloromethyl group, a trimethylsilyl group, a phosphinico group, a phosphono group, a trimethylammoniumyl group, a dimethylsulfoniumyl group, and a triphenylphenacylphosphoniumyl group.

In particular, A preferably represents an unsubstituted alkylene group, an alkylene group substituted by an alkyl group (such as a methyl group, an ethyl group, a tert-butyl group, or a dodecyl group), an alkylene group substituted by an alkenyl group (such as a vinyl group or an allyl group), or an alkylene group substituted by an aryl group (such as a phenyl group, a p-tolyl group, a xylyl group, a cumenyl group, a naphthyl group, an anthryl group, a phenanthryl group, or a styryl group).

The aryl group represented by Ar preferably has 6 to 30 carbon atoms and may have a substituent.

Examples thereof include a phenyl group, a biphenyl group, a 1-naphthyl group, a 2-naphthyl group, a 9-anthryl group, a 9-phenanthryl group, a 1-pyrenyl group, a 5-naphthacenyl group, a 1-indenyl group, a 2-azulenyl group, a 9-fluorenyl group, a terphenyl group, a quarterphenyl group, an o-tolyl group, a m-tolyl group, a p-tolyl group, a xylyl group, an o-cumenyl group, a m-cumenyl group, a p-cumenyl group, a mesityl group, a pentalenyl group, a binaphthalenyl group, a ternaphthalenyl group, a quarternaphthalenyl group, a heptalenyl group, a biphenylenyl group, an indacenyl group, a fluoranthenyl group, an acenaphthylenyl group, an aceanthrylenyl group, a phenalenyl group, a fluorenyl group, an anthryl group, a bianthracenyl group, a teranthracenyl group, a quarteranthracenyl group, an anthraquinonyl group, a phenanthryl group, a triphenylenyl group, a pyrenyl group, a chrysenyl group, a naphthacenyl group, a pleiadenyl group, a picenyl group, a perylenyl group, a pentaphenyl group, a pentacenyl group, a tetraphenylenyl group, a hexaphenyl group, a hexacenyl group, a rubicenyl group, a coronenyl group, a trinaphthylenyl group, a heptaphenyl group, a heptacenyl group, a pyranthrenyl group, and an ovalenyl group. In particular, a substituted or unsubstituted phenyl group is preferred in terms of heightening sensitivity and/or suppressing coloration caused by heating over time.

When the phenyl group has a substituent, examples of the substituent include a halogen group such as a fluorine, chlorine, bromine, or iodine atom; an alkoxy group such as a methoxy group, an ethoxy group, or a tert-butoxy group; an aryloxy group such as a phenoxy group or a p-tolyloxy group; an alkylthioxy group such as a methylthioxy group, an ethylthioxy group or a tert-butylthioxy group; an arylthioxy group such as a phenylthioxy group or a p-tolylthioxy group; an alkoxycarbonyl group such as a methoxycarbonyl group, a butoxycarbonyl group or a phenoxycarbonyl group; an acyloxy group such as an acetoxy group, a propionyloxy group or a benzoyloxy group; an acyl group such as an acetyl group, a benzoyl group, an isobutyryl group, an acryloyl group, a methacryloyl group, or a methoxalyl group; an alkylsulfanyl group such as a methylsulfanyl group or a tert-butylsulfanyl group; an arylsulfanyl group such as a phenylsulfanyl group or a p-tolylsulfanyl group; an alkylamino group such as a methylamino group or a cyclohexylamino group; a dialkylamino group such as a dimethylamino group, a diethylamino group, a morpholino group, or a piperidino group; an arylamino group such as a phenylamino group or a p-tolylamino group; an alkyl group such as an ethyl group, a tert-butyl group or a dodecyl group; a hydroxyl group, a carboxyl group, a formyl group, a mercapto group, a sulfo group, a mesyl group, a p-toluenesulfonyl group, an amino group, a nitro group, a cyano group, a trifluoromethy group, a trichloromethyl group, a trimethylsilyl group, a phosphinico group, a phosphono group, a trimethylammoniumyl group, a dimethylsulfoniumyl group, or a triphenylphenacylphosphoniumyl group.

In Formula (3), the SAr structure composed of the substituent Ar and the adjacent S is preferably any of the structures shown below, in view of sensitivity.

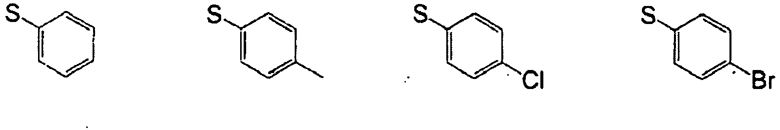

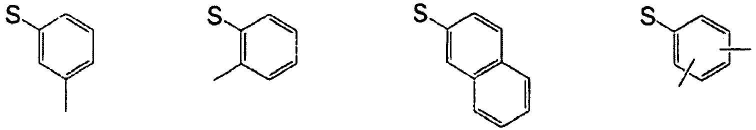

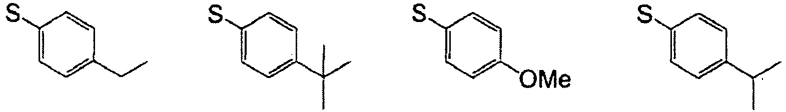

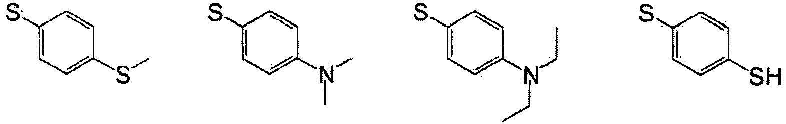

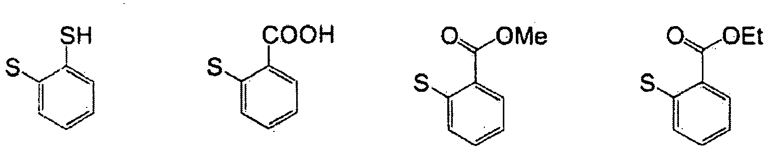

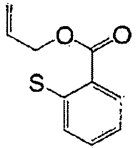

The monovalent substituent represented by X may be, for example, an alkyl group which may have a substituent, an aryl group which may have a substituent, an alkenyl group which may have a substituent, an alkynyl group which may have a substituent, an alkoxy group which may have a substituent, an aryloxy group which may have a substituent, an alkylthioxy group which may have a substituent, an arylthioxy group which may have a substituent, an acyloxy group which may have a substituent, an alkylsulfanyl group which may have a substituent, an arylsulfanyl group which may have a substituent, an alkylsulfinyl group which may have a substituent, an arylsulfinyl group which may have a substituent, an alkylsulfonyl group which may have a substituent, an arylsulfonyl group which may have a substituent, an acyl group which may have a substituent, an alkoxycarbonyl group which may have a substituent, a carbamoyl group which may have a substituent, a sulfamoyl group which may have a substituent, an amino group which may have a substituent, a phosphinoyl group which may have a substituent, a heterocyclic group which may have a substituent, or a halogen group.

The alkyl group which may have a substituent is preferably an alkyl group having 1 to 30 carbon atoms, and examples thereof include a methyl group, an ethyl group, a propyl group, a butyl group, a hexyl group, an octyl group, a decyl group, a dodecyl group, an octadecyl group, an isopropyl group, an isobutyl group, a sec-butyl group, a tert-butyl group, a 1-ethylpentyl group, a cyclopentyl group, a cyclohexyl group, a trifluoromethyl group, a 2-ethylhexyl group, a phenacyl group, a 1-naphthoylmethyl group, a 2-naphthoylmethyl group, a 4-methylsulfanylphenacyl group, a 4-phenylsulfanylphenacyl group, a 4-dimethylaminophenacyl group, a 4-cyanophenacyl group, a 4-methylphenacyl group, a 2-methylphenacyl group, a 3-fluorophenacyl group, a 3-trifluoromethylphenacyl group, and a 3-nitrophenacyl group.

The aryl group which may have a substituent is preferably an aryl group having 6 to 30 carbon atoms, and examples thereof include a phenyl group, a biphenyl group, a 1-naphthyl group, a 2-naphthyl group, a 9-anthryl group, a 9-phenanthryl group, a 1-pyrenyl group, a 5-naphthacenyl group, a 1-indenyl group, a 2-azulenyl group, a 9-fluorenyl group, a terphenyl group, a quarterphenyl group, an o-tolyl group, a m-tolyl group, a p-tolyl group, a xylyl group, an o-cumenyl group, a m-cumenyl group, a p-cumenyl group, a mesityl group, a pentalenyl group, a binaphthalenyl group, a ternaphthalenyl group, a quarternaphthalenyl group, a heptalenyl group, a biphenylenyl group, an indacenyl group, a fluoranthenyl group, an acenaphthylenyl group, an aceanthrylenyl group, a phenalenyl group, a fluorenyl group, an anthryl group, a bianthracenyl group, a teranthracenyl group, a quarteranthracenyl group, an anthraquinonyl group, a phenanthryl group, a triphenylenyl group, a pyrenyl group, a chrysenyl group, a naphthacenyl group, a pleiadenyl group, a picenyl group, a perylenyl group, a pentaphenyl group, a pentacenyl group, a tetraphenylenyl group, a hexaphenyl group, a hexacenyl group, a rubicenyl group, a coronenyl group, a trinaphthylenyl group, a heptaphenyl group, a heptacenyl group, a pyranthrenyl group, and an ovalenyl group.

The alkenyl group is preferably an alkenyl group having 2 to 10 carbon atoms, and examples thereof include a vinyl group, an allyl group and a styryl group.

The alkynyl group which may have a substituent is preferably an alkynyl group having 2 to 10 carbon atoms, and examples thereof include an ethynyl group, a propynyl group and a propargyl group.

The alkoxy group which may have a substituent is preferably an alkoxy group having 1 to 30 carbon atoms, and examples thereof include a methoxy group, an ethoxy group, a propyloxy group, an isopropyloxy group, a butoxy group, an isobutoxy group, a sec-butoxy group, a tert-butoxy group, a pentyloxy group, an isopentyloxy group, a hexyloxy group, a heptyloxy group, an octyloxy group, a 2-ethylhexyloxy group, a decyloxy group, a dodecyloxy group, an octadecyloxy group, an ethoxycarbonylmethyl group, a 2-ethylhexyloxycarbonylmethyloxy group, an aminocarbonylmethyloxy group, an N,N-dibutylaminocarbonylmethyloxy group, an N-methylaminocarbonylmethyloxy group, an N-ethylaminocarbonylmethyloxy group, an N-octylaminocarbonylmethyloxy group, an N-methyl-N-benzylaminocarbonylmethyloxy group, a benzyloxy group, and a cyanomethyloxy group.

The aryloxy group which may have a substituent is preferably an aryloxy group having 6 to 30 carbon atoms, and examples thereof include a phenyloxy group, a 1-naphthyloxy group, a 2-naphthyloxy group, a 2-chlorophenyloxy group, a 2-methylphenyloxy group, a 2-methoxyphenyloxy group, a 2-butoxyphenyloxy group, a 3-chlorophenyloxy group, a 3-trifluoromethylphenyloxy group, a 3-cyanophenyloxy group, a 3-nitrophenyloxy group, a 4-fluorophenyloxy group, a 4-cyanophenyloxy group, a 4-methoxyphenyloxy group, a 4-dimethylaminophenyloxy group, a 4-methylsulfanylphenyloxy group, and a 4-phenylsulfanylphenyloxy group.

The alkylthioxy group which may have a substituent is preferably a thioalkoxy group having 1 to 30 carbon atoms, and examples thereof include a methylthioxy group, an ethylthioxy group, a propylthioxy group, an isopropylthioxy group, a butylthioxy group, an isobutylthioxy group, a sec-butylthioxy group, a tert-butylthioxy group, a pentylthioxy group, an isopentylthioxy group, a hexylthioxy group, a heptylthioxy group, an octylthioxy group, a 2-ethylhexylthioxy group, a decylthioxy group, a dodecylthioxy group, an octadecylthioxy group, and a benzylthioxy group.

The arylthioxy group which may have a substituent is preferably an arylthioxy group having 6 to 30 carbon atoms, and examples thereof include a phenylthioxy group, a 1 -naphthylthioxy group, a 2-naphthylthioxy group, a 2-chlorophenylthioxy group, a 2-methylphenylthioxy group, a 2-methoxyphenylthioxy group, a 2-butoxyphenylthioxy group, a 3-chlorophenylthioxy group, a 3-trifluoromethylphenylthioxy group, a 3-cyanophenylthioxy group, a 3-nitrophenylthioxy group, a 4-fluorophenylthioxy group, a 4-cyanophenylthioxy group, a 4-methoxyphenylthioxy group, a 4-dimethylaminophenylthioxy group, a 4-methylsulfanylphenylthioxy group, and a 4-phenylsulfanylphenylthioxy group.

The acyloxy group which may have a substituent is preferably an acyloxy group having 2 to 20 carbon atoms, and examples thereof include an acetyloxy group, a propanoyloxy group, a butanoyloxy group, a pentanoyloxy group, a trifluoromethylcarbonyloxy group, a benzoyloxy group, a 1-naphthylcarbonyloxy group, and a 2-naphthylcarbonyloxy group.

The alkylsulfanyl group which may have a substituent is preferably an alkylsulfanyl group having 1 to 20 carbon atoms, and examples thereof include a methylsulfanyl group, an ethylsulfanyl group, a propylsulfanyl group, an isopropylsulfanyl group, a butylsulfanyl group, a hexylsulfanyl group, a cyclohexylsulfanyl group, an octylsulfanyl group, a 2-ethylhexylsulfanyl group, a decanoylsulfanyl group, a dodecanoylsulfanyl group, an octadecanoylsulfanyl group, a cyanomethylsulfanyl group, and a methoxymethylsulfanyl group.

The arylsulfanyl group which may have a substituent is preferably an arylsulfanyl group having 6 to 30 carbon atoms, and examples thereof include a phenylsulfanyl group, a 1-naphthylsulfanyl group, a 2-naphthylsulfanyl group, a 2-chlorophenylsulfanyl group, a 2-methylphenylsulfanyl group, a 2-methoxyphenylsulfanyl group, a 2-butoxyphenylsulfanyl group, a 3-chlorophenylsulfanyl group, a 3-trifluoromethylphenylsulfanyl group, a 3-cyanophenylsulfanyl group, a 3-nitrophenylsulfanyl group, a 4-fluorophenylsulfanyl group, a 4-cyanophenylsulfanyl group, a 4-methoxyphenylsulfanyl group, a 4-methylsulfanylphenylsulfanyl group, a 4-phenylsulfanylphenylsulfanyl group, and a 4-dimethylaminophenylsulfanyl group.

The alkylsulfinyl group which may have a substituent is preferably an alkylsulfinyl group having 1 to 20 carbon atoms, and examples thereof include a methylsulfinyl group, an ethylsulfinyl group, a propylsulfinyl group, an isopropylsulfinyl group, a butylsulfinyl group, a hexylsulfinyl group, a cyclohexylsulfinyl group, an octylsulfinyl group, a 2-ethylhexylsulfinyl group, a decanoylsulfmyl group, a dodecanoylsulfinyl group, an octadecanoylsulfinyl group, a cyanomethylsulfinyl group, and a methoxymethylsulfinyl group.

The arylsulfinyl group which may have a substituent is preferably an arylsulfinyl group having 6 to 30 carbon atoms, and examples thereof include a phenylsulfinyl group, a 1-naphthylsulfinyl group, a 2-naphthylsulfinyl group, a 2-chlorophenylsulfinyl group, a 2-methylphenylsulfinyl group, a 2-methoxyphenylsulfinyl group, a 2-butoxyphenylsulfinyl group, a 3-chlorophenylsulfinyl group, a 3-trifluoromethylphenylsulfinyl group, a 3-cyanophenylsulfinyl group, a 3-nitrophenylsulfinyl group, a 4-fluorophenylsulfinyl group, a 4-cyanophenylsulfinyl group, a 4-methoxyphenylsulfinyl group, a 4-methylsulfanylphenylsulfinyl group, a 4-phenylsulfanylphenylsulfinyl group, and a 4-dimethylaminophenylsulfinyl group.

The alkylsulfonyl group which may have a substituent is preferably an alkylsulfonyl group having 1 to 20 carbon atoms, and examples thereof include a methylsulfonyl group, an ethylsulfonyl group, a propylsulfonyl group, an isopropylsulfonyl group, a butylsulfonyl group, a hexylsulfonyl group, a cyclohexylsulfonyl group, an octylsulfonyl group, a 2-ethylhexylsulfonyl group, a decanoylsulfonyl group, a dodecanoylsulfonyl group, an octadecanoylsulfonyl group, a cyanomethylsulfonyl group, and a methoxymethylsulfonyl group.

The arylsulfonyl group which may have a substituent is preferably an arylsulfonyl group having 6 to 30 carbon atoms, and examples thereof include a phenylsulfonyl group, a 1-naphthylsulfonyl group, a 2-naphthylsulfonyl group, a 2-chlorophenylsulfonyl group, a 2-methylphenylsulfonyl group, a 2-methoxyphenylsulfonyl group, a 2-butoxyphenylsulfonyl group, a 3-chlorophenylsulfonyl group, a 3-trifluoromethylphenylsulfonyl group, a 3-cyanophenylsulfonyl group, a 3-nitrophenylsulfonyl group, a 4-fluorophenylsulfonyl group, a 4-cyanophenylsulfonyl group, a 4-methoxyphenylsulfonyl group, a 4-methylsulfanylphenylsulfonyl group, a 4-phenylsulfanylphenylsulfonyl group, and a 4-dimethylaminophenylsulfonyl group.

The acyl group which may have a substituent is preferably an acyl group having 2 to 20 carbon atoms, and examples thereof include an acetyl group, a propanoyl group, a butanoyl group, a trifluoromethylcarbonyl group, a pentanoyl group, a benzoyl group, a 1-naphthoyl group, a 2-naphthoyl group, a 4-methylsulfanylbenzoyl group, a 4-phenylsulfanylbenzoyl group, a 4-dimethylaminobenzoyl group, a 4-diethylaminobenzoyl group, a 2-chlorobenzoyl group, a 2-methylbenzoyl group, a 2-methoxybenzoyl group, a 2-butoxybenzoyl group, a 3-chlorobenzoyl group, a 3-trifluoromethylbenzoyl group, a 3-cyanobenzoyl group, a 3-nitrobenzoyl group, a 4-fluorobenzoyl group, a 4-cyanobenzoyl group, and a 4-methoxybenzoyl group.

The alkoxycarbonyl group which may have a substituent is preferably an alkoxycarbonyl group having 2 to 20 carbon atoms, and examples thereof include a methoxycarbonyl group, an ethoxycarbonyl group, a propoxycarbonyl group, a butoxycarbonyl group, a hexyloxycarbonyl group, an octyloxycarbonyl group, a decyloxycarbonyl group, an octadecyloxycarbonyl group, a phenoxycarbonyl group, a trifluoromethyloxycarbonyl group, a 1-naphthyloxycarbonyl group, a 2-naphthyloxycarbonyl group, a 4-methylsulfanylphenyloxycarbonyl group, a 4-phenylsulfanylphenyloxycarbonyl group, a 4-dimethylaminophenyloxycarbonyl group, a 4-diethylaminophenyloxycarbonyl group, a 2-chlorophenyloxycarbonyl group, a 2-methylphenyloxycarbonyl group, a 2-methoxyphenyloxycarbonyl group, a 2-butoxyphenyloxycarbonyl group, a 3-chlorophenyloxycarbonyl group, a 3-trifluoromethylphenyloxycarbonyl group, a 3-cyanophenyloxycarbonyl group, a 3-nitrophenyloxycarbonyl group, a 4-fluorophenyloxycarbonyl group, a 4-cyanophenyloxycarbonyl group, and a 4-methoxyphenyloxycarbonyl group.

The carbamoyl group which may have a substituent is preferably a carbamoyl group having 1 to 30 carbon atoms in total, and examples thereof include a N-methylcarbamoyl group, an N-ethylcarbamoyl group, an N-propylcarbamoyl group, an N-butylcarbamoyl group, an N-hexylcarbamoyl group, an N-cyclohexylcarbamoyl group, an N-octylcarbamoyl group, an N-decylcarbamoyl group, an N-octadecylcarbamoyl group, an N-phenylcarbamoyl group, an N-2-methylphenylcarbamoyl group, an N-2-chlorophenylcarbamoyl group, an N-2-isopropoxyphenylcarbamoyl group, an N-2-(2-ethylhexyl)phenylcarbamoyl group, an N-3-chlorophenylcarbamoyl group, an N-3-nitrophenylcarbamoyl group, an N-3-cyanophenylcarbamoyl group, an N-4-methoxyphenylcarbamoyl group, an N-4-cyanophenylcarbamoyl group, an N-4-methylsulfanylphenylcarbamoyl group, an N-4-phenylsulfanylphenylcarbamoyl group, an N-methyl-N-phenylcarbamoyl group, an N,N-dimethylcarbamoyl group, an N,N-dibutylcarbamoyl group, and an N,N-diphenylcarbamoyl group.

The sulfamoyl group is preferably a sulfamoyl group having 0 to 30 carbon atoms in total, and examples thereof include a sulfamoyl group, an N-alkylsulfamoyl group, an N-arylsulfamoyl group, an N,N-dialkylsulfamoyl group, an N,N-diarylsulfamoyl group, and an N-alkyl-N-arylsulfamoyl group. More specifically, examples include an N-methylsulfamoyl group, an N-ethylsulfamoyl group, an N-propylsulfamoyl group, an N-butylsulfamoyl group, an N-hexylsulfamoyl group, an N-cyclohexylsulfamoyl group, an N-octylsulfamoyl group, an N-2-ethylhexylsulfamoyl group, an N-decylsulfamoyl group, an N-octadecylsulfamoyl group, an N-phenylsulfamoyl group, an N-2-methylphenylsulfamoyl group, an N-2-chlorophenylsulfamoyl group, an N-2-methoxyphenylsulfamoyl group, an N-2-isopropoxyphenylsulfamoyl group, an N-3-chlorophenylsulfamoyl group, an N-3-nitrophenylsulfamoyl group, an N-3-cyanophenylsulfamoyl group, an N-4-methoxyphenylsulfamoyl group, an N-4-cyanophenylsulfamoyl group, an N-4-dimethylaminophenylsulfamoyl group, an N-4-methylsulfanylphenylsulfamoyl group, an N-4-phenylsulfanylphenylsulfamoyl group, an N-methyl-N-phenylsulfamoyl group, an N,N-dimethylsulfamoyl group, an N,N-dibutylsulfamoyl group, and an N,N-diphenylsulfamoyl group.

The amino group which may have a substituent is preferably an amino group having 0 to 50 carbon atoms in total, and examples thereof include -NH₂, an N-alkylamino group, an N-arylamino group, an N-acylamino group, an N-sulfonylamino group, an N,N-dialkylamino group, an N,N-diarylamino group, an N-alkyl-N-arylamino group, and an N,N-disulfonylamino group. More specifically, examples include an N-methylamino group, an N-ethylamino group, an N-propylamino group, an N-isopropylamino group, an N-butylamino group, an N-tert-butylamino group, an N-hexylamino group, an N-cyclohexylamino group, an N-octylamino group, an N-2-ethylhexylamino group, an N-decylamino group, an N-octadecylamino group, an N-benzylamino group, an N-phenylamino group, an N-2-methylphenylamino group, an N-2-chlorophenylamino group, an N-2-methoxyphenylamino group, an N-2-isopropoxyphenylamino group, an N-2-(2-ethylhexyl)phenylamino group, an N-3-chlorophenylamino group, an N-3-nitrophenylamino group, an N-3-cyanophenylamino group, an N-3-trifluoromethylphenylamino group, an N-4-methoxyphenylamino group, an N-4-cyanophenylamino group, an N-4-trifluoromethylphenylamino group, an N-4-methylsulfanylphenylamino group, an N-4-phenylsulfanylphenylamino group, an N-4-dimethylaminophenylamino group, an N-methyl-N-phenylamino group, an N,N-dimethylamino group, an N,N-diethylamino group, an N,N-dibutylamino group, an N,N-diphenylamino group, an N,N-diacetylamino group, an N,N-dibenzoylamino group, an N,N-(dibutylcarbonyl)amino group, an N,N-(dimethylsulfonyl)amino group, an N,N-(diethylsulfonyl)amino group, an N,N-(dibutylsulfonyl)amino group, an N,N-(diphenylsulfonyl)amino group, a morpholino group, a 3,5-dimethylmorpholino group, and a carbazole group.

The phosphinoyl group which may have a substituent is preferably a phosphinoyl group having 2 to 50 carbon atoms in total, and examples thereof include a dimethylphosphinoyl group, a diethylphosphinoyl group, a dipropylphosphinoyl group, a diphenylphosphinoyl group, a dimethoxyphosphinoyl group, a diethoxyphosphinoyl group, a dibenzoylphosphinoyl group, and a bis(2,4,6-trimethylphenyl)phosphinoyl group.

The heterocyclic group which may have a substituent is preferably an aromatic or aliphatic heterocyclic group containing at least one of a nitrogen atom, an oxygen atom, a sulfur atom, or a phosphorus atom. Examples thereof include a thienyl group, a benzo[b]thienyl group, a naphtho[2,3-b]thienyl group, a thianthrenyl group, a furyl group, a pyranyl group, an isobenzofuranyl group, a chromenyl group, a xanthenyl group, a phenoxathiinyl group, a 2H-pyrrolyl group, a pyrrolyl group, an imidazolyl group, a pyrazolyl group, a pyridyl group, a pyrazinyl group, a pyrimidinyl group, a pyridazinyl group, an indolizinyl group, an isoindolyl group, a 3H-indolyl group, an indolyl group, a 1H-indazolyl group, a purinyl group, a 4H-quinolizinyl group, an isoquinolyl group, a quinolyl group, a phthalazinyl group, a naphthyridinyl group, a quinoxalinyl group, a quinazolinyl group, a cinnolinyl group, a pteridinyl group, a 4aH-carbazolyl group, a carbazolyl group, a β-carbolinyl group, a phenanthridinyl group, an aerindinyl group, a perimidinyl group, a phenanthrolinyl group, a phenazinyl group, a phenarsazinyl group, an isothiazolyl group, a phenothiazinyl group, an isoxazolyl group, a furazanyl group, a phenoxazinyl group, an isochromanyl group, a chromanyl group, a pyrrolidinyl group, a pyrrolinyl group, an imidazolidinyl group, an imidazolinyl group, a pyrazolidinyl group, a pyrazolinyl group, a piperidyl group, a piperazinyl group, an indolinyl group, an isoindolinyl group, a quinuclidinyl group, a morpholinyl group, and a thioxanthonyl group.

The halogen group may be, for example, a fluorine atom, a chlorine atom, a bromine atom, or an iodine atom.

The alkyl group which may have a substituent, aryl group which may have a substituent, alkenyl group which may have a substituent, alkynyl group which may have a substituent, alkoxy group which may have a substituent, aryloxy group which may have a substituent, alkylthioxy group which may have a substituent, arylthioxy group which may have a substituent, acyloxy group which may have a substituent, alkylsulfanyl group which may have a substituent, arylsulfanyl group which may have a substituent, alkylsulfinyl group which may have a substituent, arylsulfinyl group which may have a substituent, alkylsulfonyl group which may have a substituent, arylsulfonyl group which may have a substituent, acyl group which may have a substituent, alkoxycarbonyl group which may have a substituent, carbamoyl group which may have a substituent, sulfamoyl group which may have a substituent, amino group which may have a substituent, or heterocyclic group which may have a substituent may themselves be further substituted by any other substituent.

Examples of such a further substituent include a halogen group such as a fluorine, chlorine, bromine, or iodine atom; an alkoxy group such as a methoxy group, an ethoxy group, or a tert-butoxy group; an aryloxy group such as a phenoxy group or a p-tolyloxy group; an alkoxycarbonyl group such as a methoxycarbonyl group, a butoxycarbonyl group or a phenoxycarbonyl group; an acyloxy group such as an acetoxy group, a propionyloxy group or a benzoyloxy group; an acyl group such as an acetyl group, a benzoyl group, an isobutyryl group, an acryloyl group, a methacryloyl group, or a methoxalyl group; an alkylsulfanyl group such as a methylsulfanyl group or a tert-butylsulfanyl group; an arylsulfanyl group such as a phenylsulfanyl group or a p-tolylsulfanyl group; an alkylamino group such as a methylamino group or a cyclohexylamino group; a dialkylamino group such as a dimethylamino group, a diethylamino group, a morpholino group, or a piperidino group; an arylamino group such as a phenylamino group or a p-tolylamino group; an alkyl group such as a methyl group, an ethyl group, a tert-butyl group or a dodecyl group; an aryl group such as a phenyl group, a p-tolyl group, a xylyl group, a cumenyl group, a naphthyl group, an anthryl group, or a phenanthryl group; a hydroxyl group, a carboxyl group, a formyl group, a mercapto group, a sulfo group, a mesyl group, a p-toluenesulfonyl group, an amino group, a nitro group, a cyano group, a trifluoromethyl group, a trichloromethyl group, a trimethylsilyl group, a phosphinico group, a phosphono group, a trimethylammoniumyl group, a dimethylsulfoniumyl group, or a triphenylphenacylphosphoniumyl group.

Above all, X preferably represents a alkyl group which may have a substituent, an aryl group which may have a substituent, an alkenyl group which may have a substituent, an alkynyl group which may have a substituent, an alkoxy group which may have a substituent, an aryloxy group which may have a substituent, an alkylthioxy group which may have a substituent, an arylthioxy group which may have a substituent, or an amino group which may have a substituent, in terms of improving solubility in solvents and absorption efficiency in a long wavelength region.

In Formula (3), n represents an integer of from 0 to 5, preferably of from 0 to 2.

In the second embodiment, R in Formula (3) may represent, for example, an acyl group having 1 to 20 carbon atoms, a sulfonyl group having 1 to 20 carbon atoms, an alkoxycarbonyl group having 1 to 20 carbon atoms, a carbamoyl group having 1 to 20 carbon atoms, or an alkyl group having 1 to 20 carbon atoms. In particular, an acyl group having 1 to 20 carbon atoms is preferred and an acyl group having 1 to 5 carbon atoms is most preferred, from the viewpoint of adhesiveness to a substrate.

In the second embodiment, in particular, X in Formula (3) may represent, for example, a hydrogen atom, an alkyl group having 1 to 20 carbon atoms, or an amino group having 1 to 20 carbon atoms. In particular, a hydrogen atom and an alkyl group having 1 to 10 carbon atoms are preferred, and an alkyl group having 1 to 5 carbon atoms is smore preferred from the viewpoint of solubility in organic solvents.

In the second embodiment, A in Formula (3) may represent, for example, an alkylene group having 1 to 20 carbon atoms. In particular, an alkylene group having 1 to 10 carbon atoms is preferred, and an alkylene group having 1 to 5 carbon atoms is more preferred, from the viewpoint of adhesiveness to a substrate.

In the third embodiment, X in Formula (3) preferably represents an alkyl group having 1 to 10 carbon atoms or a halogen atom, and most preferably an alkyl group having 1 to 5 carbon atoms. R preferably represents an acyl group having 1 to 20 carbon atoms, and more preferably an acyl group having 1 to 5 carbon atoms. A preferably represents an alkylene group having 1 to 10 carbon atoms, and more preferably an alkylene group having 1 to 5 carbon atoms.

In the second and third embodiments, Ar in Formula (3) may represent, for example, an aryl group having 6 to 30 carbon atoms. From the viewpoint of adhesiveness to a substrate, the number of carbon atoms of Ar is preferably from 6 to 20, and more preferably from 6 to 10. Furthermore, the aryl group is preferably a phenyl group or a halogen-containing aryl group, and most preferably a halogen-containing aryl group.

n is preferably from 1 to 3, and most preferably 1.

Specific examples of the oxime compound include the compounds shown below. However, the examples should not be construed as limiting the present invention.

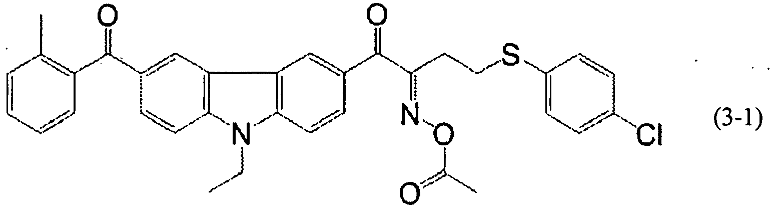

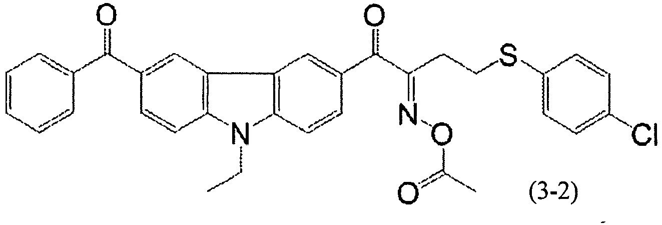

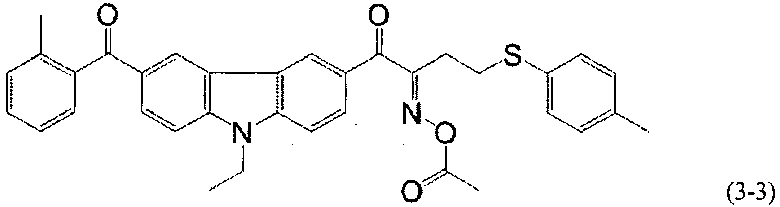

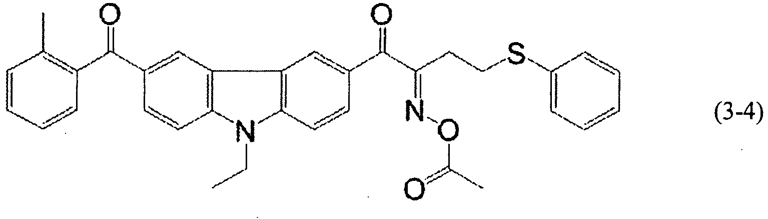

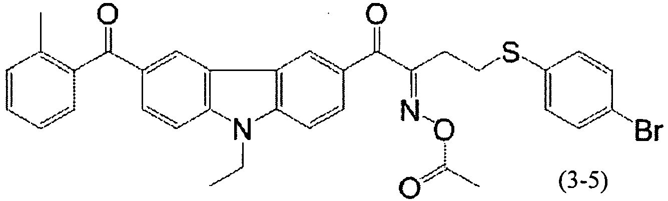

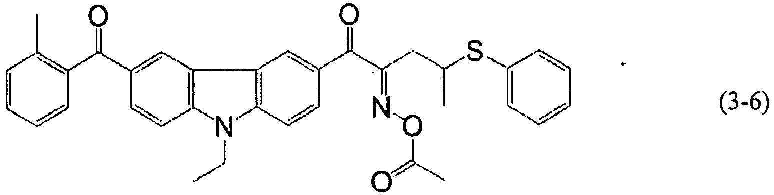

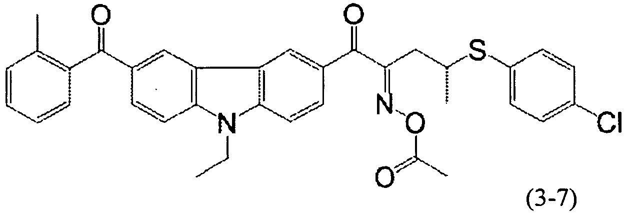

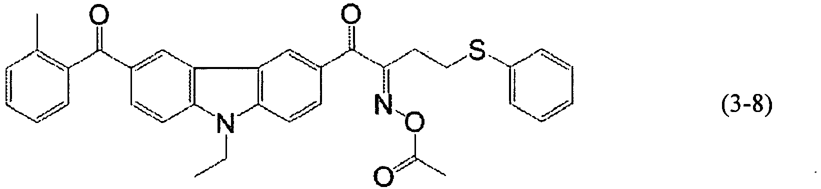

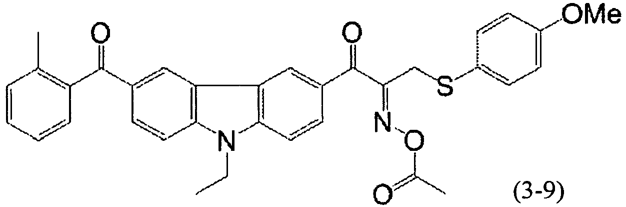

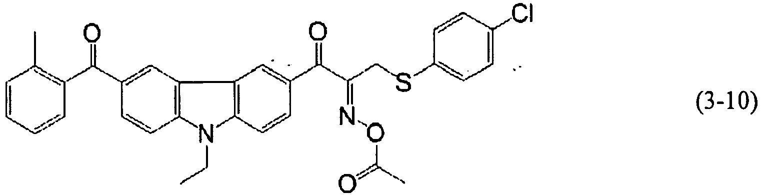

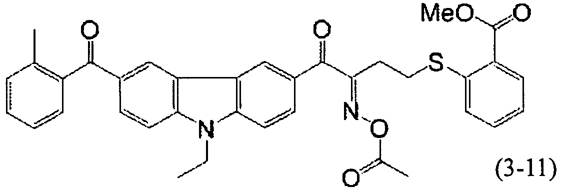

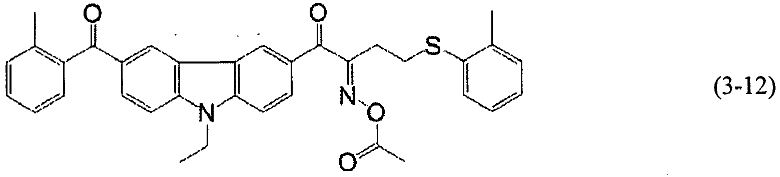

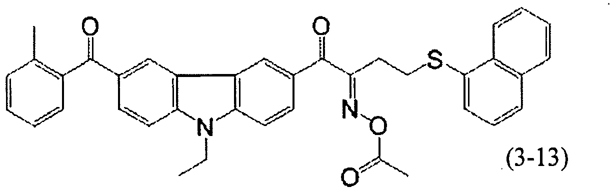

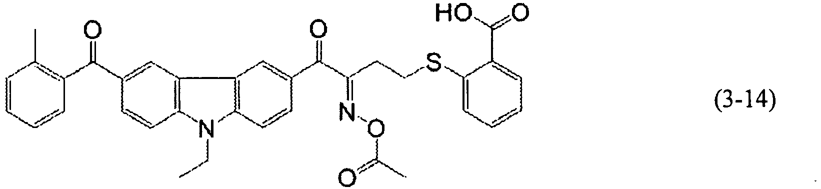

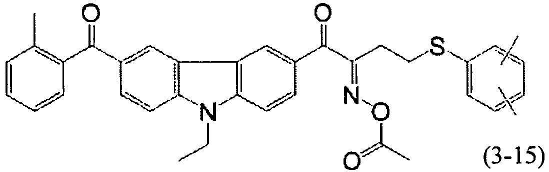

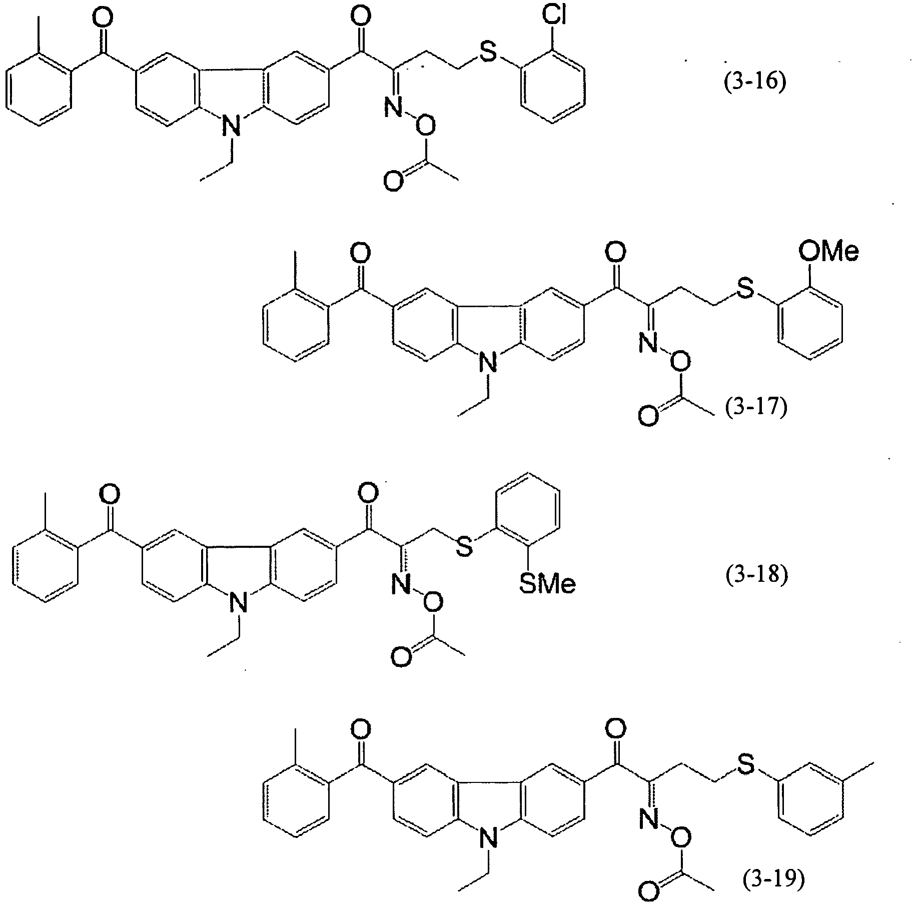

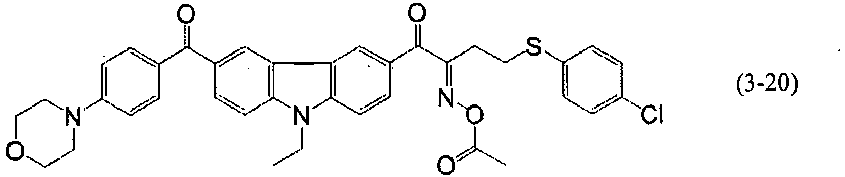

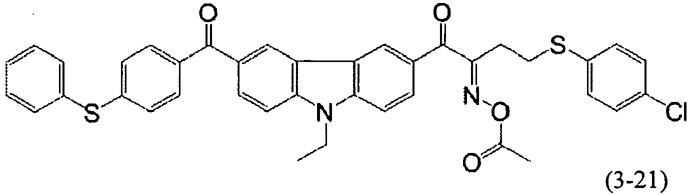

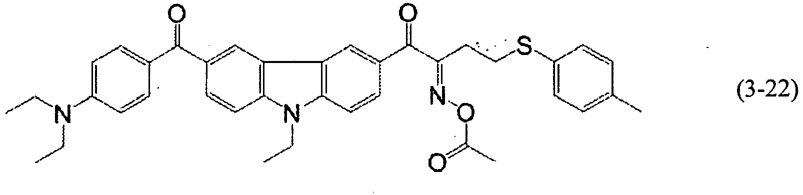

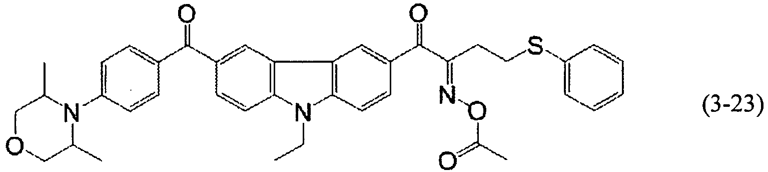

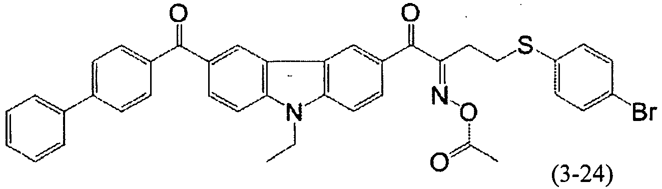

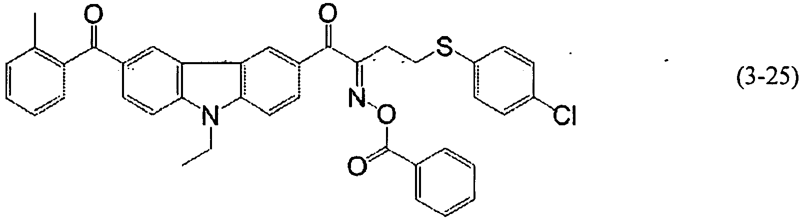

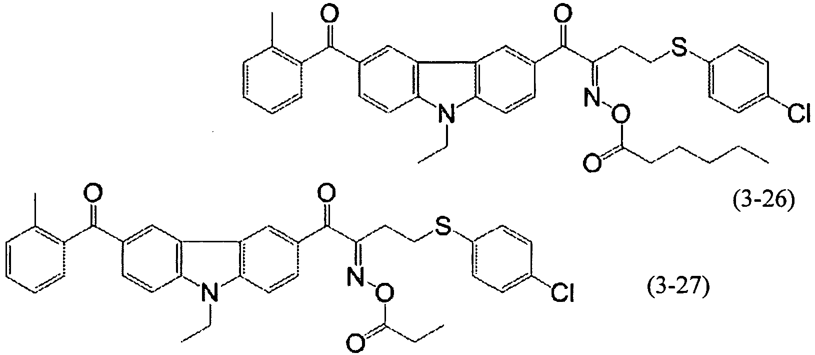

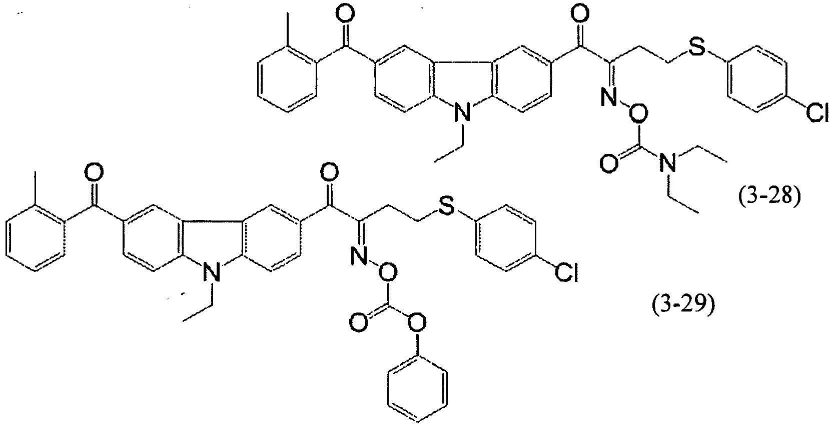

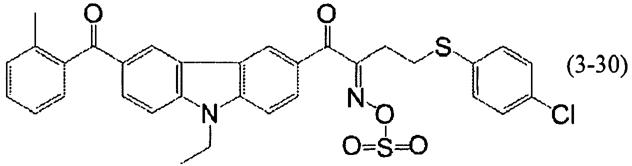

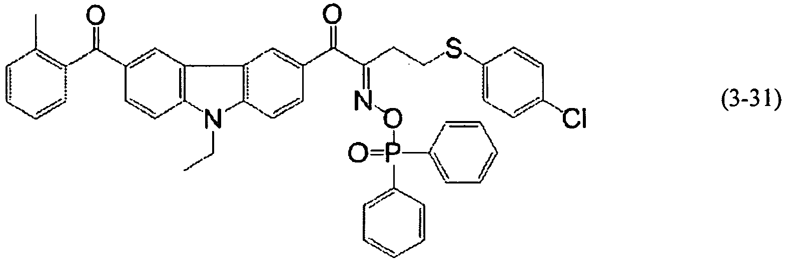

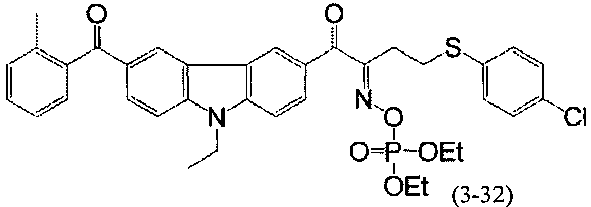

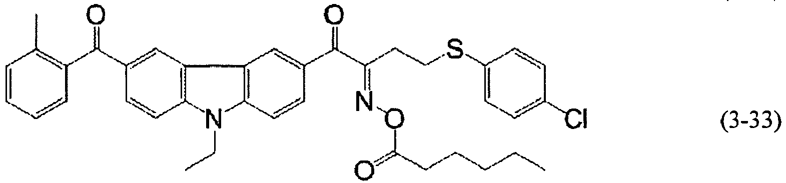

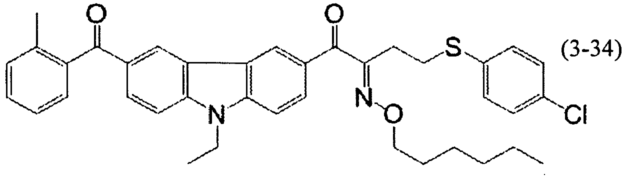

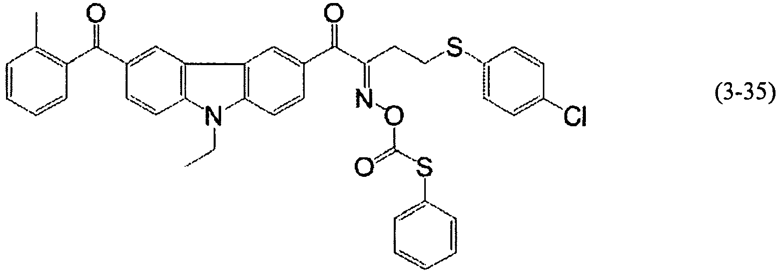

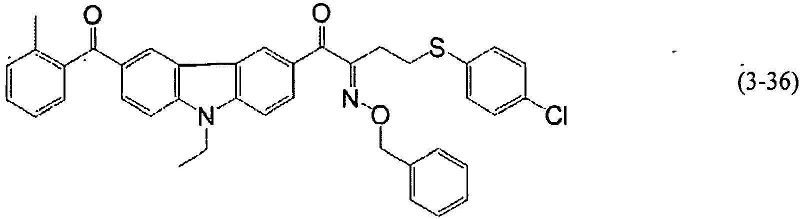

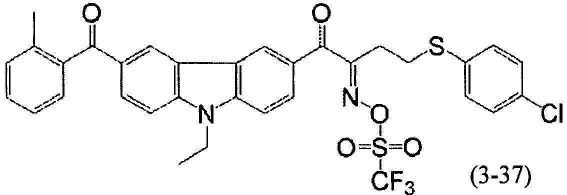

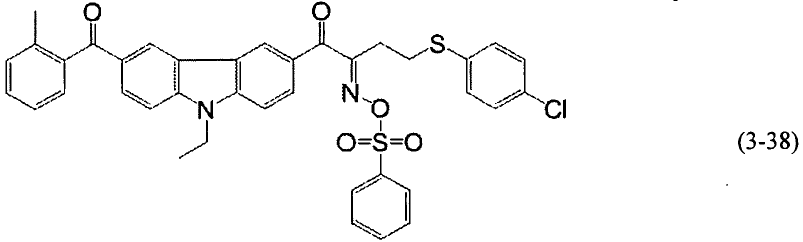

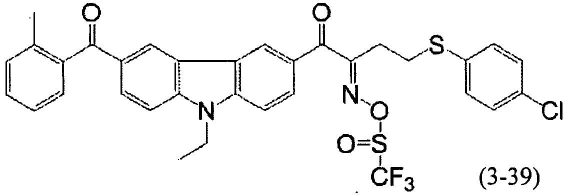

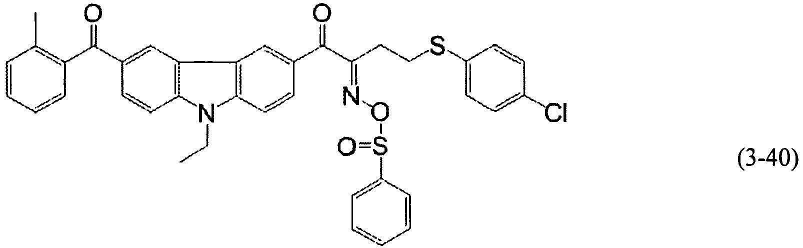

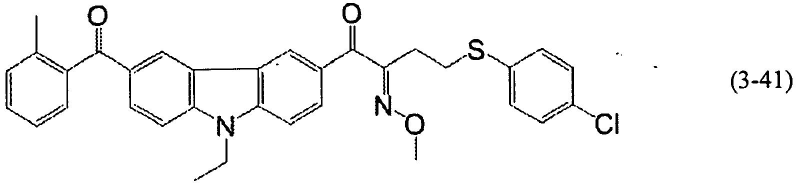

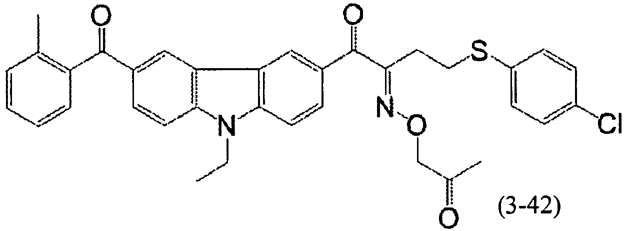

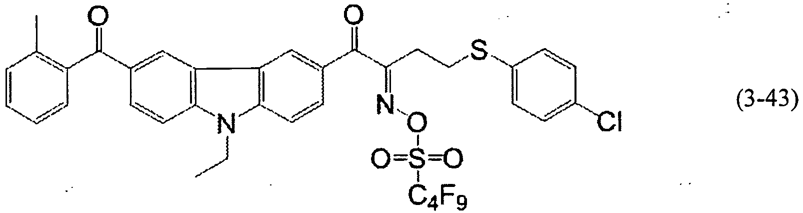

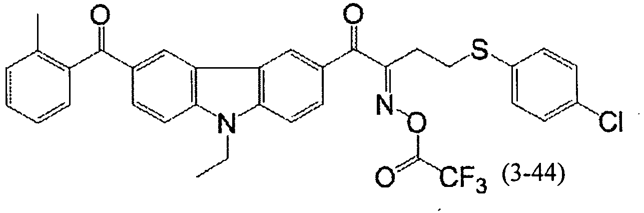

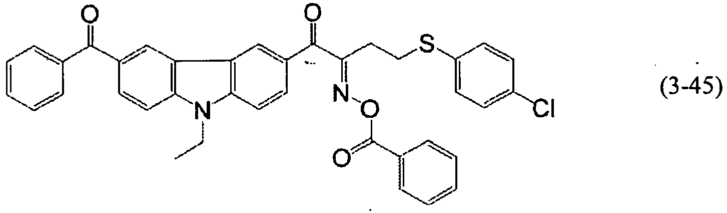

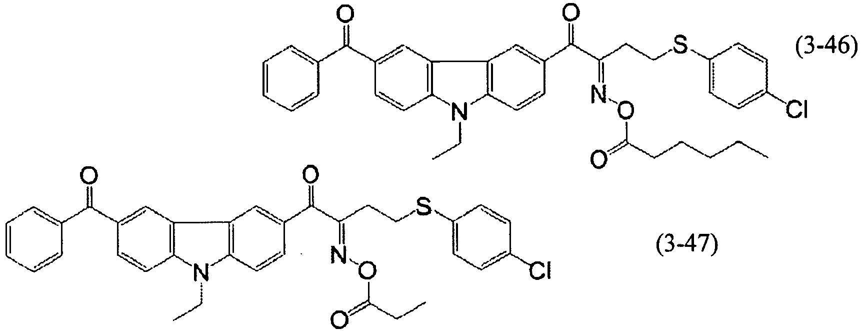

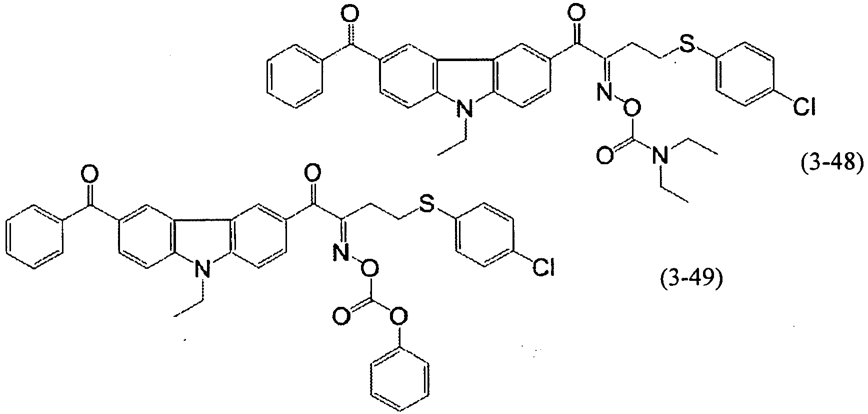

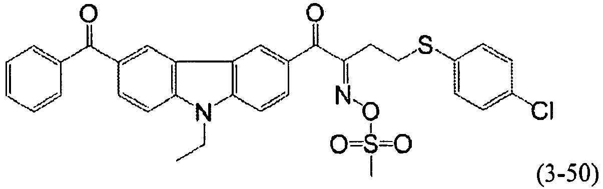

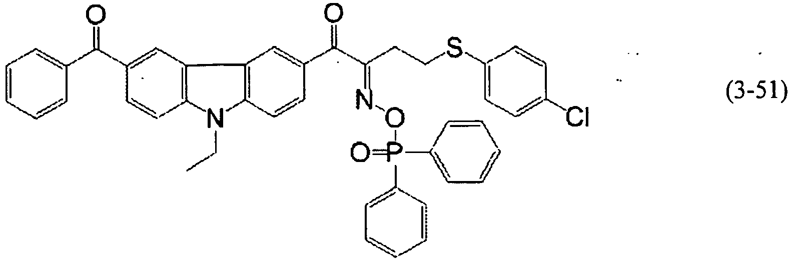

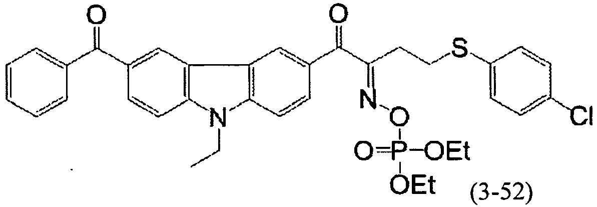

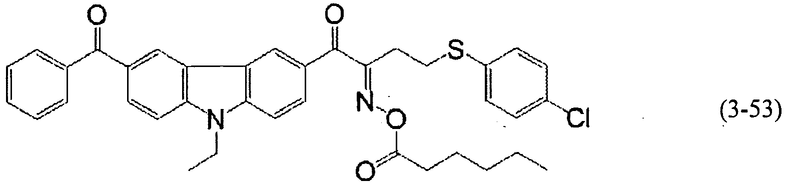

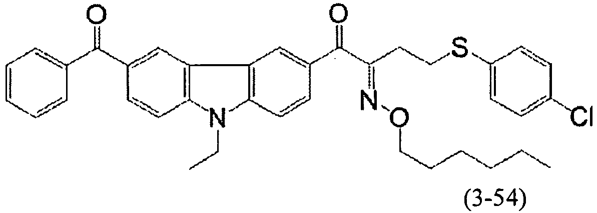

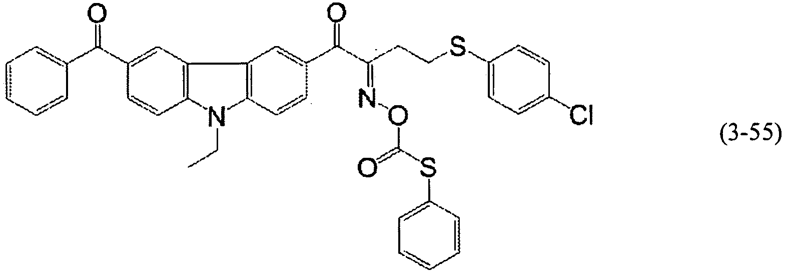

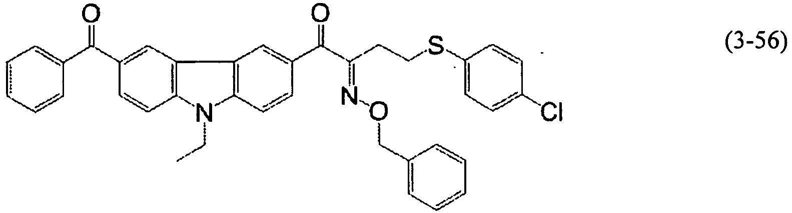

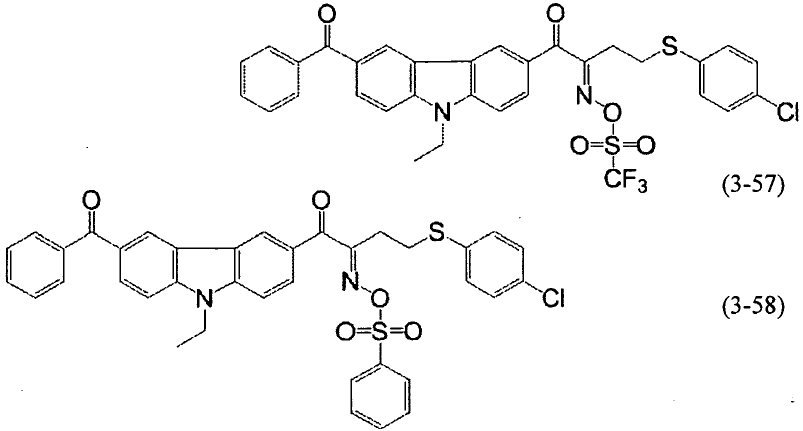

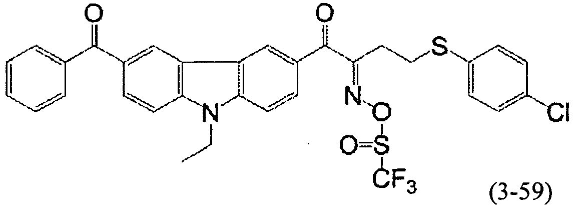

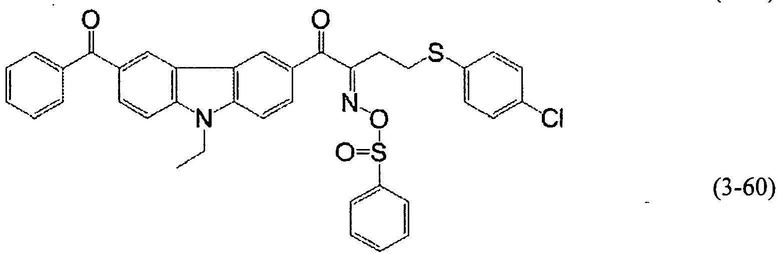

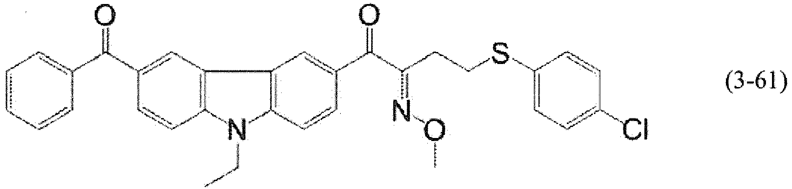

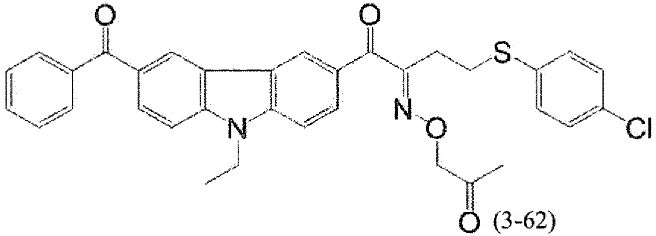

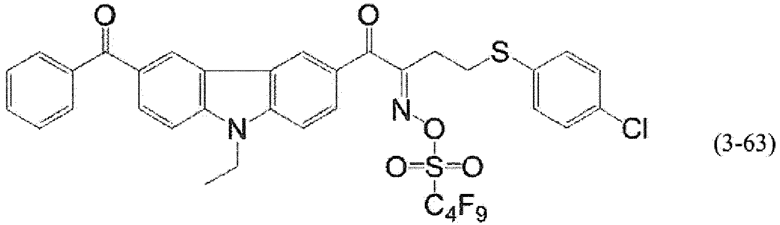

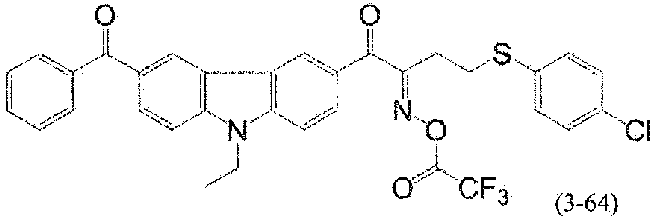

An oxime compound represented by Formula (3) is decomposed by light and works as a photopolymerization initiator that initiates and promotes polymerization of a photopolymerizable compound. In particular, the oxime compound has excellent sensitivity to a light source of 365 nm or 405 nm.

From the viewpoint of sensitivity, stability over time, and coloring during postheating, Compounds 3-1, 3-2, 3-3, 3-4 and 3-5 are preferred, and Compounds 3-1, 3-2 and 3-5 are more preferred.

benzophenone compound, an acetophenone compound and derivatives thereof, a cyclopentadiene-benzene-iron complex and salts thereof, a halomethyl oxadiazole compound, and a 3-aryl-substituted coumarin compound, from the viewpoint of exposure sensitivity.

The photopolymerization initiator contains more preferably at least one type of compound selected from the group consisting of a trihalomethyl triazine compound, an α-aminoketone compound, an acyl phosphine compound, a phosphine oxide compound, an oxime compound, a triallylimidazole dimmer, an onium compound, a benzophenone compound, and an acetophenone compound, and most preferably at least one type of compound selected from the group consisting of a trihalomethyl triazine compound, an α-aminoketone compound, an oxime compound, a triallylimidazole dimer, and a benzophenone compound.

In particular, when a black curable composition is used to prepare a color filter for a solid-state image pickup device, formation of fine pixels having a sharp shape is necessary. Therefore, in addition to the curability (and adhesiveness to a substrate in the case of the third embodiment), it is also important that a black curable composition in a fine unexposed portion is developed without leaving residue. From such viewpoints, the photopolymerization initiator of the (C1), (D2) or (D3) contains an oxime photopolymerization initiator.

In particular, when the (B2) alkali-soluble resin having a weight average molecular weight of from 2000 to less than 20,000 is used as in the second embodiment, exposure sensitivity tends to decrease in comparison with the case in which an alkali-soluble resin having a weight average molecular weight of 20,000 or more is used. However, when the oxime photopolymerization initiator is used, exposure sensitivity is improved.

Furthermore, when fine pixels are formed in a solid-state image pickup device, stepper exposure is used for curing exposure. Since the exposure device may be damaged by halogen contained in the photopolymerization initiator; the addition amount of the photopolymerization initiator should be regulated to be small. In consideration of the above situation, when a fine colored pattern, such as that in a solid-state image pickup device, is formed, it is most preferable to use an oxime compound as a photopolymerization initiator of (C1), (D2) or (D3).

The content of the (C1) photopolymerization initiator contained in the polymerizable composition of the first embodiment is preferably from 0.1% by mass to 50% by mass, more preferably from 0.5% by mass to 30% by mass, and still more preferably from 1% by mass to 20% by mass, with respect to the total solid content of the polymerizable composition. When the content of photopolymerization initiator is within the above range, excellent sensitivity and pattern forming properties are obtained.

The content of the photopolymerization initiator contained in the black curable composition of the second or third -embodiment is, with respect to the total solid content of the curable composition, preferably from 0.1 to 50% by mass, more preferably from 0.5 to 30% by mass, and particularly preferably from 1 to 20% by mass. In the range, excellent sensitivity and pattern forming property are realized.

When the photopolymerization initiator contains an oxime photopolymerization initiator, the content of the oxime photopolymerization initiator is preferably from 3% by mass to 20% by mass, and more preferably from 3% by mass to 10% by mass, with respect to the total solid content of the black curable composition.

### <(B1) Polymerizable Compound, (E2) Compound Having Ethylenic Unsaturated Double Bond, and (E3) Compound Having Ethylenic Unsaturated Double Bond>

The polymerizable composition of the first embodiment includes (B1) a polymerizable compound (hereinafter sometimes referred to as "compound having an ethylenic unsaturated double bond"). The black curable composition of the second embodiment includes (E2) a compound having an ethylenic unsaturated double bond. The black curable composition of the third embodiment includes (E3) a compound having an ethylenic unsaturated double bond.

The compound having an ethylenic unsaturated double bond used in the second embodiment is different from the resin (B2) described above. The compound having an ethylenic unsaturated double bond used in the third embodiment is different from the resin (B3) described above. The following description of compounds having an ethylenic unsaturated double bond is common to the first to third embodiments unless specifically mentioned otherwise.

The compound having an ethylenic unsaturated double bond used in the first, second, or third embodiment may be an addition-polymerizable compound having at least one ethylenic unsaturated double bond, and preferably having two or more ethylenic unsaturated double bonds. The compound having an ethylenic unsaturated double bonds may be selected from compounds each having at least one ethylenic unsaturated terminal bond, preferably having two or more ethylenic unsaturated terminal bonds. Such a class of compounds is widely known in the relevant industrial field, and such compounds may be used in the invention without particular limitations. Such compounds may be in the chemical form of a monomer or a prepolymer (such as a dimer, a trimer, or an oligomer), or a mixture of a monomer and a prepolymer, or a copolymer of a monomer and a prepolymer.

Examples of the monomer and copolymers thereof include, as monomers, an unsaturated carboxylic acid (such as acrylic acid, methacrylic acid, itaconic acid, crotonic acid, isocrotonic acid, or maleic acid), an ester copolymer or amide copolymer obtained by copolymerizing an unsaturated carboxylic acid with an alcohol or amide. An ester of an unsaturated carboxylic acid and an aliphatic polyhydric alcohol compound, or an amide of an unsaturated carboxylic acid and an aliphatic polyamine, is preferably used.

An addition reaction product of an unsaturated carboxylic acid ester or amide having a nucleophilic substituent such as a hydroxyl group, an amino group or a mercapto group, with a monofunctional or polyfunctional, isocyanate or epoxy compound, and a dehydration condensation reaction product of such an unsaturated carboxylic acid ester or amide having a nucleophilic substituent with a monofunctional or polyfunctional carboxylic acid, are also preferable.

An addition reaction product of an unsaturated carboxylic acid ester or amide having an electrophilic substituent such as an isocyanate group or an epoxy group, with a monofunctional or polyfunctional alcohol, amine, or thiol, and a substitution reaction product of an unsaturated carboxylic acid ester or amide having a halogen group or having a leaving substituent such as a tosyloxy group, with a monofunctional or polyfunctional alcohol, amine, or thiol, are also preferable.

Other examples include a compound obtained by replacing the unsaturated carboxylic acid in any of the above examples with an unsaturated phosphonic acid, styrene, vinyl ether, or the like. Such a compound may be used as a compound having an ethylenic unsaturated double bond of (B1), (E2), or (E3).

Examples of the ester monomer of an aliphatic polyhydric alcohol compound and an unsaturated carboxylic acid include acrylic esters such as ethyleneglycol diacrylate, triethyleneglycol diacrylate, 1,3-butanediol diacrylate, tetramethyleneglycol diacrylate, propyleneglycol diacrylate, neopentylglycol diacrylate, trimethylolpropane triacrylate, trimethylolpropane tri(acryloyloxypropyl)ether, trimethylolethane triacrylate, hexanediol diacrylate, 1,4-cyclohexanediol diacrylate, tetraethyleneglycol diacrylate, pentaerythritol diacrylate, pentaerythritol triacrylate, pentaerythritol tetraacrylate, dipentaerythritol diacrylate, dipentaerythritol hexaacrylate, sorbitol triacrylate, sorbitol tetraacrylate, sorbitol pentaacrylate, sorbitol hexaacrylate, tri(acryloyloxyethyl)isocyanurate, polyester acrylate oligomers, and isocyanuric acid EO-modified triacrylate.

Examples of the ester monomer also include methacrylic esters such as tetramethyleneglycol dimethacrylate, triethyleneglycol dimethacrylate, neopentylglycol dimethacrylate, trimethylolpropane trimethacrylate, trimethylolethane trimethacrylate, ethyleneglycol dimethacrylate, 1,3-butanediol dimethacrylate, hexanediol dimethacrylate, pentaerythritol dimethacrylate, pentaerythritol trimethacrylate, pentaerythritol tetramethacrylate, dipentaerythritol dimethacrylate, dipentaerythritol hexamethacrylate, sorbitol trimethacrylate, sorbitol tetramethacrylate, bis[p-(3-methacryloxy-2-hydroxypropoxy)phenyl]dimethylmethane, and bis[p-(methacryloxyethoxy)phenyl]dimethylmethane.

Examples of the ester monomer also include itaconic esters such as ethyleneglycol diitaconate, propyleneglycol diitaconate, 1,3-butanediol diitaconate, 1,4-butanediol diitaconate, tetramethylene glycol diitaconate, pentaerythritol diitaconate, and sorbitol tetraitaconate; crotonic esters such as ethyleneglycol dicrotonate, tetramethylene glycol dicrotonate, pentaerythritol dicrotonate, and sorbitol tetradicrotonate; isocrotonic esters such as ethyleneglycol diisocrotonate, pentaerythritol diisocrotonate, and sorbitol tetraisocrotonate; and maleic esters such as ethyleneglycol dimaleate, triethyleneglycol dimaleate, pentaerythritol dimaleate, and sorbitol tetramaleate.

Examples of other esters include the aliphatic alcohol esters described in Japanese Patent Publication (JP-B) No. 51-47334 and JP-A No. 57-196231, the aromatic skeleton-containing compounds described in JP-A Nos. 59-5240, 59-5241 and 02-226149, and the amino group-containing compounds described in JP-A No. 01-165613. A mixture of monomers selected from the ester monomers described above may be used.

A monomer having an acid group may be used as a compound having an ethylenic unsaturated double bond of (E2) or (E3). Examples thereof include (meth)acrylic acid, pentaerythrytol triacrylate monosuccinate, dipentaerythritol pentaacrylate monosuccinate, pentaerythritol triacrylate monomaleate, dipentaerythritol pentaacrylate monomaleate, pentaerythritol triacrylate monophthalate, dipentaerythritol pentaacrylate monophthalate, pentaerythritol triacrylate mono-tetrahydrophthalate, and dipentaerythritol pentaacrylate mono-tetrahydrophthalate. Among the above, pentaerythritol triacrylate monosuccinate or the like is preferable.

Examples of the amide monomer of an aliphatic polyamine compound and an unsaturated carboxylic acid include methylene bisacrylamide, methylene bismethacrylamide, 1,6-hexamethylene bisacrylamide, 1,6-hexamethylene bismethacrylamide, diethylenetriamine trisacrylamide, xylylene bisacrylamide, and xylylene bismethacrylamide.

Examples of other preferred amide monomers include the cyclohexylene structure-containing compounds described in JP-B No. 54-21726.

Addition-polymerizable urethane compounds produced by an addition reaction of isocyanate with a hydroxyl group are also preferred, examples of which include the vinyl urethane compounds described in JP-B No. 48-41708, which have two or more polymerizable vinyl groups within a molecule thereof and are produced by adding a compound represented by Formula (4) below to a polyisocyanate compound having two or more isocyanate groups within a molecule thereof.

CH₂ = C(R¹⁰)COOCH₂CH(R¹¹) OH Formula (4)

In Formula (4), R¹⁰ and R¹¹ each independently represent H or CH₃.

Moreover, urethane acrylates disclosed in JP-ANo. 51-37193 and JP-B Nos. 2-32293 and 2-16765 and urethane compounds having an ethylene oxide skeleton disclosed in JP-B Nos. 58-49860, 56-17654, 62-39417, and 62-39418 are preferable. Furthermore, when addition-polymerizable compounds having an amino structure and/or a sulfide structure in a molecule thereof, which are disclosed in JP-ANos. 63-277653, 63-260909, and 1-105238, are used, a photopolymerizable composition that is remarkably excellent in photoreactive speed can be obtained.

Other examples include polyfunctional (meth)acrylates, such as polyester (meth)acrylates and epoxy (meth)acrylates obtained by reacting an epoxy resin and (meth)acrylic acid, such as those disclosed in JP-A No. 48-64183 and JP-B Nos. 49-43191 and 52-30490; specific unsaturated compounds disclosed in JP-B Nos. 46-43946, 1-40337, and 1-40336, and vinyl phosphonic acid compounds disclosed in JP-A No. 2-25493. Moreover, in a certain case, a structure containing a perfluoroalkyl group disclosed in JP-A No. 61-22048 is suitably used. Furthermore, substances that are described, as photosetting monomers and photosetting oligomers, in Nihon Secchaku Kyoukai-Shi (Journal of the Adhesion Society of Japan) Vol.20, No.7, pp. 300-308 (1984) are also usable.

Details of how to use the addition-polymerizable compounds, such as what structure should be used, whether they should be used alone or in combination, or what amount should be added, may be freely determined depending on the final performance design of the curable composition. For example, they may be selected from the following viewpoints.

In view of sensitivity, the addition-polymerizable compound preferably has a structure having a higher content of the unsaturated groups per molecule, and difunctional or higher functional structures are preferred in many cases. In order to increase the strength of an image region (cured film in an image region), the addition-polymerizable compound preferably has a tri- or higher-functional structure. A method of using a combination of compounds having different numbers of functional groups and/or different types of polymerizable groups (for example, compounds selected from an acrylic ester, a methacrylic ester, a styrene compound, a vinyl ether compound) is also effective for regulating both of sensitivity and strength.

In the first embodiment, selection and usage mode of the polymerizable compound are very important factors affecting the compatibility with other components contained in the polymerizable composition (for example, a photopolymerization initiator and a colorant (pigment, dye)) and dispersibility. For instance, the compatibility may be improved by using a low-purity compound or by using two or more polymerizable compounds together. Furthermore, a specific structure may be selected in order to improve the adhesiveness to a hard surface such as a surface of a substrate.

The content of the (B1) polymerizable compound in the total solid content of the polymerizable composition is preferably from 5% by mass to 90% by mass, more preferably from 10% by mass to 85% by mass, and still more preferably from 20% by mass to 80% by mass.

In the second or third embodiment, use of a compound containing at least two (meth)acrylic acid ester structures is preferable, use of a compound containing at least three (meth)acrylic acid ester structures is more preferable, and use of a compound containing at least four (meth)acrylic acid ester structures is most preferable, from the viewpoint of curing sensitivity. The addition-polymerizable compound preferably contains an EO-modified product from the viewpoint of curing sensitivity and developability of an unexposed portion. The addition-polymerizable compound is preferably a compound containing a urethane bond from the viewpoint of curing sensitivity and strength of an exposed portion.

Selection and usage mode of the addition-polymerizable compound are important factors affecting the compatibility with other components contained in the curable composition (for example, an alkali-soluble resin (S) or (R), a photopolymerization initiator, and a pigment) and dispersibility as well. For instance, the compatibility may be improved by using a low-purity compound is used or at least two addition-polymerizable compounds. Furthermore, a specific structure may be selected in order to improve the adhesiveness with a hard surface such as a substrate surface.

From the above-mentioned viewpoints, preferable examples of the (E2) or (E3) compound having an ethylenic unsaturated double bond include bisphenol A diacrylate, a bisphenol A diacrylate EO-modified product, trimethylolpropane triacrylate, trimethylolpropane tri(acryloyloxypropyl) ether, trimethylolethane triacrylate, tetraethylene glycol diacrylate, pentaerythritol diacrylate, pentaerythritol triacrylate, pentaerythritol tetraacrylate, dipentaerythritol tetraacrylate, dipentaerythritol pentaacrylate, dipentaerythritol hexaacrylate, sorbitol triacrylate, sorbitol tetraacrylate, sorbitol pentaacrylate, sorbitol hexaacrylate, tri(acryloyloxyethyl) isocyanurate, a pentaerythritol tetraacrylate EO-modified product, and a dipentaerythritol hexaacrylate EO-modified product. As commercially available products, urethane oligomers such as UAS-10 and UAB-140 (trade name, manufactured by Sanyo-Kokusaku Pulp Co., Ltd.); DPHA-40H (trade name, manufactured by Nippon Kayaku Co., Ltd.); UA-306H, UA-306T, UA-306I, AH-600, T-600 and AI-600 (trade name, manufactured by Kyoeisha Chemical Co., Ltd.) and UA-7200 (trade name, manufactured by Shin-Nakamura Chemical Co., Ltd.).

Of these, a bisphenol A diacrylate EO-modified product, pentaerythritol triacrylate, pentaerythritol tetraacrylate, dipentaerythritol pentaacrylate, dipentaerythritol hexaacrylate, tri(acryloyloxyethyl) isocyanurate, a pentaerythritol tetraacrylate EO-modified product, and a dipentaerythritol hexaacrylate EO-modified product are more preferable, and, as commercially available products, DPHA-40H (trade name, manufactured by Nippon Kayaku Co., Ltd.) and UA-306H, UA-306T, UA-306I, AH-600, T-600 and AI-600 (trade name, manufactured by Kyoeisha Chemical Co., Ltd.) are more preferable.

The content of the (E2) or (E3) compound having an ethylenic unsaturated double bond with respect to the total solid content of the black curable composition of the invention is preferably from 1 to 90% by mass, more preferably from 5 to 80% by mass, and further preferably from 10 to 70% by mass.

When the black curable composition of the second or third embodiment is used to form a pattern of a light-shielding color filter in particular, the content of the (E2) or (E3) compound containing ethylenic unsaturated double bond is preferably in the range of from 5 to 50% by mass, more preferably in the range of from 7 to 40% by mass, and still more preferably in the range of from 10 to 35% by mass, with respect to the total solid content of the black curable composition.

The polymerizable composition of the first embodiment may further include one or more optional components such as those detailed below, as required. Similarly, the black curable composition of the second or third embodiment may further contain one or more optional components such as those detailed below, as required, in addition to the (A2) or (A3) titanium black, the (B2) or (B3) specific alkali-soluble resin, the (C2) or (C3) solvent, the (D2) or (D3) photopolymerization initiator and the (E2) or (E3) compound having an ethylenic unsaturated double bond.

In what follows, optional components that can be contained in the polymerizable composition of the first embodiment or in the black curable composition of the second or third embodiment are described.

### (F) Sensitizer

The polymerizable composition of the first embodiment may include a sensitizer for the purposes of improving the radical generation efficiency of the radical initiator and shifting the wavelength at which the radical initiator has sensitivity to a longer wavelength side. The sensitizer used in the first embodiment is preferably a sensitizer that sensitizes the (B1) photopolymerization initiator by an electron transfer mechanism or an energy transfer mechanism.

The black curable composition of the second or third embodiment may include a sensitizer for the purposes of improving the radical generation efficiency of the radical initiator and shifting the wavelength at which the radical initiator has sensitivity to a longer wavelength side. The sensitizer used in the second or third embodiment is preferably a sensitizer that sensitizes an oxime photopolymerization initiator, such as those described above, by an electron transfer mechanism or an energy transfer mechanism.

The sensitizer for use in the polymerizable composition of the first embodiment or in the black curable composition of the second or third embodiment may belong to any of the groups of compounds described below and may have an absorption wavelength in the wavelength range of 300 nm to 450 nm.

Examples include polynuclear aromatic compounds (such as phenanthrene, anthracene, pyrene, perylene, triphenylene, and 9,10-dialkoxyanthracene), xanthenes (such as fluorescein, eosin, erythrosine, rhodamine B, and rosebengal), thioxanthones (such as isopropylthioxanthone, diethylthioxanthone and chlorothioxanthone), cyanines (such as thiacarbocyanine and oxacarbocyanine), merocyanines (such as merocyanine and carbomerocyanine), phthalocyanines, thiazines (such as thionine, methylene blue and toluidine blue), acridines (such as acridine orange, chloroflavin and acriflavin), anthraquinones (such as anthraquinone), squaliums (such as squalium), acridine orange, coumarins (such as 7-diethylamino-4-methylcoumarin), ketocoumarin, phenothiazines, phenazines, styrylbenzenes, azo compounds, diphenylmethane, triphenylmethane, distyrylbenzenes, carbazoles, porphyrin, spiro compounds, quinacridone, indigo, styryl compounds, pyrylium compounds, pyrromethene compounds, pyrazolotriazole compounds, benzothiazole compounds, barbituric acid derivatives, thiobarbituric acid derivatives, aromatic ketone compounds such as acetophenone, benzophenone, thioxanthone, and Michler's ketone, and heterocyclic compounds such as N-aryloxazolidinone.

Examples of more preferred sensitizers usable in the polymerizable composition or the black curable composition include compounds represented by Formulae (e-1) to (e-4) below.

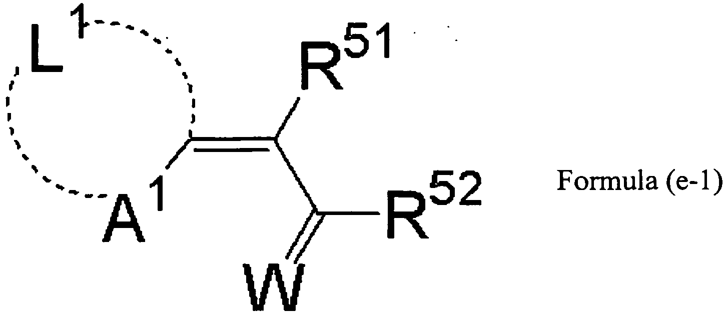

In Formula (e-1), A¹ represents a sulfur atom or NR⁵⁰, R⁵⁰ represents an alkyl group or an aryl group, L¹ represents a nonmetallic atom group that forms a basic nucleus of the pigment together with A¹ and the carbon atom adjacent to L¹, R⁵¹ and R⁵² each independently represent a hydrogen atom or a monovalent nonmetallic atom group, and R⁵¹ and R⁵² may be bonded to each other to form an acidic nucleus of the pigment, and W represents an oxygen atom or a sulfur atom.

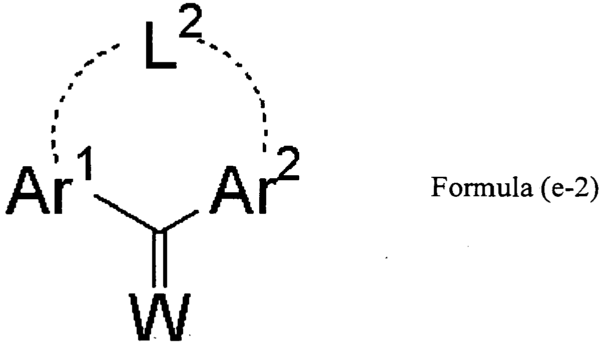

In Formula (e-2), Ar¹ and Ar² each independently represent an aryl group and are linked to each other via -L²-, wherein -L²- represents -O- or -S-, and W has the same definition as in Formula (e-1).

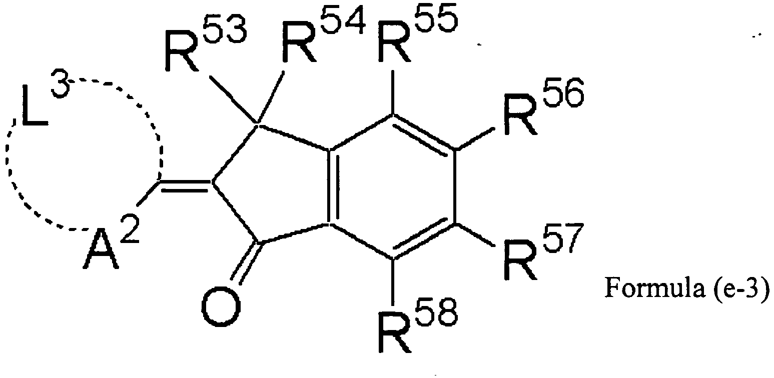

In Formula (e-3), A² represents a sulfur atom or NR⁵⁹; L³ represents a nonmetallic atom group that forms a basic nucleus of the pigment together with A and the carbon atom adjacent to L³; R⁵³, R⁵⁴, R⁵⁵, R⁵⁶, R⁵⁷, and R⁵⁸ each independently represent a monovalent nonmetallic atom group; and R⁵⁹ represents an alkyl group or an aryl group.

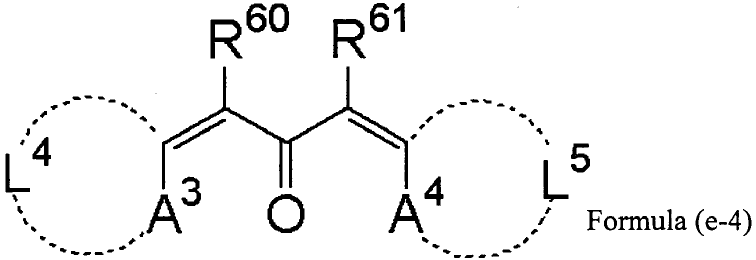

In Formula (e-4), A³ and A⁴ each independently represent -S- or -NR⁶²; R⁶² represents a substituted or unsubstituted alkyl group or a substituted or unsubstituted aryl group; L⁴ and L⁵ each independently represent a nonmetallic atom group that forms a basic nucleus of the pigment together with adjacent A³ or A⁴ and the carbon atom adjacent to L⁴ or L⁵; and R⁶⁰ and R⁶¹ each independently represent a monovalent nonmetallic atom group or may be bonded to each other to form an aliphatic or aromatic ring.

The content of the sensitizer in the polymerizable composition or the black curable composition is preferably from 0.1 to 20% by mass, more preferably from 0.5 to 15% by mass, in terms of solid content, in view of the efficiency of light absorption efficiency at a deep portion or the efficiency of initiation decomposition.

The sensitizer may be used singly, or in combination of two or more thereof.

The sensitizer that can be contained in the polymerizable composition or the black curable composition is preferably the sensitizer described above, or at least one selected from a compound represented by Formula (II) below or a compound represented by Formula (III) below.

A single compound selected from these sensitizers may be used, or two or more compounds selected from these sensitizers may be used in combination.

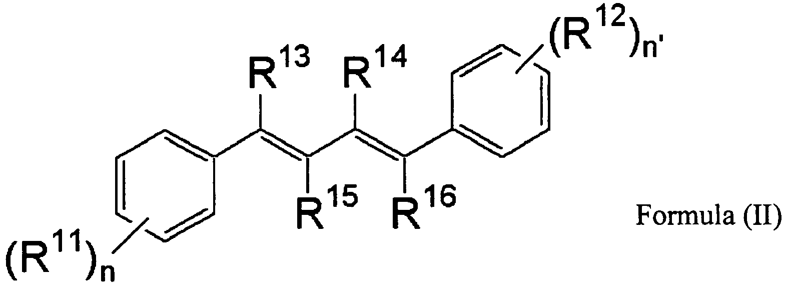

In Formula (II), R¹¹ and R¹² each independently represent a monovalent substituent, R¹³, R¹⁴, R¹⁵, and R¹⁶ each independently represent a hydrogen atom or a monovalent substituent, n represents an integer of 0 to 5, n' represents an integer of 0 to 5, and n and n' are not simultaneously 0. When n is 2 or greater, there are plural R¹¹s, and they may be the same as each other or different from each other. When n' is 2 or greater, there are plural R¹²s, and they may be the same as each other or different from each other. Formula (II) may represent any of isomers that exist due to the presence of the double bonds.

The compound represented by Formula (II) preferably has a molar absorption coefficient ε at a wavelength of 365 nm of 500 mol⁻¹·L·cm⁻¹ or more, more preferably of 3000 mol⁻¹·L·cm⁻¹ or more, most preferably of 20,000 mol⁻¹·L·cm⁻¹ or more. If the molar absorption coefficient ε is in the above range at each wavelength, the sensitivity enhancing effect may be high in terms of light absorption efficiency, which is preferable.

Preferred examples of the compound represented by Formula (II) include, but are not limited to, Compounds (II-1) to (II-4) shown below.

In the present specification, some chemical formulae are simplified structural formulae in which solid lines represent hydrocarbon groups, unless elements and/or substituents are explicitly indicated.

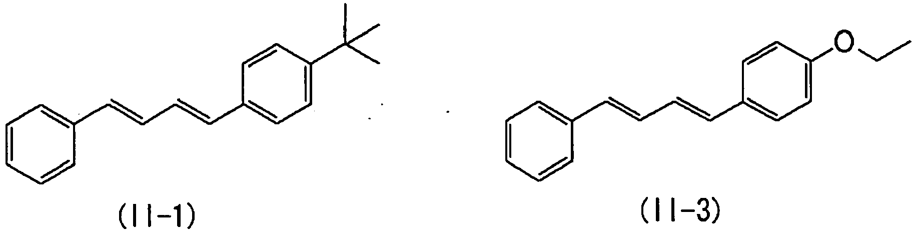

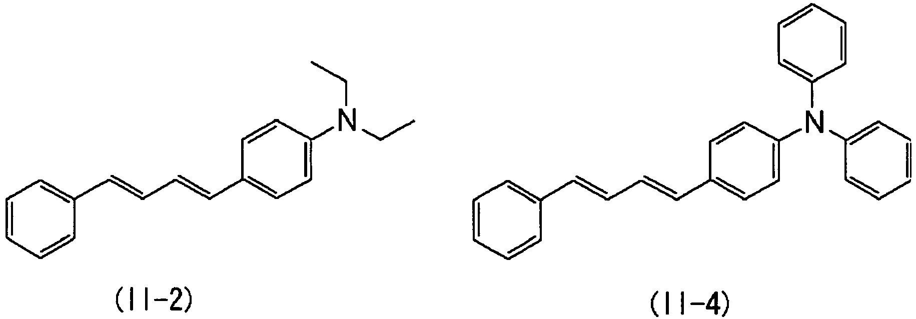

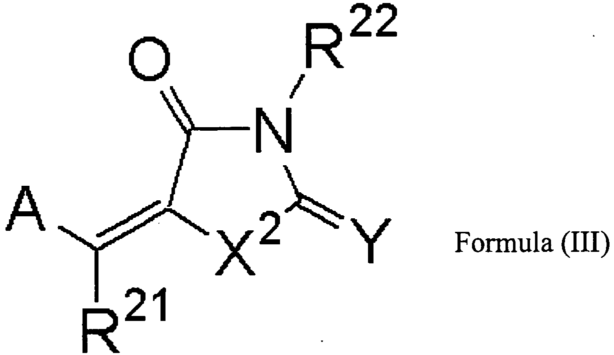

In Formula (III), A represents an aromatic or heterocyclic group which may have a substituent; X² represents an oxygen atom, a sulfur atom, or -N(R²³)-; Y represents an oxygen atom, a sulfur atom, or =N(R²³); R²¹, R²², and R²³ each independently represent a hydrogen atom or a monovalent nonmetallic atom group; and A, R²¹, R²², and R²³ may be bonded to one another to form one or more aliphatic or aromatic rings.

In Formula (III), R²¹, R²² and R²³ each independently represent a hydrogen atom or a monovalent nonmetallic atom group. When any of R²¹, R²², or R²³ represents a monovalent nonmetallic atom, the monovalent nonmetallic atom group is preferably a substituted or unsubstituted alkyl group, a substituted or unsubstituted aryl group, a substituted or unsubstituted alkenyl group, a substituted or unsubstituted aromatic heterocyclic residue, a substituted or unsubstituted alkoxy group, a substituted or unsubstituted alkylthio group, a hydroxyl group, or a halogen atom.

In the compound represented by Formula (III), Y preferably represents an oxygen atom or =N(R²³) in terms of increasing the efficiency of decomposition of the photopolymerization initiator. Each R²³ independently represents a hydrogen atom or a monovalent nonmetallic atom group. Y most preferably represents =N(R²³).

Preferred examples of the compound represented by Formula (III) include, but are not limited to, Compounds (III-1) to (III-12) shown below. In the invention, the isomers caused by the presence of the double bond(s) between the acidic nucleus and the basic nucleus are not explicitly specified, and the structure is not limited to a particular isomer. Accordingly, any isomer may be used in the invention.

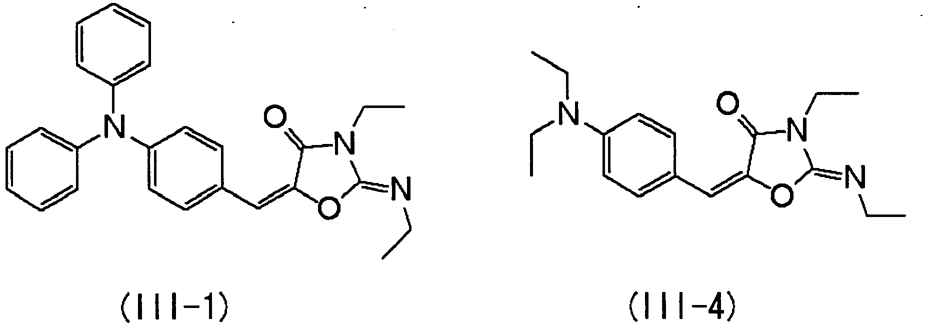

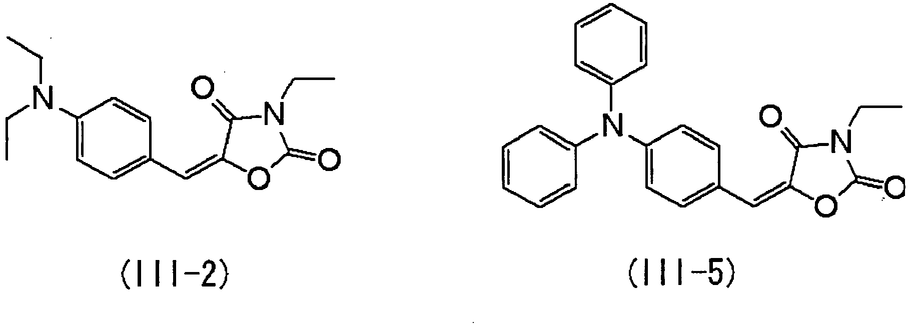

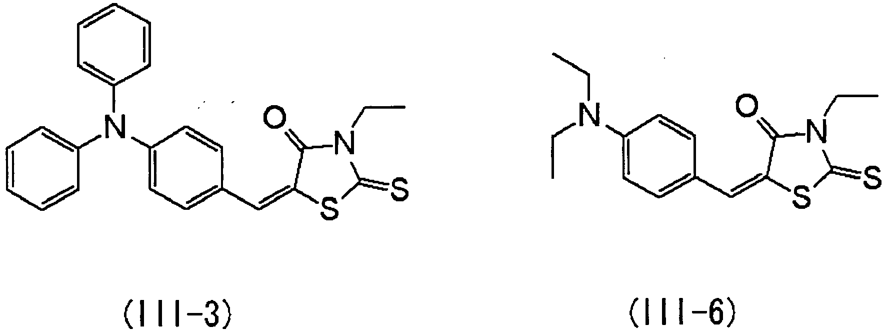

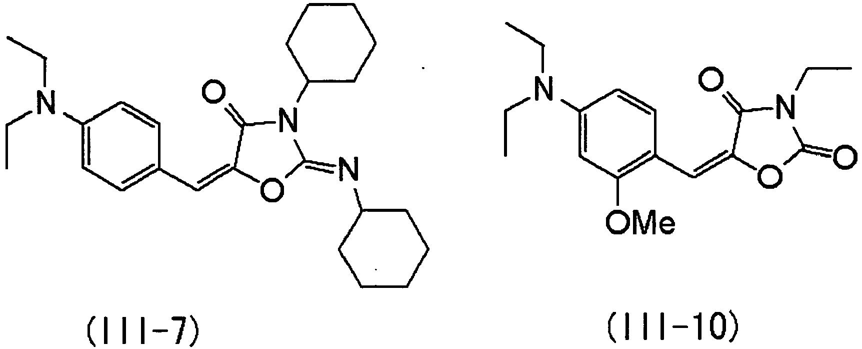

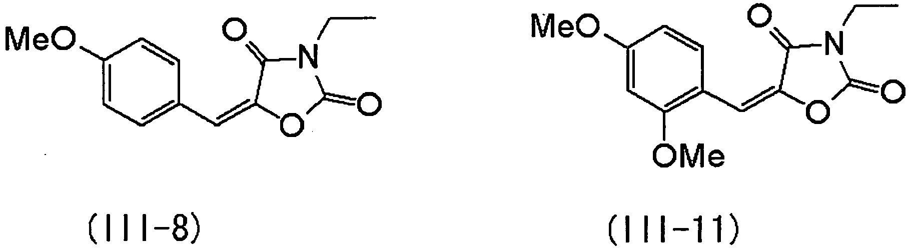

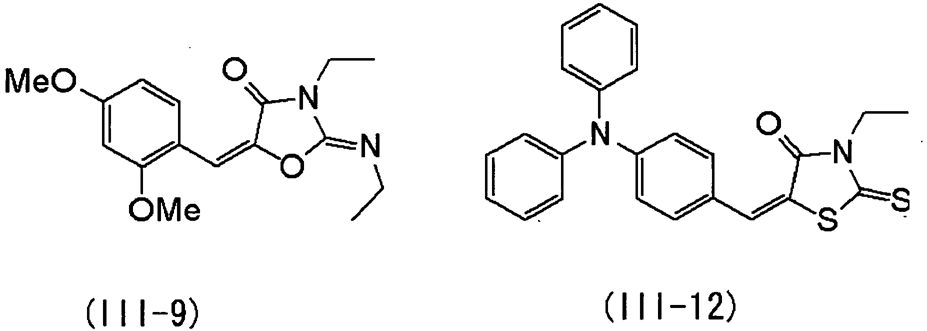

### (G) Co-sensitizer

The polymerizable composition of the first embodiment or the black curable composition of the second or third embodiment preferably further includes (G) a co-sensitizer.

In the first embodiment, the co-sensitizer has, for example, a function of further improving the sensitivity of the (C1) photopolymerization initiator or the sensitizer to actinic radiation and/or a function of preventing inhibition of the polymerization of the (B1) polymerizable compound due to oxygen.

In the second or third embodiment, the co-sensitizer has, for example, a function of further improving the sensitivity of the photopolymerization initiator of (D2) or (D3) or the sensitizer of (F2) or (F3) to actinic radiation and/or a function of preventing inhibition of the polymerization of the compound having an ethylenic unsaturated double bond of (E2) or (E3) due to oxygen.

Examples of the co-sensitizers used in the first to third embodiments include amines, e.g., compounds disclosed in M. R. Sander et al., Journal of Polymer Society Vol. 10, pp. 3173 (1972), JP-B No. 44-20189 and JP-A Nos. 51-82102, 52-134692, 59-138205, 60-84305, 62-18537, and 64-33104, and *Research Disclosure* No. 33825. Specific examples include triethanolamine, ethyl p-dimethylaminobenzoate, p-formyldimethylaniline, and p-methylthiodimethylaniline.

Other examples of co-sensitizers include thiols and sulfides, such as thiol compounds disclosed in JP-ANo. 53-702, JP-B No. 55-500806, and JP-ANo. 5-142772, and disulfide compounds disclosed in JP-A No. 56-75643. Specific examples include 2-mercaptobenzothiazole, 2-mercaptobenzoxazole, 2-mercaptobenzimidazole, 2-mercapto-4(3H)-quinazoline, and β-mercaptonaphthalene.

Moreover, other examples of the co-sensitizer include amino acid compounds (e.g., N-phenylglycine), organometallic compounds disclosed in JP-B No. 48-42965 (e.g., tributyltin acetate), a hydrogen donor disclosed in JP-B No. 55-34414, sulfur compounds (e.g., trithiane) disclosed in JP-A No. 6-308727.

The content of the co-sensitizer is preferably in the range of from 0.1 to 30 mass%, more preferably in the range of from 1 to 25 mass%, and still more preferably in the range of from 0.5 to 20 mass%, with respect to the mass of the total solid content of the polymerizable composition of the first embodiment or of the black curable composition of the second or third embodiment from the viewpoint of increasing the curing rate by improving the balance between the polymerization growth rate and the chain transfer.

### <Other Polymers>

From the viewpoints of improving dispersion stability, regulating developability, and the like, the black curable composition of the second or third embodiment may further include a dispersant, examples of which include other polymer materials [e.g., polyamidoamine and salts thereof, polycarboxylic acid and salts thereof, high-molecular-weight unsaturated acid esters, modified polyurethanes, modified polyesters, modified poly(meth)acrylates, (meth)acrylic copolymers, naphthalene sulfonic acid formalin condensates], polyoxyethylene alkyl phosphate, polyoxyethylene alkylamine, and alkanolamine. The polymer materials can be further classified into straight-chain polymers, terminal-modified polymers, graft polymers, and block polymers according to their structures.

Other than the dispersants described above, methacrylic acid/benzyl methacrylate, preferably methacrylic acid/benzyl methacrylate having an acid value of from 20 to 150 mgKOH, may be mentioned as a dispersant.

### Polymerization Inhibitor

In the first embodiment, a thermal polymerization inhibitor is preferably added in order to inhibit unnecessary polymerization of the compound having a polymerizable ethylenic unsaturated double bond during the production or storage of the polymerizable composition. In the second or third embodiment, a small amount of a thermal polymerization inhibitor is preferably added in order to inhibit unnecessary thermal polymerization of the compound having a polymerizable ethylenic unsaturated double bond of (E1) or (E2) during the production or storage of the black curable composition.

Examples of polymerization inhibitors usable in the first, second, or third embodiment include a compound having a phenolic hydroxyl group, an N-oxide compound, a piperidine-1-oxyl free radical compound, a pyrrolidine-1-oxyl free radical compound, an N-nitrosophenylhydroxylamine, a diazonium compound, a cationic dye, a sulfide-group-containing compound, a nitro-group-containing compound, and a transition metal compound such as FeCl₃ or CuCl₂.

The polymerization inhibitor is more preferably as follows.

The compound having a phenolic hydroxyl group is preferably selected from hydroquinone, p-methoxyphenol, di-tert-butyl-p-cresol, pyrogallol, tert-butylcatechol, benzoquinone, 4,4'-thiobis(3-methyl-6-tert-butylphenol), 2,2'-methylenebis(4-methyl-6-tert-butylphenol), a phenol resin, or a cresol resin.

The N-oxide compound is preferably selected from 5,5-dimethyl-1-pyrroline N-oxide, 4-methylmorpholine N-oxide, pyridine N-oxide, 4-nitropyridine N-oxide, 3-hydroxypyridine N-oxide, picolic acid N-oxide, nicotinic acid N-oxide, or isonicotinic acid N-oxide.

The piperidine-1-oxyl free radical compound is preferably selected from piperidine-1-oxyl free radical, 2,2,6,6-tetramethylpiperidine-1-oxyl free radical, 4-oxo-2,2,6,6-tetramethylpiperidine-1-oxyl free radical, 4-hydroxy-2,2,6,6-tetramethylpiperidine-1-oxyl free radical, 4-acetamide-2,2,6,6-tetramethylpiperidine-1-oxyl free radical, 4-maleimide-2,2,6,6-tetramethylpiperidine-1-oxyl free radical, or 4-phosphonoxy-2,2,6,6-tetramethylpiperidine-1-oxyl free radical.

The pyrrolidine-1-oxyl free radical compound is preferably 3-carboxyproxyl free radical (3-carboxy-2,2,5,5-tetramethylpyrrolidine-1-oxyl free radical).

The N-nitrosophenylhydroxylamine is preferably selected from N-nitrosophenylhydroxylamine cerous salt or N-nitrosophenylhydroxylamine aluminum salt.

The diazonium compound is preferably selected from 4-diazophenyldimethylamine hydrogensulfate, 4-diazodiphenylamine tetrafluoroborate, or 3-methoxy-4-diazodiphenylamine hexafluorophosphate.

The cationic dye is preferably selected from Crystal Violet, Methyl Violet, Ethyl Violet, or Victoria Pure Blue BOH.

Examples of preferable polymerization inhibitors usable in the invention include, but are not limited to, those shown below. Exemplary compounds (P-1) to (P-24) correspond to phenolic polymerization inhibitors.

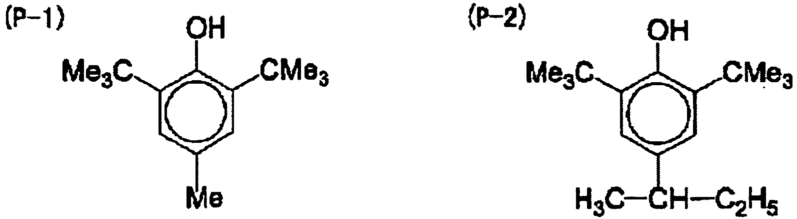

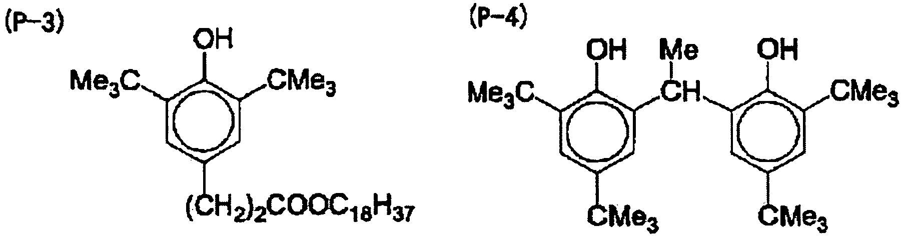

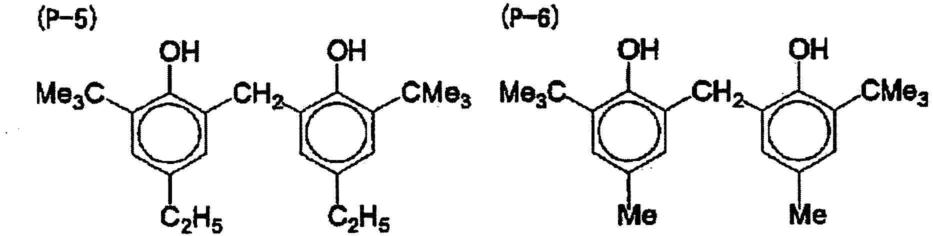

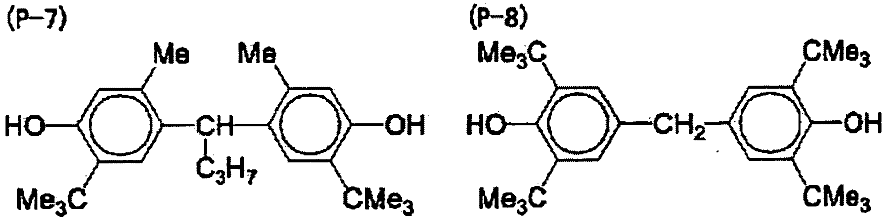

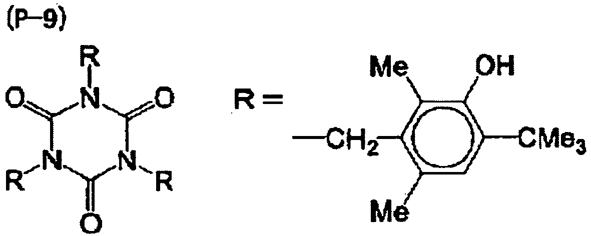

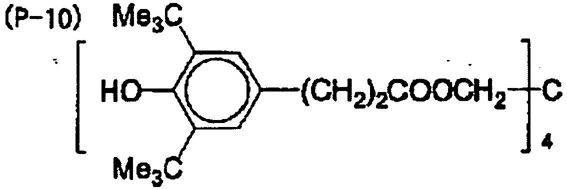

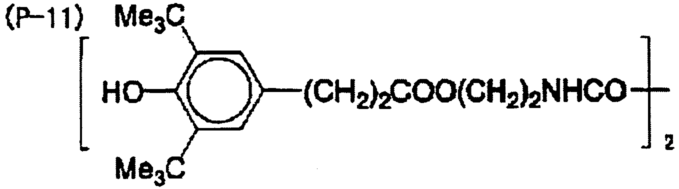

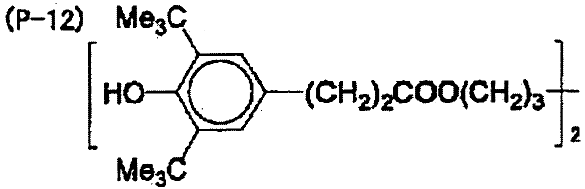

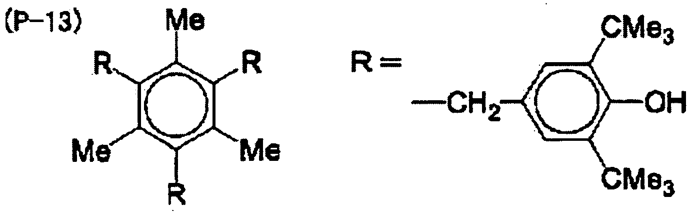

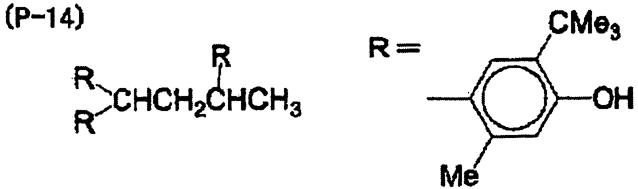

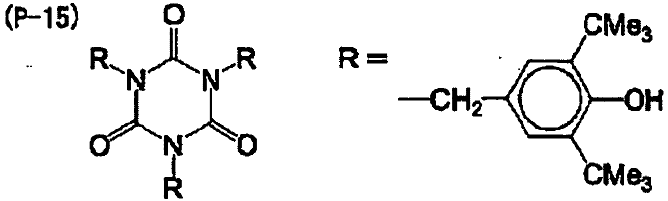

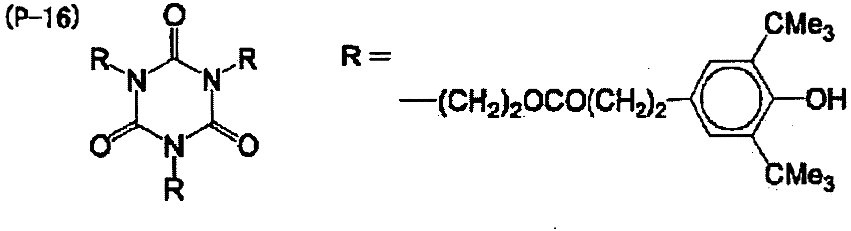

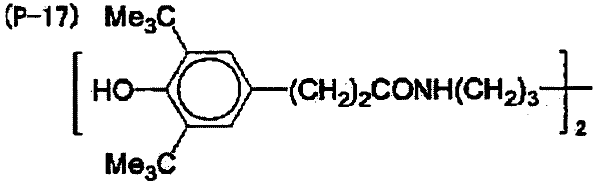

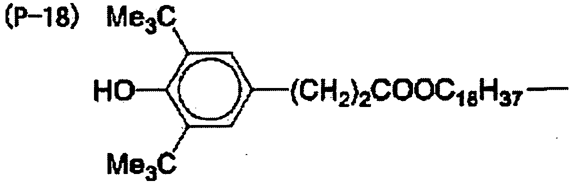

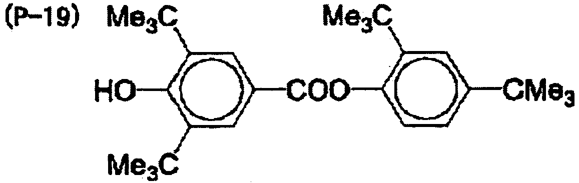

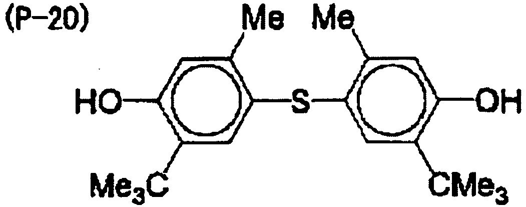

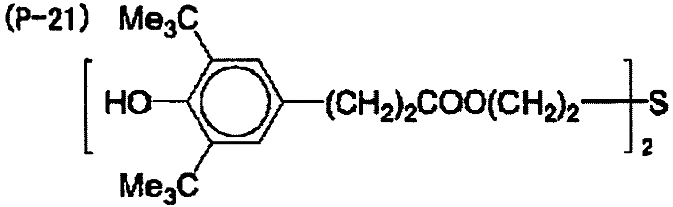

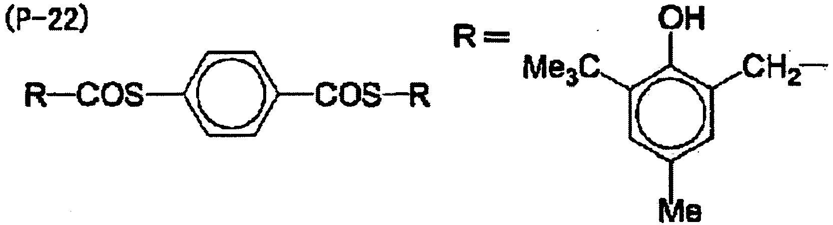

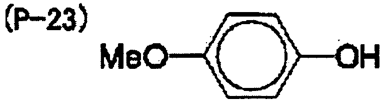

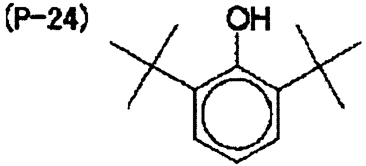

Examples of amine-based polymerization inhibitors include the following exemplary compounds (N-1) to (N-7).

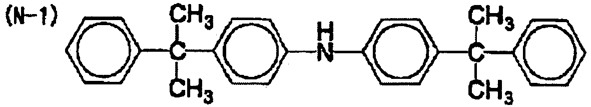

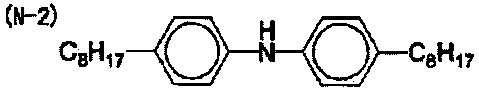

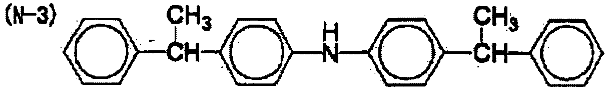

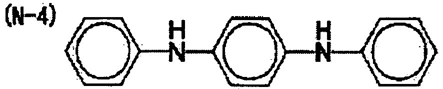

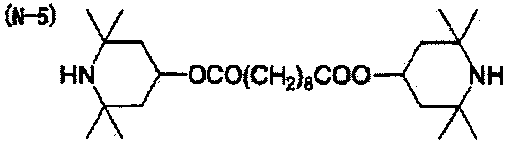

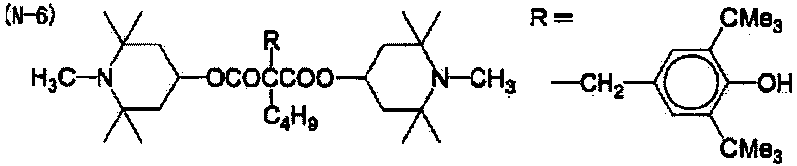

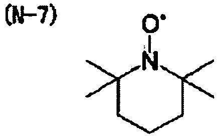

Examples of sulfur-based polymerization inhibitors include the following exemplary compounds (S-1) to (S-5).

**(S-1)** **(C₁₈H₃₇OCOCH₂CH₂)₂S**

**(S-2)** **(C₁₂H₂₅OCOCH₂CH₂)₂S**

**(S-3)** **(C₁₃H₂₇OCOCH₂CH₂)₂S**

**(S-4)** **(C₁₄H₂₉OCOCH₂CH₂)₂S**

**(S-5)** **(CH₂OCOCH₂CH₂SC₁₂H₂₅)₄C**

Examples of phosphite-based polymerization inhibitors include the following exemplary compounds (R-1) to (R-5).

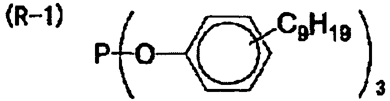

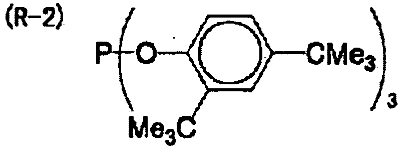

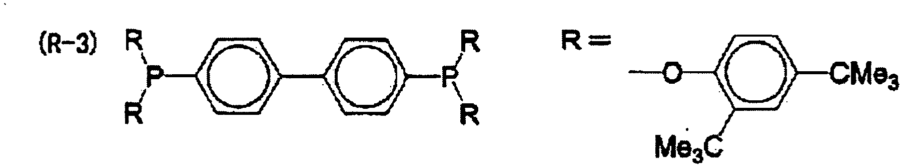

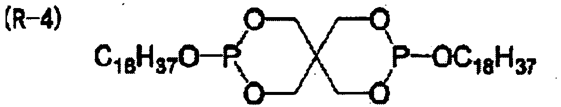

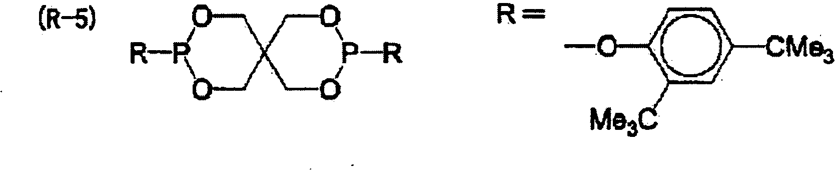

Further examples of preferable polymerization inhibitors also include those shown below.

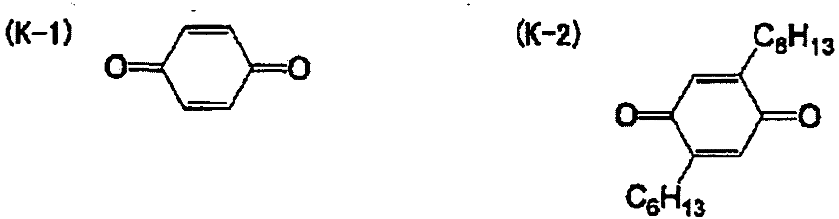

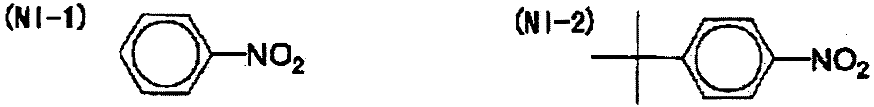

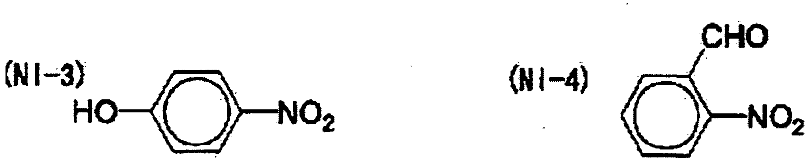

(C-1) **CuCl₃**

(F-1) **FeCl₃**

(F-2) **FeBr₃**

Among the exemplary compounds shown above, the following compounds are preferable: compounds containing a phenolic hydroxyl group selected from hydroquinone, p-methoxyphenol, di-t-butyl-p-cresol, pyrogallol, t-butylcatechol, benzoquinone, 4,4-thiobis(3-methyl-6-t-butylphenol), or 2,2'-methylenebis(4-methyl-6-t-butylphenol); piperidine-1-oxyl free radical compounds; piperidine-1-oxyl free radical compounds selected from 2,2,6,6-tetramethylpiperidine-1-oxyl free radical, 4-oxo-2,2,6,6-tetramethylpiperidine-1-oxyl free radical, 4-hydroxy-2,2,6,6-tetramethylpiperidine-1-oxyl free radical, 4-acetamide-2,2,6,6-tetramethylpiperidine-1-oxyl free radical, 4-maleimide-2,2,6,6-tetramethylpiperidine-1-oxyl free radical, or 4-phosphonoxy-2,2,6,6-tetramethylpiperidine-1-oxyl free radical; and N-nitrosophenylhydroxylamine compounds selected from N-nitrosophenylhydroxylamine cerous salt or N-nitrosophenylhydroxylamine aluminum salt. The following compounds are more preferable: piperidine-1-oxyl free radical compounds selected from 2,2,6,6-tetramethylpiperidine-1-oxyl free radical, 4-oxo-2,2,6,6-tetramethylpiperidine-1-oxyl free radical, 4-hydroxy-2,2,6,6-tetramethylpiperidine-1-oxyl free radical, 4-acetamide-2,2,6,6-tetramethylpiperidine-1-oxyl free radical, 4-maleimide-2,2,6,6-tetramethylpiperidine-1-oxyl free radical, or 4-phosphonoxy-2,2,6,6-tetramethylpiperidine-1-oxyl free radical; and N-nitrosophenylhydroxylamine compounds selected from N-nitrosophenylhydroxylamine cerous salt or N-nitrosophenylhydroxylamine aluminum salt. N-nitrosophenylhydroxylamine compounds selected from N-nitrosophenylhydroxylamine cerous salt or N-nitrosophenylhydroxylamine aluminum salt are further preferable.

Particularly in the second or third embodiment, preferable thermal polymerization inhibitors include hydroquinone, p-methoxyphenol, di-t-butyl-p-cresol, pyrogallol, t-butylcatechol, benzoquinone, 4,4'-thiobis(3-methyl-6-t-butylphenol), 2,2'-methylenebis(4-methyl-6-t-butylphenol), and N-nitrosophenylhydroxyamine cerous salt.

In the first embodiment, the addition amount of polymerization inhibitor is preferably from 0.10 parts by mass to 10 parts by mass, more preferably from 0.01 parts by mass to 8 parts by mass, and most preferably from 0.05 parts by mass to 5 parts by mass, with respect to 100 parts by mass of the (C1) photopolymerization initiator.

When the addition amount of polymerization inhibitor is within the above range, curing reaction is sufficiently inhibited in non-image regions but is sufficiently promoted in image regions, whereby image forming properties and sensitivity are improved.

In the second and third embodiments, the addition amount of polymerization inhibitor is preferably from 0.01 % by mass to 5% by mass, with respect to the total solid mass of the black curable composition.

If necessary, behenic acid or a higher fatty acid derivative such as behenic acid amide may be added to prevent oxygen-induced inhibition of polymerization and may be localized to the surface of a photosensitive layer during a drying process after coating. The content of the higher fatty acid derivative is preferably from 0.5 % by mass to 10% by mass with respect to the total solid mass of the black curable composition.

### Other additives

Furthermore, in the second and third embodiments, known additives such as an inorganic filler or a plasticizer, and/or a support-adherence agent that can improve adhesiveness to a support, may be added, so as to improve the physical properties of the cured film.

### Binder Polymer

If necessary, a binder polymer may also be used in the polymerizable composition of the first embodiment for the purpose of improving film characteristics and the like. A linear organic polymer is preferably used as a binder. Any known "linear organic polymer" may be used. In order to enable development with water or a weakly alkaline aqueous solution, a linear organic polymer soluble or swellable in water or a weakly alkaline aqueous solution is preferably selected. The linear organic polymer may be selected and used depending not only on applications as a film-forming agent but also on the developer such as water, a weakly alkaline aqueous solution or an organic solvent. For example, water development can be performed when a water-soluble organic polymer is used. Examples of such a linear organic polymer include radical polymerization products having a carboxylic acid group in a side chain, such as those described in JP-ANo. 59-44615, JP-B Nos. 54-34327, 58-12577 and 54-25957, and JP-A Nos. 54-92723, 59-53836 and 59-71048, specifically, resins produced by homopolymerization or copolymerization of carboxyl group-containing monomers, resins produced by homopolymerization or copolymerization of acid anhydride-containing monomers and subsequent hydrolysis, half-esterification or half-amidation of the acid anhydride units, and epoxy acrylates produced by modification of epoxy reins with unsaturated monocarboxylic acids and/or acid anhydrides. Examples of the carboxyl group-containing monomers include acrylic acid, methacrylic acid, itaconic acid, crotonic acid, maleic acid, fumaric acid, and 4-carboxylstyrene. Examples of the acid anhydride-containing monomers include maleic anhydride.

Examples also include acidic cellulose derivatives having carboxylic acid groups in side chains. Besides the above, a product of addition of a cyclic acid anhydride to a hydroxyl group-containing polymer is also useful.

When a copolymer is used as a binder polymer (for example, an alkali-soluble resin) in the first embodiment, monomers other than the above monomers may also be used as the compounds to be copolymerized. Examples of other monomers include the following compounds of (1) to (12):
(1) acrylic esters having an aliphatic hydroxyl group and methacrylic esters having an aliphatic hydroxyl group, such as 2-hydroxyethyl acrylate, 2-hydroxypropyl acrylate, 3-hydroxypropyl acrylate, 4-hydroxybutyl acrylate, 2-hydroxyethyl methacrylate, 2-hydroxypropyl methacrylate, 3-hydroxypropyl methacrylate, and 4-hydroxybutyl methacrylate;
(2) alkyl acrylates such as methyl acrylate, ethyl acrylate, propyl acrylate, butyl acrylate, isobutyl acrylate, amyl acrylate, hexyl acrylate, 2-ethylhexyl acrylate, octyl acrylate, benzyl acrylate, 2-chloroethyl acrylate, glycidyl acrylate, 3,4-epoxycyclohexylmethyl acrylate, vinyl acrylate, 2-phenylviyl acrylate, 1-propenyl acrylate, allyl acrylate, 2-allyloxyethyl acrylate, and propargyl acrylate;
(3) alkyl methacrylates such as methyl methacrylate, ethyl methacrylate, propyl methacrylate, butyl methacrylate, isobutyl methacrylate, amyl methacrylate, hexyl methacrylate, 2-ethylhexyl methacrylate, cyclohexyl methacrylate, benzyl methacrylate, 2-chloroethyl methacrylate, glycidyl methacrylate, 3,4-epoxycyclohexylmethyl methacrylate, vinyl methacrylate, 2-phenylvinyl methacrylate, 1-propenyl methacrylate, allyl methacrylate, 2-allyloxyethyl methacrylate, and propargyl methacrylate;
(4) acrylamides and methacrylamides such as acrylamide, methacrylamide, N-methylolacrylamide, N-ethylacrylamide, N-hexylmethacrylamide, N-cyclohexylacrylamide, N-hydroxyethylacrylamide, N-phenylacrylamide, N-nitrophenylacrylamide, N-ethyl-N-phenylacrylamide, vinyl acrylamide, vinyl methacrylamide, N,N-diallylacrylamide, N,N-diallylmethacrylamide, allylacrylamide, and allylmethacrylamide;
(5) vinyl ethers such as ethyl vinyl ether, 2-chloroethyl vinyl ether, hydroxyethyl vinyl ether, propyl vinyl ether, butyl vinyl ether, octyl vinyl ether, and phenyl vinyl ether;
(6) vinyl esters such as vinyl acetate, vinyl chloroacetate, vinyl butyrate, and vinyl benzoate;
(7) styrenes such as styrene, α-methylstyrene, methylstyrene, chloromethylstyrene, and p-acetoxystyrene;
(8) vinyl ketones such as methyl vinyl ketone, ethyl vinyl ketone, propyl vinyl ketone, and phenyl vinyl ketone;
(9) olefins such as ethylene, propylene, isobutylene, butadiene, and isoprene;
(10) N-vinylpyrrolidone, acrylonitrile, methacrylonitrile, and the like;
(11) unsaturated imides such as maleimide, N-acryloylacrylamide, N-acetylmethacrylamide, N-propionylmethacrylamide, and N-(p-chlorobenzoyl)methacrylamide; and
(12) methacrylic acid monomers having a hetero atom at the α-position, such as the compounds described in JP-A Nos. 2002-309057 and 2002-311569.

In particular, the following are preferable in view of their excellent balance between film strength, sensitivity and developability: a (meth)acrylic resin having a carboxyl group and an allyl or vinyl ester group in a side chain or side chains, the alkali-soluble resins having a double bond in a side chain described in JP-A Nos. 2000-187322 and 2002-62698, and the alkali-soluble resins having an amide group in a side chain described in JP-A No. 2001-242612.

The acid group-containing urethane binder polymers described in JP-B Nos. 07-12004, 07-120041, 07-120042, and 08-12424, JP-A Nos. 63-287944, 63-287947, 01-271741, and 11-352691, and the urethane binder polymers each having acid groups and double bonds in side chains described in JP-A No. 2002-107918 are advantageous in terms of printing durability and/or compatibility with exposure at a low exposure amount, due to their remarkably high strength.

The acid group-containing, acetal-modified, polyvinyl alcohol binder polymers such as those described in European Patent Nos. 993966 and 1204000 and JP-A No. 2001-318463 are also preferred, because they have an excellent balance between film strength and developability.

Useful water-soluble linear organic polymers also include polyvinyl pyrrolidone and polyethylene oxide. Alcohol-soluble nylon or polyether of 2,2-bis-(4-hydroxyphenyl)-propane and epichlorohydrin is also useful for increasing the strength of the cured film.

The binder polymer used in the polymerizable composition of the first embodiment preferably has a weight average molecular weight of 5000 or more, more preferably of 10,000 to 300,000, and preferably have a number average molecular weight of 1000 or more, more preferably of 2,000 to 250,000. The polydispersity (weight average molecular weight/number average molecular weight) is preferably 1 or more, more preferably from 1.1 to 10.

The binder polymer may be any of a random polymer, a block polymer, or a graft polymer.

The binder polymer used in the first embodiment may be synthesized by a known conventional method. Examples of the solvent used for the synthesis include tetrahydrofuran, ethylene dichloride, cyclohexanone, methyl ethyl ketone, acetone, methanol, ethanol, ethyleneglycol monomethyl ether, ethyleneglycol monoethyl ether, 2-methoxyethyl acetate, diethyleneglycol dimethyl ether, 1-methoxy-2-propanol, 1-methoxy-2-propyl acetate, N,N-dimethylformamide, N,N-dimethylacetamide, toluene, ethyl acetate, methyl lactate, ethyl lactate, dimethylsulfoxide, and water. The solvent may be used singly, or a mixture of two or more solvents may be used.

In the process of synthesizing a binder polymer used in the polymerizable composition of first embodiment, a known compound such as an azo initiator or a peroxide initiator may be used as a radical-polymerization initiator.

In the first embodiment, the content of binder polymer with respect to the total solid amount of the polymerizable composition is preferably from 1% by mass to 40% by mass, more preferably from 3% by mass to 30% by mass, and still more preferably from 4% by mass to 20% by mass.

### Diluent

In the polymerizable composition of the first embodiment, an organic solvent may be used as a diluent, which may be selected from various organic solvents.

Examples of the organic solvent include acetone, methyl ethyl ketone, cyclohexane, ethyl acetate, ethylene dichloride, tetrahydrofuran, toluene, ethyleneglycol monomethyl ether, ethyleneglycol monoethyl ether, ethyleneglycol dimethyl ether, propyleneglycol monomethyl ether, propyleneglycol monoethyl ether, acetylacetone, cyclohexanone, diacetone alcohol, ethyleneglycol monomethyl ether acetate, ethyleneglycol ethyl ether acetate, ethyleneglycol monoisopropyl ether, ethyleneglycol monobutyl ether acetate, 3-methoxypropanol, methoxymethoxyethanol, diethyleneglycol monomethyl ether, diethyleneglycol monoethyl ether, diethyleneglycol dimethyl ether, diethyleneglycol diethyl ether, propyleneglycol monomethyl ether acetate, propyleneglycol monoethyl ether acetate, 3-methoxypropyl acetate, N,N-dimethylformamide, dimethyl sulfoxide, γ-butyrolactone, methyl lactate, and ethyl lactate.

The solvent may be used singly or a mixture of two or more thereof may be used. The concentration of the solid content relative to the organic solvent is preferably from 2 to 60 % by mass.

### Other additives

Furthermore, known additives, such as an inorganic filler, a plasticizer, and a lypophilizing agent, may be added to the polymerizable curable composition of the first embodiment, so as to improve the physical properties of the cured film.

Since the polymerizable composition of the first embodiment has high curing sensitivity and is capable of forming a high-precision light-shielding pattern in which generation of remaining matter in unexposed regions is suppressed, the polymerizable composition can be used suitably for formation of a light-shielding color filter.

### Plasticizer

In the first to third embodiments, examples of the plasticizer include dioctyl phthalate, didodecyl phthalate, triethyleneglycol dicaprylate, dimethylglycol phthalate, tricresyl phosphate, dioctyl adipate, dibutyl sebacate, and triacetyl glycerol. When a binder is used in the first embodiment, the plasticizer may be added in a ratio of 10% by mass or less with respect to the total mass of the polymerizable compound and the binder polymer. When a binder is used in the second or third embodiment, the plasticizer may be added in a ratio of 10% by mass or less with respect to the total mass of the compound having an ethylenic unsaturated double bond of (E2) or (E3) and the binder.

### Support-Adherence Agent (Adhesion Improver)

The polymerizable composition of the first embodiment may contain an adhesion improver so as to improve adhesion to a hard surface, such as a surface of a support. Examples of the adhesion improver include a silane coupling agent and a titanium coupling agent. When the black curable composition of the second or third embodiment is applied to a surface of a hard material such as a support, the black curable composition may include a support-adherence agent, which is an additive improving adhesiveness to the surface of the hard material.

The support-adherence agent (adhesion improver) may be a known substance, and is preferably a silane coupling agent, a titanate coupling agent, or an aluminum coupling agent.

Examples of the silane coupling agent in the first, second, or third embodiment include γ-(2-aminoethyl)aminopropyltrimethoxysilane, γ-(2-aminoethyl)aminopropyldimethoxysilane, β-(3,4-epoxycyclohexyl)ethyltrimethoxysilane, γ-aminopropyltrimethoxysilane, γ-aminopropyltriethoxysilane, γ-methacryloxypropyltrimethoxysilane, γ-methacryloxypropyltriethoxysilane, γ-acryloxypropyltrimethoxysilane, γ-acryloxypropyltriethoxysilane, γ-isocyanatepropyltrimethoxysilane, γ-isocyanatepropyltriethoxysilane, N-P-(N-vinylbenzylaminoethyl)- γ-aminopropyltrimethoxysilane·hydrochloride, γ-glycidoxypropyltrimetoxysilane, γ-glycidoxypropyltriethoxysilane, aminosilane, γ-mercaptopropyltrimethoxysilane, γ-mercaptopropyltriethoxysilane, methyltrimethoxysilane, methyltriethoxysilane, vinyltriacetoxysilane, γ-chloropropyltrimethoxysilane, hexamethyldisilazane, γ-anilinopropyltrimethoxysilane, vinyltrimethoxysilane, vinyltriethoxysilane, vinyltris(β-methoxyethoxy)silane, octadecyldimethyl[3-(trimethoxysilyl)propyl]ammonium chloride, γ-chloropropylmethyldimethoxysilane, γ-mercaptopropylmethyl dimethoxysilane, methyltrichlorosilane, dimethyldichlorosilane, trimethylchlorosilane, 2-(3,4-epoxycyclohexyl)ethyltrimethoxysilane, bisallyltrimethoxysilane, tetraethoxysilane, bis(trimethoxysilyl)hexane, phenyltrimethoxysilane, N-(3-acryloxy-2-hydroxypropyl)-3-aminopropyltriethoxysilane, N-(3-methacryloxy-2-hydroxypropyl)-3-aminopropyltriethoxysilane, (methacryloxymethyl)methyldiethoxysilane, and (acryloxymethyl)methyl dimethoxysilane.

Among the above, γ-methacryloxypropyltrimethoxysilane, γ-methacryloxypropyltriethoxysilane, γ-acryloxypropyltrimethoxysilane, γ-acryloxypropyltriethoxysilane, γ-mercaptopropyltrimethoxysilane, γ-aminopropyltriethoxysilane, and phenyltrimethoxysilane are preferable, and γ-methacryloxypropyl trimethoxysilane is most preferable.

Examples of the titanate coupling agent include isopropyl triisostearoyl titanate, isopropyl tridecylbenzenesulfonyl titanate, isopropyl tris(dioctylpyrophosphate) titanate, tetraisopropyl bis(dioctylphosphite) titanate, tetraoctyl bis(ditridecylphosphite) titanate, tetra(2,2-diallyloxymethyl) bis(di-tridecyl)phosphite titanate, bis(dioctylpyrophosphate) oxyacetate titanate, bis(dioctylpyrophosphate) ethylene titanate, isopropyl trioctanoyl titanate, isopropyl dimethacryl isostearoyl titanate, isopropyl isostearoyl diacryl titanate, triisopropyl tri(dioctylphosphate) titanate, isopropyl tricumylphenyl titanate, isopropyl tri(N-amidoethyl, aminoethyl) titanate, dicumylphenyl oxyacetate titanate, and diisostearoyl ethylene titanate.

The aluminum coupling agent is, for example, acetoalkoxyaluminum diisopropylate.

In the first embodiment, the addition amount of adhesion improver is preferably from 0.5% by mass to 30% by mass, and more preferably from 0.7% by mass to 20% by mass, with respect to the total solid content of the polymerizable composition.

In the second or third embodiment, the content of substrate adhesive with respect to the total solid content of the black curable composition of the invention is preferably from 0.1% by mass to 30% by mass, more preferably from 0.5% by mass to 20% by mass, and particularly preferably from 1% by mass to 10% by mass, from the viewpoint of preventing a residue of an uncured black curable composition that was not removed by development from remaining in an unexposed portion.

### Light-shielding Color Filter

A light-shielding color filter of the first embodiment is formed using the polymerizable composition of the first embodiment. A light-shielding color filter formed using the polymerizable composition of the first embodiment may suppress generation of a region (step) in a peripheral region that has a smaller film thickness than that of the central region, whereby the light-shielding properties at the central region and the peripheral region may be improved.

The step in the first embodiment means a step observed in a light-shielding color filter having a side length of at least 200 µm which is formed by applying, exposing, and developing the polymerizable composition. When the light-shielding color filter is observed from above its film surface with an optical microscope, the step is observed, in some cases, as a line substantially similar to the pattern edge of the light-shielding color filter.

Fig. 1 is a diagram schematically showing a situation in which a step is generated in a light-shielding color filter 10. The solid line represents a pattern edge 1 of the light-shielding color filter and the chain line represents a step 2. In actuality, the chain line is observed as a solid line.

The film thickness of the light-shielding color filter is smaller in a region outside the step (in Fig. 1, a region between the pattern edge 1 and the step 2) than in a region inside the step (in Fig. 1, a region surrounded by the step 2). Therefore, the light-shielding ability is lower in the region outside the step (hereinafter also referred to as "step region"), which may cause adverse effects on performance of a solid-state image pickup device, such as noise, when the light-shielding color filter is used in the solid-state image pickup device.

When a light-shielding color filter is formed using the polymerizable composition of the first embodiment, generation of a region (step region) in a peripheral region of the light-shielding color filter that has a smaller film thickness than that of a central region is suppressed and decrease in the light-shielding ability in the peripheral region is suppressed.

The film thickness of the light-shielding color filter is not particularly restricted. The film thickness of the light-shielding color filter is preferably from 0.2 µm to 50 µm, more preferably from 0.5 µm to 30 µm, and still more preferably from 0.7 µm to 20 µm, from the viewpoint of effectively obtaining effects according to the first embodiment.

The size (the length of a side) of the light-shielding color filter is preferably from 0.5 mm to 5 mm, more preferably from 0.7 mm to 4 mm, and still more preferably from 0.9 mm to 3.5 mm, from the viewpoint of more effectively obtaining effects according to the first embodiment.

### Light-shielding Color Filter and Method of Producing the Same

A light-shielding color filter of the first embodiment and a method of producing the same is described below.

The light-shielding color filter of the first embodiment has, on a support, a colored pattern formed from a polymerizable composition of the first embodiment.

In what follows, the light-shielding color filter of the first embodiment will be detailed through description of a method of producing the light-shielding color filter.

A method of producing the light-shielding color filter of the first embodiment includes a step of forming a polymerizable composition layer by coating a polymerizable composition of the first embodiment on a support (hereinafter sometimes referred to as simply "polymerizable composition layer forming step"), a step of exposing the polymerizable composition layer through a mask (hereinafter sometimes referred to as "exposure step"), and a step of forming a colored pattern by developing the polymerizable composition layer after exposure (hereinafter sometimes referred to as simply "development step").

Specifically, the polymerizable composition of the first embodiment is coated directly on a support (substrate) or coated indirectly on a support (substrate) with one or more other layers between the support and the polymerizable composition, thereby forming a polymerizable composition layer (a step of forming a polymerizable composition layer), and then the polymerizable composition layer is exposed to light via a predetermined mask pattern so as to cure the polymerizable composition layer (coating film) only in an irradiated region (a step of exposing), and then the coating film is developed with a developer (a step of developing) to form a patterned film composed of pixels, whereby a light-shielding color filter of the first embodiment is produced.

In what follows, the respective steps of the method of producing the light-shielding color filter of the first embodiment are described.

### Step of Forming Polymerizable Composition Layer

In the step of forming a polymerizable composition layer, a polymerizable composition of the first embodiment is coated on a support to form a polymerizable composition layer.

Examples of supports that can be used in the step include photoelectric conversion device substrates used in image pickup devices and the like, such as silicon substrates, and complementary metal-oxide semiconductor (CMOS). In the substrate, in some cases, black stripes for separating the respective pixels are formed.

Furthermore, an undercoat layer may be formed on the support, as required, so as to improve the adhesiveness to an upper layer, so as to inhibit diffusion of substances, or so as to flatten a surface of the substrate.

The method of coating the polymerizable composition of the first embodiment on the support may be any of various coating methods, such as a slit coating method, an inkjet coating method, a spin coating method, a cast coating method, a roll coating method, and a screen printing method.

When a color filter for a solid-state image pickup device is produced, the thickness of the coating film of the polymerizable composition is preferably from 0.35 µm to 1.5 µm, and more preferably from 0.40 µm to 1.0 µm, from the viewpoint of resolution and developability.

The polymerizable composition coated on a support is usually dried under conditions of from 70°C to 110°C for from 2 minutes to 4 minutes, whereby a polymerizable composition layer is formed.

### Exposure Step

In the exposure step, the polymerizable composition layer formed in the step of forming a polymerizable composition layer is exposed through a mask, so as to cure the coating film only in a portion irradiated with light.

The exposure is preferably conducted by irradiation with radiation. As the radiation that is used at the exposure, UV-rays such as g-line or i-line are particularly preferred. A high-pressure mercury lamp is more preferred. The irradiation intensity is preferably from 5 mJ to 1500 mJ, more preferably from 10 mJ to 1000 mJ, and most preferably from 10 mJ to 800 mJ.

### Development Step

After the exposure step, alkali development (development step) is performed to elute a portion that has not been irradiated with light in the exposure step into an alkali aqueous solution. Thereby, only a portion cured by irradiation remains.

The developer is preferably an organic alkali developer that does not damage an underlying circuit. The development temperature is usually from 20°C to 30°C, and the development time may be from 20 sec to 90 sec.

As the alkali used in the developer, an alkaline aqueous solution obtained by diluting an organic alkaline compound (such as aqueous ammonia, ethylamine, diethylamine, dimethylethanolamine, tetramethylammonium hydroxide, tetraethylammonium hydroxide, choline, pyrrole, piperidine, or 1,8-diazacyclo-[5.4.0]-7-undecene) with pure water to adjust the concentration of organic alkaline compound to be within the range of from 0.001% by mass to 10% by mass, preferably from 0.01% by mass to 1% by mass, may be used. When a such an alkaline aqueous solution is used as a developer, rinsing with pure water is usually performed after developing.

The method of producing the light-shielding color filter of the first embodiment may include, as necessary, a curing step of curing the formed colored pattern by heating and/or by exposing after the step of forming a polymerizable composition layer, the exposure step, and the development step were conducted.

The light-shielding color filter of the first embodiment is formed using a polymerizable composition of the first embodiment. Therefore, a formed colored pattern tightly adheres to a supporting substrate and the cured composition is excellent in resistance to development. As a result, a high-resolution pattern having excellent adhesiveness to a substrate in an exposed region and having a desired sectional shape may be formed with high exposure sensitivity.

Accordingly, the light-shielding color filter is preferably applied to liquid crystal display devices and solid-state image pickup devices such as CCDs, and particularly preferably applied to high resolution CCDs and CMOSs having more than 1,000,000 pixels. That is, the light-shielding color filter of the first embodiment is preferably applied to solid-state image pickup devices.

The light-shielding color filter of the first embodiment may be used as, for example, a light-shielding color filter disposed between a light receiving portion of each of the pixels constituting a CCD and a condenser micro-lens.

### Solid-state Image Pickup Device

A solid-state image pickup device of the first embodiment has a color filter that includes the light-shielding color filter of the first embodiment and, optionally, a patterned film composed of pixels of other colors (for example, three colors or four colors).

Since the solid-state image pickup device of the first embodiment has the light-shielding color filter of the first embodiment, in which decrease in light-shielding ability in a peripheral portion is suppressed, noise can be reduced and color reproducibility can be improved.

A configuration of the solid-state image pickup device of the first embodiment is not restricted particularly as long as it includes the light-shielding color filter of the first embodiment and works as a solid state image pickup device. For instance, a configuration may be adopted which has, on a support, plural light receiving devices made of photodiodes or polysilicon forming a light receiving area of a solid state image pickup device (a CCD image sensor or a CMOS image sensor), and has the light-shielding color filter of the first embodiment on a surface of the support that is at a side opposite to a surface having the light receiving device.

### Light-shielding Color Filter for Solid-state Image Pickup Device of Second Embodimend and Method of Producing the Same, and Color Filter of Third Embodiment and Method of Producing the Same

In the next place, a light-shielding color filter for a solid-state image pickup device of the second embodiment and a method of producing the same, and a color filter of the third embodiment and a method of producing the same will be described.

The light-shielding color filter for a solid-state image pickup device of the second embodiment has a pattern formed using the black curable composition of the second embodiment. The color filter of the third embodiment has, on a support, a pattern formed using the black curable composition of the third embodiment.

In what follows, the light-shielding color filter of the second embodiment for a solid-state image pickup device and the color filter of the third embodiment are detailed through production methods thereof (a production method of the light-shielding color filter of the second embodiment for a solid-state image pickup device and a production method of the color filter of the third embodiment). In the following description of the production methods, the description is common to the second and third embodiments unless otherwise specified.

A production method of the light-shielding color filter of the second embodiment for a solid-state image pickup device or a production method of the color filter of the third embodiment includes steps of applying the black curable composition of the second or third embodiment to a support, exposing the applied black curable composition to light through a mask, and developing the composition to form a (colored) pattern

Specifically, the production method includes a step of forming a black curable composition layer by coating a black curable composition on a support (hereinafter sometimes referred to as "black curable composition layer forming step"), a step of exposing the black curable composition layer to light through a mask (hereinafter sometimes referred to as "exposure step"), and a step of forming a pattern by developing the exposed black curable composition layer (hereinafter sometimes referred to as "development step").

More specifically, a light-shielding color filter of the second embodiment for a solid-state image pickup device or a color filter of the third embodiment may be produced by: applying the black curable composition of the second or third embodiment directly to a support (substrate) directly, or indirectly with other layer disposed between the support (substrate) and the black curable composition, to form a black curable composition layer (black curable composition layer forming step); exposing the black curable composition to light through a predetermined mask pattern to cure only a portion of the coating film that is irradiated with the light (exposure step); and developing the black curable composition with a developer (development step) to form a patterned film composed of black pixels.

In what follows, the respective steps in the production method of the light-shielding color filter of the second embodiment for a solid-state image pickup device and the production method of the color filter of the third embodiment are described.

### Black Curable Composition Layer Forming Step

In the black curable composition layer forming step, the black curable composition of the second or third embodiment is coated on a support to form a black curable composition layer.

Examples of the substrate that can be used in this step include soda glass, PYREX (registered trademark) glass, quartz glass and substrates each obtained by attaching a transparent conductive film to any of these materials, which are used in liquid crystal display devices and the like; photoelectric conversion element substrates that are used in image pickup devices (for example, solid-state image pickup devices), such as a silicon substrate; and complementary metal oxide semiconductors (CMOS). These substrates may have black stripes that separate the respective pixels.

Furthermore, on these substrates, an undercoat layer (another layer) may be provided, if necessary, for the purpose of improving the adhesion with upper layers, preventing material diffusion, or flattening the substrate surface.

The method of coating the black curable composition of the invention on the support may be selected from various types of coating methods, such as a slit coating method, an inkjet method, a spin coating method, a cast coating method, a roll coating method, and a screen printing method.

The thickness of the coating film of the black curable composition after drying is preferably in the range of from 0.1 µm to 10 µm, more preferably in the range of from 0.2 µm to 5 µm, and still more preferably in the range of from 0.2 µm to 3 µm.

Furthermore, when a color filter for a solid-state image pickup device is produced, the thickness of the coating film of the black curable composition is preferably in the range of from 0.35 µm to 1.5 µm, and more preferably in the range of from 0.40 µm to 1.0 µm, from the viewpoint of resolution and developability.

The black curable composition coated on the support is usually dried under conditions of from 70 to 110°C for 2 minutes to 4 minuntes, thereby providing a black curable composition layer.

### Exposure Step

In the exposure step, a black curable composition layer formed in the black curable composition layer forming step is exposed to light through a mask, thereby curing only a portion of the coating film that is irradiated with the light.

The exposure is preferably conducted by irradiation with a radiation. As the radiation used in the exposure, UV-rays such as g-line or i-line are preferable, and a high-pressure mercury lamp is more preferred. The irradiation intensity is preferably in the range of from 5 mJ/cm² to 1500 mJ/cm², more preferably in the range of from 10 mJ/cm² to 1000 mJ/cm², and most preferably in the range of from 10 mJ/cm² to 800 mJ/cm².

### Development Step

After the exposure step, alkali development (development step) is performed to elute a portion, which has not been exposed to light in the exposure step, into an alkali aqueous solution. Thereby, only a portion that has been cured by light is left.

The developer is preferably an organic alkali developer that does not damage an underlying circuit. The development temperature is usually in the range of from 20 to 30°C, and the development time may be in the range of 20 to 90 sec.

The developer may be an inorganic alkali developer which includes an inorganic alkali sodium hydroxide, potassium hydroxide, sodium carbonate, sodium hydrogen carbonate, sodium silicate, or sodium metasilicate. However, the developer is preferably an organic developer, which may be an alkaline aqueous solution in which an organic alkali compound is diluted with pure water to a concentration of from 0.001 to 10% by mass, preferably from 0.01 to 1% by mass. Examples of the organic alkali compound include aqueous ammonia, ethylamine, diethylamine, dimethylethanolamine, tetramethylammonium hydroxide, tetraethylammonium hydroxide, choline, pyrrole, piperidine, and 1,8-diazacyclo-[5,4,0]-7-undecene. When such an alkaline aqueous solution is used as a developer, rincing with pure water is usually performed after the development.

In the production method of the light-shielding color filter of the second embodiment for a solid-state image pickup device or the production method of the color filter of the third embodiment, a curing step of curing the formed pattern by heating and/or exposing to light may be performed, as necessary, after the black curable composition layer forming step, the exposure step, and the development step are conducted.

By performing the black curable composition layer forming step, the exposure step, and the development step, and optionally the curing step, which are described above, a light-shielding color filter of the second embodiment for a solid-state image pickup device or the color filter of the third embodiment may be produced.

Furthermore, when a chromatic curable composition obtained by replacing the (A1) or (A2) titanium black contained in the black curable composition by a colorant having a desired hue (for instance, a pigment or dye having a chromatic color) is used in the black curable composition layer forming step, chromatic curable compositions layers corresponding to RGB may be formed (hereinafter sometimes referred to as "chromatic curable composition layer forming step").

Accordingly, for example, when the chromatic curable composition layer forming step, exposure step, and development step (and, optionally, curing step) are repeatedly performed on the light-shielding color filter for a solid-state image pickup device obtained as described above, for the number of times corresponding to the number of the desired hues, a color filter with a chromatic pattern having desired hues can be prepared.

### Solid-state Image Pickup Device

A solid-state image pickup device of the second embodiment includes the light-shielding color filter of the second embodiment for a solid-state image pickup device.

The light-shielding color filter of the second embodiment for a solid-state image pickup device is formed using the black curable composition of the second embodiment. Therefore, a formed colored pattern tightly adheres to a supporting substrate and the cured composition is excellent in resistance to development. As a result, a high-resolution pattern having excellent adhesiveness to a substrate in an exposed region and having a desired sectional shape may be formed with high exposure sensitivity. Accordingly, the light-shielding color filter is preferably applied to high resolution CCDs and CMOSs having more than 1,000,000 pixels.

The light-shielding color filter of the second embodiment for a solid-state image pickup device may be used as, for example, a light-shielding color filter disposed between a light receiving portion of each of the pixels constituting a CCD and a condenser micro-lens.

The light-shielding color filter of the third embodiment is formed using the black curable composition of the third embodiment. Therefore, a formed colored pattern tightly adheres to a supporting substrate and the cured composition is excellent in resistance to development. As a result, a high-resolution pattern having excellent adhesiveness to a substrate in an exposed region and having a desired sectional shape may be formed with high exposure sensitivity.

Accordingly, the light-shielding color filter is preferably applied to liquid crystal display devices and solid-state image pickup devices such as CCDs, and particularly preferably applied to high resolution CCDs and CMOSs having more than 1,000,000 pixels. That is, the light-shielding color filter of the third embodiment is preferably applied to solid-state image pickup devices.

The light-shielding color filter of the third embodiment may be used as, for example, a light-shielding color filter disposed between a light receiving portion of each of the pixels constituting a CCD and a condenser micro-lens or disposed around a light receiving portion.

### EXAMPLES

In what follows, the present invention is described more specifically by reference to examples. However, the invention is not restricted to the examples described below as long as the gist of the invention is maintained. Unless otherwise specified, "parts" and "%" are based on weight.

### (Examples Corresponding to First Embodiment)

### [Preparation of Polymerizable Composition]

### <Preparation of Carbon Black Dispersion A>

Composition 1 described below was subjected to a high viscosity dispersing process with a two-roll mill, whereby a dispersion was obtained. The viscosity of the obtained dispersion was 70,000 mPa·s.

Thereafter, Composition 2 described below was added to the dispersion, and the resultant mixture was stirred with a homogenizer under a condition of 3000 rpm for 3 hrs. The obtained mixture solution was finely dispersed using a dispersing device (trade name: DISPERMAT, manufactured by Getzmann Inc.,) with 0.3 mm zirconia beads for 4 hrs, whereby a carbon black dispersion liquid A (hereinafter referred to as "CB dispersion liquid A") was prepared. The viscosity of the obtained mixture solution was 37 mPa·s.

### (Composition 1)

| | |
|---|---|
| • Carbon black (trade name: PIGMENT BLACK 7, average primary particle diameter: 15 nm): | 23 parts |
| • 45% propylene glycol monomethyl ether acetate solution of the specific alkali-soluble resin or comparative resin shown in Table 1: | 22 parts |
| • SOLSPERSE 5000 (trade name, manufactured by Zeneca) (dispersant): | 1.2 parts |

### (Composition 2)

| | |
|---|---|
| • 45% propylene glycol monomethyl ether acetate solution of the specific alkali-soluble resin or comparative resin shown in Table 1 (BzMA/MAA = 70/30, Mw: 30,000): | 22 parts |
| • Propylene glycol monomethyl ether acetate: | 200 parts |

### <Preparation of Titanium Black Dispersion A>

Composition 3 described below was subjected to a high viscosity dispersing process with a two-roll mill, whereby a dispersion was obtained. The viscosity of the obtained dispersion was 40,000 mPa·s.

Before the high viscosity dispersing process, kneading with a kneader may be performed for 30 min.

### <Composition 3>

| | |
|---|---|
| • TITANIUM BLACK 13M-C (trade name, manufactured by Mitsubishi Materials Co., Ltd., average primary particle diameter: 75 nm) (Pigment Black 35): | 39 parts |
| • Propylene glycol monomethyl ether acetate solution of the specific alkali-soluble resin shown in Table 1: | 8 parts |
| • SOLSPERSE 5000 (trade name, manufactured by Zeneca) (dispersant): | 1 parts |

Composition 4 described below was added to the obtained dispersion, and the resultant mixture was stirred with a homogenizer under a condition of 3000 rpm for 3 hrs. The obtained mixed solution was finely dispersed using a dispersing device (trade name: DISPERMAT, manufactured by Getzmann Inc.,) with 0.3 mm zirconia beads for 4 hrs, whereby a titanium black dispersion liquid A (hereinafter, referred to as "TB dispersion liquid A") was obtained.

The viscosity of the obtained mixed solution was 7.0 mPa·s.

### <Composition 4>

| | |
|---|---|
| Propylene glycol monomethyl ether acetate solution of the specific alkali-soluble resin shown in Table 1: | 8 parts |
| • Propylene glycol monomethyl ether acetate: | 200 parts |

### <Preparation of Titanium Black Dispersion B>

A titanium black dispersion B was prepared in the same manner as the preparation of the titanium black dispersion A, except that TILACK D (trade name, manufactured by Ako Kasei Co., Ltd.) was used in place of the TITANIUM BLACK 13M-C (trade name, manufactured by Mitsubishi Materials Corporation) used in the titanium black dispersion A.

### (Examples 1-1 to 1-16 and Comparative Examples 1-1 to 1-3)

### <Preparation of Polymerizable Compositions A-1 to A-12, B-1, C-1, D-1, and E-1 and Comparative Compositions A'-1 to A'-3>

Components of each of Compositions A to E below were mixed with a stirrer, whereby Polymerizable Compositions A-1 to A-12, B-1, C-1, D-1, and E-1, and Comparative Compositions A'-1 to A'-3 were prepared.

### (Composition A)

| | |
|---|---|
| • Methacrylate/acrylic acid copolymer (binder polymer): | 1.6 parts |
| • Dipentaerythritol hexaacrylate (polymerizable compound): | 2.3 parts |
| • Ethoxylated pentaerythritol tetraacrylate (polymerizable compound): | 0.8 parts |
| • CB dispersion liquid A or TB dispersion liquid A shown in Table 1 below: | 24 parts |
| • Propylene glycol monomethyl ether acetate (diluent): | 10 parts |
| • Ethyl 3-ethoxypropionate: | 8 parts |
| • Photopolymerization initiator (a compound shown in Table 1 below): | an amount shown in Table 1 below |
| • 4-methoxyphenol as a polymerization inhibitor: | 0.01 parts |

### (Composition B)

Composition B had the same the composition as that of Composition A, except that the "TB dispersion B shown in Table 1" was used in place of the "TB dispersion A shown in Table 1" used in Composition A.

### (Composition C)

Composition C had the same composition as that of Composition A, except that 24 parts of "CB dispersion A or TB dispersion A shown in Table 1" used in Composition A was replaced by 20 parts of the TB dispersion A used in Polymerizable Composition A-1 (see Table 1), and the amount of the methacrylate/acrylic acid copolymer (binder polymer) was changed from 1.6 parts to 5.0 parts.

### (Composition D)

Composition D had the same composition as that of Composition A, except that 24 parts of "CB dispersion A or TB dispersion A shown in Table 1" was replaced by 45 parts of the TB dispersion A used in Polymerizable Composition A-1 (see Table 1), and 1.6 parts of the methacrylate/acrylic acid copolymer (binder polymer) in Composition A was replaced by 0.652 parts of the methacrylate/acrylic acid copolymer (binder polymer).

### (Composition E)

Composition E had the same composition as that of Composition A, except that 24 parts of "CB dispersion A or TB dispersion A shown in Table 1" was replaced by 45 parts of the TB dispersion A used in Polymerizable Composition A-1 (see Table 1), 1.6 parts of the methacrylate/acrylic acid copolymer (binder polymer) in Composition A was replaced by 0 parts thereof, and 2.3 parts of dipentaerythritol hexaacrylate (polymerizable compound) in Composition A was replaced by 0.582 parts of dipentaerythritol hexaacrylate.

**Table 1**

| | Polymerizable compound or comparative compound | Composition | TB dispersion or CB dispersion | | Content of TB with respect to total solid content of polymerizable composition (%) | Photopolymerization initiator | | Exposure require -ment Amount (mJ/cm²) | Storage stability | Developability | Step width (µm) |
|---|---|---|---|---|---|---|---|---|---|---|---|
| | | | Type of dispersion | Specific alkali-soluble resin or comparative resin | | Type | Content (parts by mass) | | | | |
| Example 1-1 | A-1 | A | TB dispersion A | Exemplary compound 10 | 45% | Compound 1 | 0.8 | 1000 | A | A | 10 |
| Example 1-2 | A-2 | A | TB dispersion A | Exemplary compound 14 | 45% | Compound 1 | 0.8 | 1000 | A | A | 10 |
| Example 1-3 | A-3 | A | TB dispersion A | Exemplary compound 20 | 45% | Compound 1 | 0.8 | 1000 | A | A | 10 |
| Example 1-4 | A-4 | A | TB dispersion A | Exemplary compound 21 | 45% | Compound 1 | 0.8 | 1200 | A | A | 10 |
| Example 1-5 | A-5 | A | TB dispersion A | Exemplary compound 23 | 45% | Compound 1 | 0.8 | 1200 | A | A | 10 |
| Example 1-6 | A-6 | A | TB dispersion A | Exemplary compound 30 | 45% | Compound 1 | 0.8 | 1000 | A | A | 10 |
| Example 1-7 | A-7 | A | TB dispersion A | Exemplary compound 31 | 45% | Compound I | 0.8 | 1000 | A | A | 10 |
| Example 1-8 | A-8 | A | TB dispersion A | Exemplary compound 22 | 45% | Compound 2 | 0.8 | 1000 | A | A | 10 |
| Example 1-9 | *A-9 | A | TB dispersion A | Exemplary compound 22 | 45% | Compound 3 | 0.8 | 1500 | A | A | 10 |
| Example 1-10 | *A-10 | A | TB dispersion A | Exemplary compound 22 | 45% | Compound 4 | 0.7 | 1800 | A | A | 10 |
| Example 1-11 | A-11 | A | TB dispersion A | Exemplary compound 22 | 45% | Compound 5 | 0.7 | 800 | A | A | 10 |
| Example 1-12 | A-12 | A | TB dispersion A | Exemplary compound 22 | 45% | Compound 6 | 0.7 | 700 | A | A | 10 |
| Example 1-13 | B-1 | B | TB dispersion B | Exemplary compound 10 | 45% | Compound 1 | 0.8 | 1000 | A | A | 10 |
| Example 1-14 | C-1 | C | TB dispersion A | Exemplary compound 10 | 37% | Compound 1 | 0.8 | 800 | A | A | 50 |
| Example 1-15 | D-1 | D | TB dispersion A | Exemplary compound 10 | 56% | Compound 1 | 0.8 | 2000 | A | A | 20 |
| Example 1-16 | E-1 | E | TB dispersion A | Exemplary compound 10 | 84% | Compound 1 | 0.8 | 5000 | A | A | 50 |
| Comparative Example 1-1 | A'-1 | A | TB dispersion A | Comparative compound 1 | 45% | Compound 1 | 0.8 | 2000 | A | A | 100 |
| Comparative Example 1-2 | A'-2 | A | CB dispersion A | Comparative compound 1 | 43% | Compound 1 | 0.8 | 3000 | A | B | 250 |
| Comparative Example 1-3 | A'-3 | A | CB dispersion A | Exemplary compound 22 | 43% | Compound 1 | 0.8 | 2000 | C | B | 240 |

| | | | | | | | | | | | |
|---|---|---|---|---|---|---|---|---|---|---|---|
| *Comparative | | | | | | | | | | | |

### (Examples 2-1 to 2-12 and Comparative Examples 2-1 to 2-3)

### <Preparation of Polymerizable Compositions Y-1 to Y-12 and Y'-1 to Y'-3>

Components of Composition Y described below were mixed with a stirrer, whereby Polymerizable Compositions Y-1 to Y-12, and Y'-1 to Y'-3 were prepared.

### (Composition Y)

| | |
|---|---|
| • Dipentaerythritol hexaacrylate (polymerizable compound): | 2.3 parts |
| • CB dispersion liquid A or TB dispersion liquid A shown in Table 2 below: | 24 parts |
| • Propylene glycol monomethyl ether acetate (diluent): | 10 parts |
| • Ethyl 3-ethoxypropionate: | 8 parts |
| • Photopolymerization initiator: a compound shown in Table 2 below: | an amount shown in Table 2 below |
| • 4-methoxyphenol as a polymerization inhibitor: | 0.01 parts |

**Table 2**

| | Polymerizable compound or comparative compound | Composition | TB dispersion or CB dispersion | | Content of TB with respect to total solid content of polymerizable composition (%) | Photopolymerization initiator | | Exposure require -ment amount (mJ/cm²) | Storage stability | Developability | Step width (µm) |
|---|---|---|---|---|---|---|---|---|---|---|---|
| | | | Type of dispersion | Specific alkali-soluble resin or comparative resin | | Type | Content (parts by mass) | | | | |
| Example 2-1 | Y-1 | Y | TB dispersion A | Exemplary compound 10 | 55% | Compound 1 | 0.8 | 2000 | A | A | 20 |
| Example 2-2 | Y-2 | Y | TB dispersion A | Exemplary compound 14 | 55% | Compound 1 | 0.8 | 2000 | A | A | 20 |
| Example 2-3 | Y-3 | Y | TB dispersion A | Exemplary compound 20 | 55% | Compound 1 | 0.8 | 2000 | A | A | 20 |
| Example 2-4 | Y-4 | Y | TB dispersion A | Exemplary compound 21 | 55% | Compound 1 | 0.8 | 2200 | A | A | 20 |
| Example 2-5 | Y-5 | Y | TB dispersion A | Exemplary compound 23 | 55% | Compound 1 | 0.8 | 2200 | A | A | 20 |
| Example 2-6 | Y-6 | Y | TB dispersion A | Exemplary compound 30 | 55% | Compound 1 | 0.8 | 2000 | A | A | 20 |
| Example 2-7 | Y-7 | Y | TB dispersion A | Exemplary compound 31 | 55% | Compound 1 | 0.8 | 2000 | A | A | 20 |
| Example 2-8 | Y-8 | Y | TB dispersion A | Exemplary compound 22 | 55% | Compound 2 | 0.8 | 2000 | A | A | 20 |
| Example 2-9 | *Y-9 | Y | TB dispersion A | Exemplary compound 22 | 55% | Compound 3 | 0.8 | 2300 | A | A | 20 |
| Example 2-10 | *Y-10 | Y | TB dispersion A | Exemplary compound 22 | 55% | Compound 4 | 0.8 | 2300 | A | A | 20 |
| Example 2-11 | Y-11 | Y | TB dispersion A | Exemplary compound 22 | 55% | Compound 5 | 0.8 | 1900 | A | A | 20 |
| Example 2-12 | Y-12 | Y | TB dispersion A | Exemplary compound 22 | 55% | Compound 6 | 0.8 | 1800 | A | A | 20 |
| Comparative Example 2-1 | Y'-1 | Y | TB dispersion A | Comparative compound 1 | 55% | Compound 1 | 0.8 | 3000 | A | B | 100 |
| Comparative Example 2-2 | Y'-2 | Y | CB dispersion A | Comparative compound 1 | 58% | Compound 1 | 0.8 | 3500 | A | C | 280 |
| Comparative Example 2-3 | Y'-3 | Y | CB dispersion A | Exemplary compound 22 | 58% | Compound 1 | 0.8 | 3000 | C | C | 270 |

| | | | | | | | | | | | |
|---|---|---|---|---|---|---|---|---|---|---|---|
| *Comparative | | | | | | | | | | | |

In Tables 1 and 2, "TB" represents titanium black, and "CB" represents carbon black. The photopolymerization initiators in Tables 1 and 2 are as shown below.

The "exemplary compounds 2 to 31 " shown as specific alkali-soluble resins in Tables 1 and 2 correspond to the exemplary compounds 2 to 31, respectively, shown above as specific examples of the specific alkali-soluble resin of the first embodiment.

The comparative compound 1 shown in Tables 1 and 2 represents a propylene glycol monomethyl ether acetate solution of a benzyl (meth)acrylate/(meth)acrylic acid copolymer (BzMA/MAA = 70/30, Mw: 30,000, solid content: 40% by mass).

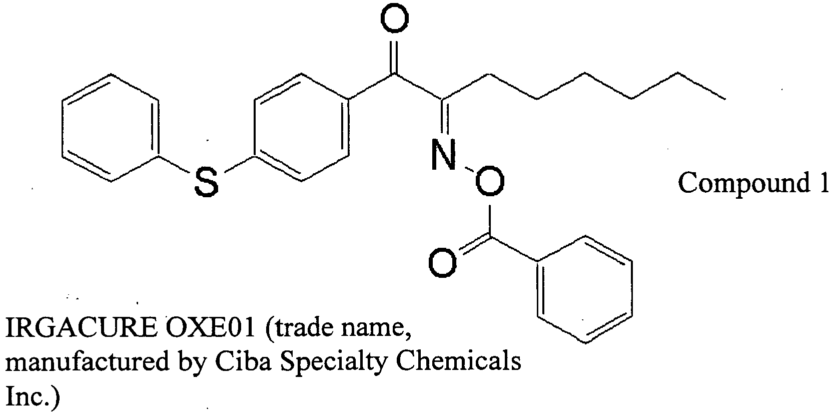

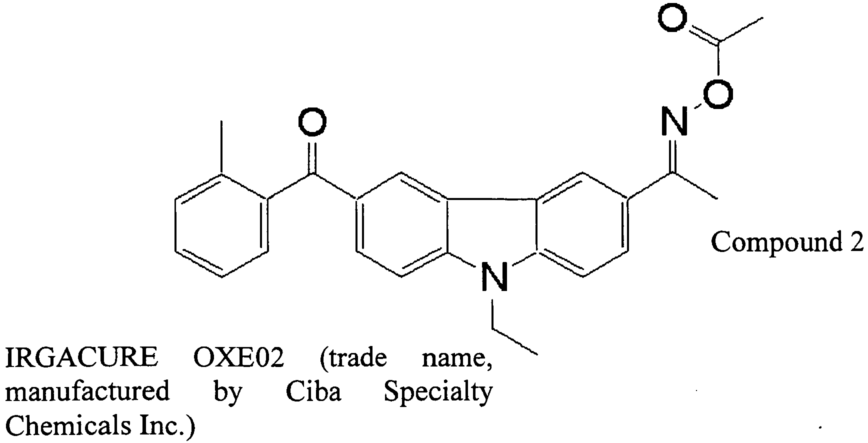

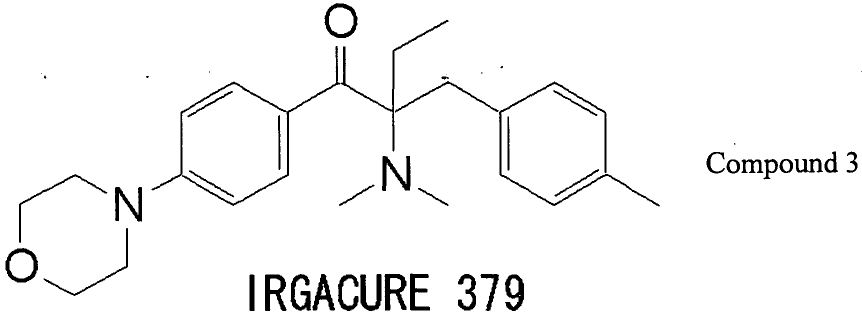

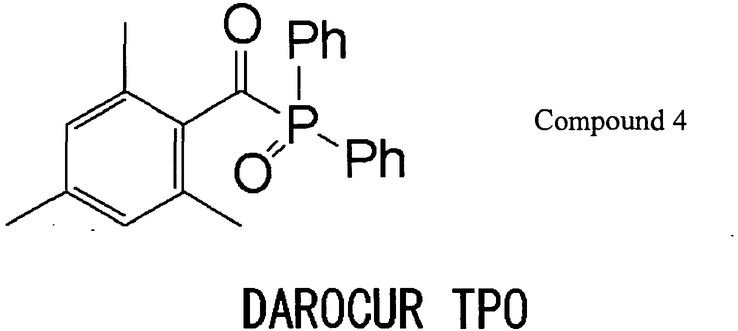

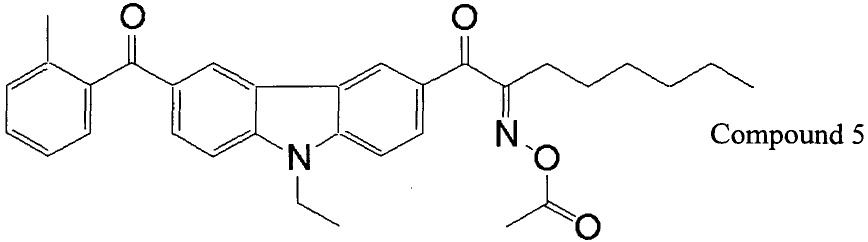

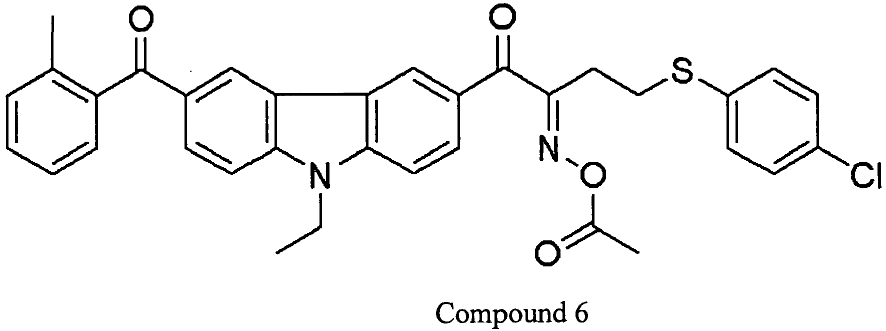

### [Evaluation]

The polymerizable compositions or comparative compositions (A-1 to A-12, B-1, C-1, D-1, E-1, A'-1 to A'-3, Y-1 to Y-12 and Y'-1 to Y'-3) obtained as described above were evaluated as described below. Results thereof are shown in Tables 1 and 2.

### -Evaluation of Exposure Sensitivity-

In the beginning, the exposure sensitivity of each of the polymerizable compositions or comparative compositions (A-1 to A-12, B-1, C-1, D-1, E-1, A'-1 to A'-3, Y-1 to Y-12 and Y'-1 to Y'-3) prepared as described above was obtained in the following manner, and was evaluated.

Each of the polymerizable compositions was coated uniformly on a silicon wafer by spin coating while regulating the coating rotation number of the spin coating such that the thickness of the film became 1.0 µm after the film was subjected to a heating treatment at a surface temperature of 120°C for 120 sec using a hot plate, whereby a coating film having a thickness of 1.0 µm was obtained.

Then, an i-line stepper FPA-3000iS+ (trade name, manufactured by Canon Inc.) was used to expose the coating film to light through a photomask having a 3.0mm-square pattern at an exposure amount varied in the range of from 100 mJ/cm² to 5000 mJ/cm² at an interval of 100 mJ/cm².

After irradiation, the coating film was subjected to a paddle develpment at 23°C for 60 sec using a 0.3% aqueous solution of tetramethylammonium hydroxide (TMAH), rinsed with pure water for 20 sec by spin shower, and then washed with pure water. Thereafter, attached water drops were removed using a high-pressure air, and the substrate was allowed to naturally dry, whereby a black image pattern was obtained.

The resultant black image pattern was evaluated using an optical microscope according to the following criteria.

The minimum exposure amount at which the post-development thickness of the region that was irradiated with light in the exposure step became 95% or more of the thickness (100%) of the coating film before the exposure was evaluated as an exposure requirement amount. A smaller exposure requirement amount indicates a higher sensitivity.

### - Evaluation of Storage Stability (Stability over Time) -

The storage stability of each of the polymerizable compositions parepared as described above was evaluated according to the following method: after each of the polymerizable compositions was stored at room temperature for one month, the degree of change in viscosity was evaluated according to the following criteria.

### -Evaluation Criteria-

A: Change in viscosity is 0% or more but less than 3%.
B: Change in viscosity is 3% or more but less than 10%.
C: Change in viscosity is 10% or more.

### -Evaluation of Developability-

The developability of each of the polymerizable compositions prepared as described above was evaluated according to the following method: a region that was not irradiated with light (unexposed portion) in the exposure step in the sensitivity evaluation was observed with a SEM with respect to whether or not a residue is present, and developability was evaluated. Evaluation criteria are as follows.

### - Evaluation Criteria -

A: No residue was observed in an unexposed region.
B: Residue was slightly observed in an unexposed region, but is at a practically non-problematic level.
C: A lot of residue was observed in an unexposed region.

### - Evaluation of Step -

The obtained light-shielding film pattern (pattern formed from a polymerizable composition) was photographed with an optical microscope (magnification: 100 times) and the width of the step was measured. More specifically, as shown in Fig. 1, in a light-shielding film (light-shielding color filter) 10, the width of a region between pattern edge 1, which is an edge portion of a pattern formed from a polymerizable composition, and boundary line 2 of a step region (a region in a peripheral portion of a light-shielding color filter that has a smaller film thickness than that of a central portion) was measured. A narrower width of the step region indicates more improved light-shielding properties of the central portion portion and the peripheral portion.

As is obvious from Tables 1 and 2, the polymerizable compositions of the first embodiment are excellent in exposure sensitivity and storage stability, and show excellent developability without leaving a residue in an unexposed portion. Since the cured compositions obtained therefrom were excellent in resistance to development, it is found that the polymerizable compositions of the first embodiment are excellent in the curability. Furthermore, it is found that the polymerizable compositions of the first embodiment have sufficient light-shielding properties that a light-shielding color filter for a solid-state image pickup device is required to possess.

It is also found that when an oxime compound was used as a photopolymerization initiator (Examples 1-1 to 1-8, and 1-11 to 1-12), the exposure sensitivity and the stability over time were superior to those achieved when an oxime compound was not used (Examples 1-9 to 1-10).

Examples 1-1 to 1-13, 1-15 and 2-1 to 2-12 in which the content of titanium black with respect to the total solid content of the polymerizable composition was from 40% by mass to 80% by mass had a wider step region in comparison with Examples 1-14 and 1-16 in which the content of titanium black was outside the range. Accordingly, it is understood that, when the content of titanium black with respect to the total solid content of the polymerizable composition is from 40% by mass to 80% by mass, more improved light-shielding properties of a center portion and a peripheral portion are obtained, compared to a case in which the content of titanium black is outside the range.

### (Example 3-1)

### <Preparation of Solid-state Image pickup device>

### - Preparation of Chromatic Polymerizable Composition -

Each of Polymerizable Composition R-1 for red (R), Polymerizable Composition G-1 for green (G), and Polymerizable Composition B-1 for blue (B) was prepared in the same manner as the preparation of Polymerizable Composition Y-1 prepared in Example 2-1, except that titanium black (a black pigment) was replaced by a chromatic pigment described below.

### Chromatic Pigment for forming Each of RGB-Colored Pixels

### • Red (R) pigment

C. I. Pigment Red 254

### • Green (G) pigment

A 30/70 mixture (by mass ratio) of C. I. Pigment Green 36 and C. I. Pigment Yellow 219

### • Blue (B) pigment

A 30/70 mixture (by mass ratio) of C. I. Pigment Blue 15:6 and C. I. Pigment Violet 23

### - Preparation of Color Filter for a Solid-state Image pickup device -

The light-shielding color filter prepared in Example 2-1 was used as a black matrix, and, on the black matrix, a red (R)-colored pattern having a pixel size of 1.6 µm × 1.6 µm was formed using Red (R)-colored Polymerizable Composition R-1, in a manner similar to the method described in Example 2-1. Similarly, Green (G)-colored Polymerizable Composition G-1 and Blue (B)-colored Polymerizable Composition B-1 were sequentially applied to form a green (G) chromatic pattern having a pixel size of 1.6 µm × 1.6 µm and a blue (B) chromatic pattern having a pixel size of 1.6 µm × 1.6 µm, respectively, whereby a color filter for a a solid-state image pickup device was prepared.

### - Evaluation -

When the full-color color filter was incorporated into a solid-state image pickup device, it was confirmed that the obtained solid-state image pickup device had high resolution and excellent color separation properties, and the light-shielding color filter therein had excellent light-shielding properties.

### (Example Corresponding to Second Embodiment)

First, alkali-soluble resins 4-1 to 4-12 to be used in Examples 4-1 to 4-15 and Comparative Examples 4-1 and 4-2 were synthesized as follows.

### (Synthesis Example 4-1) Synthesis of Alkali-soluble Resin 4-1

### - Composition 2-1 -

| | |
|---|---|
| • Methacrylic acid (monomer): | 20 g |
| • Benzyl methacrylate (monomer): | 70 g |
| • Styrene (monomer): | 10 g |
| • 2,2'-azobis(methyl 2-methylpropionate) (initiator F) | 5.0 g |
| • 1-methoxy-2-propanol (solvent) | 100 g |

A monomer solution for dropwise addition obtained by mixing the components of Composition 2-1 was added dropwise over 6 hrs into 100g of 1-methoxy-2-propanol heated at 80°C, under a nitrogen atmosphere.

Thereafter, 1.0 g of 2,2'-azobis(methyl 2-methylpropionate) was added thereinto, and the temperature was increased to 90°C and maintained at that temperature for 2 hrs. To the solution, 1-methoxy-2-propanol was added to prepare a 30% by mass solution, whereby alkali-soluble resin 4-1, which is an alkali-soluble resin (S), was obtained.

The monomer composition of the generated alkali-soluble resin 4-1, the type (initiator F) and amount of the polymerization initiator used in the synthesis of alkali-soluble resin 4-1, and the weight average molecular weight (Mw), the value of the molecular weight distribution (Mw/Mn) and the acid value of alkali-soluble resin 4-1 are shown in Table 3 below.

**Table 3**

| | Monomer 1 | | Monomer 2 | | Monomer 3 | | Initiator | | Weight average molecular weight | Molecular weight distribution (Mw/Mn) | Acid value |
|---|---|---|---|---|---|---|---|---|---|---|---|
| | Type | Amount | Type | Amount | Type | Amount | Type | Amount | | | mgKOH/g |
| Resin 4-1 | Methacrylic acid | 20 | Benzyl methacrylate | 70 | Styrene | 10 | F | 5.0 | 19,000 | 2.5 | 130 |
| Resin 4-2 | Acrylic acid | 10 | Benzyl methacrylate | 80 | Butyl methacrylate | 10 | G | 5.0 | 18,000 | 2.3 | 80 |
| Resin 4-3 | Methacrylic acid | 10 | Cyclohexyl methacrylate | 90 | - | - | F | 10.0 | 10,000 | 2.1 | 65 |
| Resin 4-4 | Methacrylic acid | 15 | Methyl methacrylate | 85 | - | - | F | 15.0 | 7,000 | 2.2 | 100 |
| Resin 4-5 | Acrylic acid | 20 | Benzyl methacrylate | 80 | - | - | F | 5.0 | 18,000 | 2.5 | 155 |
| Resin 4-6 | Methacrylic acid | 5 | Acrylic acid | 5 | Benzyl methacrylate | 90 | G | 20.0 | 5,000 | 2.1 | 72 |
| Resin 4-7 | Acrylic acid | 9 | Benzyl methacrylate | 70 | 2-hydroxyethyl methacrylate | 21 | G | 7.0 | 15,000 | 2.2 | 70 |
| Resin 4-8 | Compound X | 35 | Benzyl methacrylate | 65 | - | - | F | 10.0 | 10,000 | 2.1 | 85 |
| Resin 4-9 | Methacrylic acid | 20 | Styrene | 80 | - | - | F | 5.0 | 19,000 | 2.1 | 130 |
| Resin 4-10 | Methacrylic acid | 20 | Benzyl methacrylate | 70 | Styrene | 10 | F | 5.0 | 18,000 | 1.8 | 130 |
| Resin 4-11 | Methacrylic acid | 20 | Benzyl methacrylate | 70 | Styrene | 10 | F | 6.0 | 15,000 | 3.1 | 130 |
| Resin 4-12 | Methacrylic acid | 20 | Benzyl methacrylate | 70 | Styrene | 10 | F | 4.0 | 22,000 | 2.8 | 130 |

In Table 3, the unit of "amounts" of monomer 1 to monomer 3 and initiators is "g" in every case.

In the columns for initiator in Table 3, F shown as "Type" is 2,2'-azobis(methyl 2-methylpropionate) and G is 2,2'-azobis(isobutylonitrile). In the columns for initiator in Table 3, "amount" is an initial addition amount when the initiator is mixed with monomers.

Resin 4-1 in Table 3 represents alkali-soluble resin 4-1 shown above, and resins 4-2 to 4-12 indicate alkali-soluble resins 4-2 to 4-12 described below.

Furthermore, the weight average molecular weights (Mw) and molecular weight distributions (Mw/Mn) of alkali-soluble resins 4-1 to 4-12 shown in Table 3 were calculated by conducting a GPC measurement under the following measurement conditions.
Device: HLC-8220GPC (trade name, manufactured by Tosoh Corporation)
Detector: Differential refractometer (RI detector)
Pre-column
   TSKGUARDCOLUMN MP(XL) 6 mm × 40 mm (trade name, manufactured by Tosoh Corporation)
Sample side column: Four columns are directly connected to each other wherein each column is the following column (all manufactured by Tosoh Corporation)
   TSK-GEL MULTIPORE-HXL-M 7.8 mm × 300 mm
Reference side column: the same as the sample side column
Thermostat temperature: 40°C,
Mobile phase: tetrahydrofuran,
Flow rate of sample side mobile phase: 1.0 mL/min,
Flow rate of reference side mobile phase: 0.3 mL/min,
Sample concentration: 0.1% by mass
Sample injection amount: 100 µL,
Data sampling time: 16 to 46 min after sample injection,
Sampling pitch: 300 msec

### (Synthesis Examples 4-2 to 4-9) Synthesis of Alkali-soluble Resins 4-2 to 4-9

Each of alkali-soluble resins 4-2 to 4-9, which are alkali-soluble resin (S), was obtained in a manner similar to Synthesis Example 4-1, except that a monomer solution for dropwise addition was prepared by changing the monomer and polymerization initiator (initiator F) used in the synthesis of alkali-soluble resin 4-1 to the monomer and polymerization initiator of the composition described in Table 3. Compound X used in the synthesis of resin 4-8 has a structure shown below.

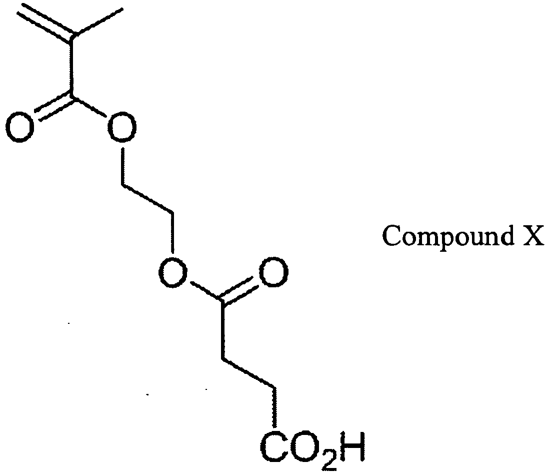

### (Synthesis Example 4-10) Synthesis of Alkali-soluble Resin 4-10

A solution obtained by mixing components shown in Composition 2-1 was added dropwise over 6 hrs under a nitrogen atmosphere into 100 g of 1-methoxy-2-propanol heated at 80°C, and the heating was further continued for 2 hrs.

Thereafter, the resultant solution was added dropwise into a mixed solvent of 200 mL of methanol and 800 mL of water. The resultant solid was collected by filtering, and was dried, and then used to form a 30% by mass solution in 1-methoxy-2-propanol, whereby alkali-soluble resin 4-10, which is an alkali-soluble resin (S), was obtained.

### (Synthesis Example 4-11) Synthesis of Alkali-soluble Resin 4-11

### Composition 2-2

| | |
|---|---|
| • Methacrylic acid (monomer): | 20 g |
| • Benzyl methacrylate (monomer): | 70 g |
| • Styrene (monomer): | 10 g |
| • 1-methoxy-2-propanol (solvent): | 100 g |

A solution obtained by mixing components shown in Composition 2-2 shown above was heated to 80°C under a nitrogen atmosphere. Then, 6.0 g of 2,2'-azobis(methyl 2-methylpropionate) was added thereto, and heating was continued for 2 hrs. Then, 0.05 g of 2,2'-azobis(methyl 2-methylpropionate) was added thereto, and heating was continued for 2 hrs. 0.05 g of 2,2'-azobis(methyl 2-methylpropionate) was further added thereto, and the resultant mixture liquid was heated to 90°C, and maintained at that temperature for 2 hrs. 1-methoxy-2-propanol was added to the solution, so that a 30% by mass solution of alkali-soluble resin 4-11, which is an alkali-soluble resin (S), was obtained.

### (Synthesis Example 4-12) Synthesis of Alkali-soluble Resin 4-12

### Composition 2-3

| | |
|---|---|
| • Methacrylic acid (monomer): | 20 g |
| • Benzyl methacrylate (monomer): | 70 g |
| • Styrene (monomer): | 10 g |
| • 2,2'-azobis(methyl 2-methylpropionate) (initiator F): | 4.0 g |
| • 1-methoxy-2-propanol (solvent): | 100 g |

A solution obtained by mixing components shown in Composition 2-3 described above was added dropwise under a nitrogen atmosphere over 6 hrs into 100 g of 1-methoxy-2-propanol heated at 80°C. Thereafter, 1.0 g of 2,2'-azobis(methyl 2-methylpropionate) was added thereto, and the resultant mixture liquid was heated to 90°C, and maintained at that temperature for 2 hrs. To the solution, 1-methoxy-2-propanol was added to prepare a 30% by mass solution of alkali-soluble resin 4-12 for Comparative Example was obtained.

### (Example 4-1)

### <Preparation of Titanium Black Dispersion liquid>

### - Composition 2-a -

| | |
|---|---|
| • (A) Titanium black (trade name: TITANIUM BLACK 13 M-T, manufactured by JEMCO Inc.): | 45 parts |
| • Surfactant (SOLSPERSE 36000): | 10 parts |
| • (B) Alkali-soluble resin (S) (alkali-soluble resin 4-1): | 10 parts |

Components shown in Composition 2-a described above were subjected to a high viscosity dispersing process using a two-roll mill, whereby, a "dispersion a" was obtained. Then, 10 parts of alkali-soluble resin 4-1 ((B) alkali-soluble resin (S)) and 200 parts of propylene glycol monomethyl ether acetate ((C) solvent) were added to the obtained "dispersion a", and the resultant mixture liquid was stirred using a homogenizer for 3 hrs under a condition of 3000 rpm, whereby a "mixed solution a" was obtained. The obtained "mixed solution a" was subjected to a finely-dispersing process for 5 hrs using a dispersing device (trade name: DISPERMAT, manufactured by GETZMANN Inc.) with 0.3 mm zirconia beads, whereby a titanium black dispersion liquid (L-1-1) was prepared.

### <Preparation of Black Curable Composition>

Components shown in Composition 2-b shown below were mixed, whereby Black Curable Composition (M-1-1) of Example 4-1 was prepared.

### - Composition 2-b -

| | |
|---|---|
| • (B) Alkali-soluble resin (S) (alkali-soluble resin 4-1): | 1.6 parts |
| • (E) Compound having ethylenic unsaturated double bond (dipentaerythritol hexaacrylate): | 2.3 parts |
| • (E) Compound having ethylenic unsaturated double bond (ethoxylated pentaerythritol tetraacrylate): | 0.8 parts |
| • (A) Titanium black (the dispersion liquid (L-1-1)): | 30 parts |
| • (C) Solvent (propylene glycol monomethyl ether acetate): | 10 parts |
| • (C) Solvent (ethyl 3-ethoxypropionate): | 8 parts |
| • (D) Photopolymerization initiator (initiator A): | 0.8 parts |

### <Preparation and Evaluation of Light-shielding Color Filter for a Solid-state Image Pickup Device>

### [Black Curable Composition Layer Forming Step]

Black Curable Composition M-1-1 was coated uniformly on a silicon wafer (support) by spin coating while regulating the coating rotation number of the spin coating such that the thickness of the film became 1.0 µm after the coating film was subjected to a heating treatment at a surface temperature of 120°C for 120 sec using a hot plate, and the heating treatment was performed, whereby a coating film (black curable composition layer) having a thickness of 1.0 µm was obtained.

### [Exposure Step]

Then, the coating film was irradiated with (exposed to) light through a photomask having a 3.0 µm line and space pattern using an i-line stepper FPA-3000iS+ (trade name, manufactured by Canon Inc.), at an exposure amount varied in the range of from 100 to 5000 mJ/cm² at an interval of 100 mJ/cm².

### [Development Step]

After irradiation (exposure), the coating film was subjected to a paddle develpment at 23°C for 60 sec using a 0.3% by mass aqueous solution of tetramethylammonium hydroxide (TMAH), rinsed with pure water for 20 sec by spin shower, and then washed with pure water.

After that, attached water drops were removed using a high-pressure air, and the substrate was allowed to naturally dry, thereby a black image pattern (3.0 µm line and space pattern) was obtained.

Thus, Light-shielding Color Filter m-1 for a solid-state image pickup device of Example 4-1 was obtained.

### [Evaluation]

Thus obtained Black Curable Composition M-1-1 and Light-shielding Color Filter m-1 for a solid-state image pickup device were evaluated as shown below.

### - Evaluation of Exposure Sensitivity -

The minimum exposure amount at which the post-development thickness of the region that was irradiated with light in the exposure step became 95% or more of the thickness (100%) of the coating film before the exposure was evaluated as an exposure requirement amount. A smaller exposure requirement amount indicates a higher sensitivity.

Evaluation results are shown in Table 4 below.

### - Residue Evaluation -

After development in the development step, a 10µm region in a space area that extends along a line was observed, and the number of residues of the black curable composition was observed. The observation was repeated in five space areas and an average value of the numbers of residues (the total number of observed residues/5) was calculated. When this value is smaller, the developability is better.

Evaluation results are shown in Table 4 below.

### - Evaluation of Pattern Shape -

The black image pattern of the obtained Light-shielding Color Filter m-1 for a solid-state image pickup device was cut perpendicularly to the substrate surface, and its sectional shape was observed with a SEM (trade name: S-9260A, manufactured by Hitachi High-Technology Electronic Corporation) and evaluated according to the following evaluation criteria. Evaluation results are shown in Table 4.

### (Evaluation Criteria)

A: A pattern shape is rectangular.
B: An upper portion of a pattern is round.

### [Examples 4-2 to 4-15 and Comparative Examples 4-1 and 4-2]

### <Preparation of Titanium Black Dispersion Liquid L-1-2 to L-1-17>

Each of titanium black dispersion liquids L-1-2 to L-1-17 for Examples 4-2 to 4-15 and Comparative Examples 4-1 and 4-2 was prepared in the same manner as the preparation of the titanium black dispersion liquid L-1-1 in Example 4-1, except that alkali-soluble resin 4-1 in Composition 2-a was replaced by each of alkali-soluble resins 4-2 to 4-12 described in the column for "resin" in Table 4 below.

### <Preparation of Black Curable Compositions M-1-2 to M-1-17>

Each of Black Curable Compositions M-1-2 to M-1-17 for Examples 4-2 to 4-15 and Comparative Examples 4-1 and 4-2 was prepared in the same manner as the preparation of Black Curable Composition M-1-1 in Example 4-1 except that alkali-soluble resin 4-1 in Composition 2-b was replaced by a resin described in the column for "resin" in Table 4 below, and the (D) photopolymerization initiator (initiator A) was replaced by an initiator described in the column for "initiator" in Table 4 below.

### <Preparation and Evaluation of Light-shielding Color Filter m-2 to m-17 for Solid-state Image Pickup Device >

Each of Light-shielding Color Filters m-2 to m-17 for solid-state image pickup devices of Examples 4-2 to 4-15 and Comparative Examples 4-1 and 4-2 was prepared in the same manner as the preparation of Light-shielding Color Filter m-1 for a solid-state image pickup device of Example 4-1, except that Black Curable Composition M-1-1 was replaced by each of Black Curable Compositions M-1-2 to M-1-17.

Thus obtained Black Curable Compositions M -1-2 to M-1-17 and light-shielding color filters m -2 to m -17 for solid-state image pickup devices were evaluated with respect to the exposure sensitivity, residue, and pattern shape in the same manner as in Example 4-1.

Evaluation results are shown in Table 4 below.

In the column for "initiator" in Table 4 below, A to E respectively represent initiators A to E having the structures shown below.

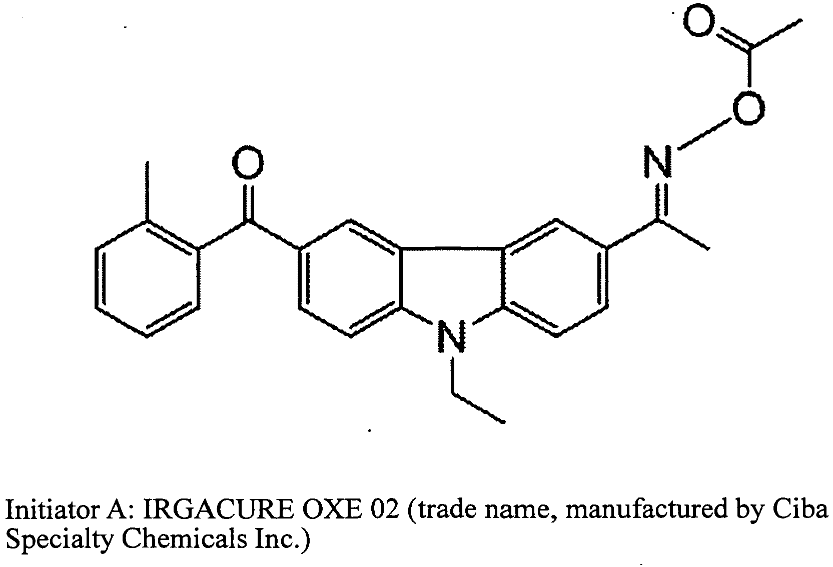

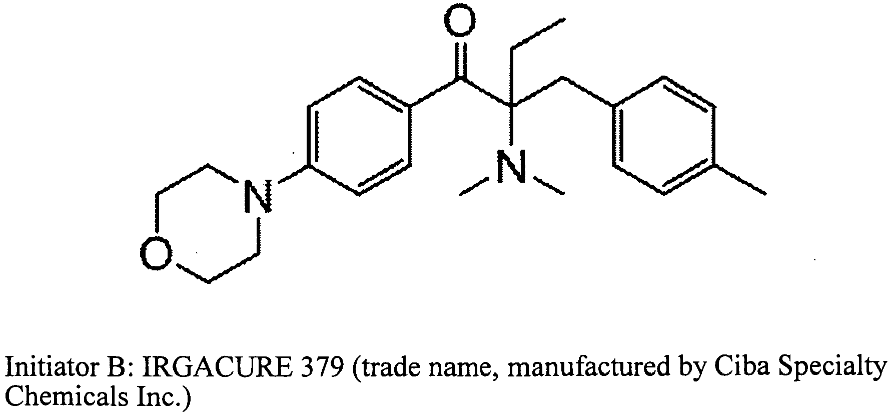

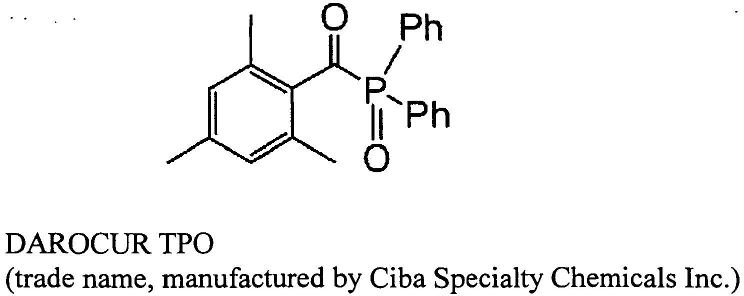

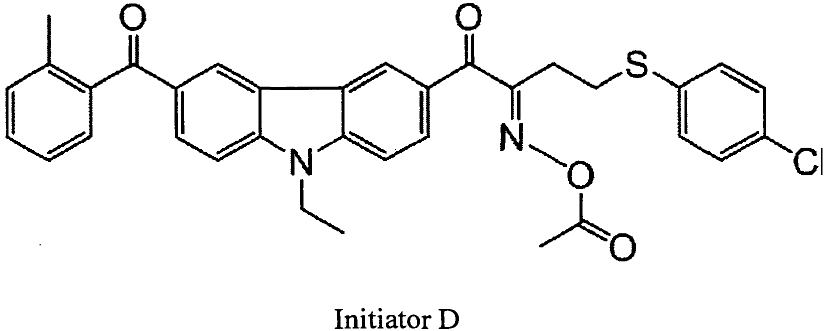

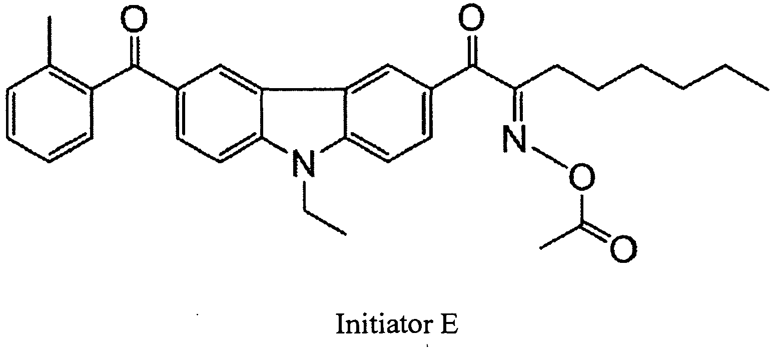

**Table 4**

| | Resin | Initiator | Sensitivity (mJ/cm²) | Residue | Pattern shape |
|---|---|---|---|---|---|
| Example 4-1 | Resin 4-1 | A | 1,100 | 3 | A |
| Example 4-2 * | Resin 4-1 | B | 1,900 | 3 | A |
| Example 4-3 * | Resin 4-1 | C | 1,700 | 3 | A |
| Example 4-4 | Resin 4-1 | D | 600 | 3 | A |
| Example 4-5 | Resin 4-1 | E | 700 | 3 | A |
| Example 4-6 * | Resin 4-2 | B | 2,000 | 0 | A |
| Example 4-7 | Resin 4-3 | A | 1,600 | 3 | A |
| Example 4-8 | Resin 4-4 | D | 600 | 0 | A |
| Example 4-9 | Resin 4-5 | A | 700 | 5 | A |
| Example 4-10 * | Resin 4-6 | C | 2,200 | 0 | A |
| Example 4-11 | Resin 4-7 | D | 600 | 0 | A |
| Example 4-12 | Resin 4-8 | A | 1,000 | 0 | A |
| Example 4-13 | Resin 4-9 | D | 600 | 4 | A |
| Example 4-14 | Resin 4-10 | A | 600 | 1 | A |
| Example 4-15 | Resin 4-11 | A | 1,500 | 8 | A |
| Comparative Example 4-1 | Resin 4-12 | B | 1,500 | 45 | B |
| Comparative Example 4-1 | Resin 4-12 | C | 1,800 | 50 | B |

| | | | | | |
|---|---|---|---|---|---|
| *Comparative | | | | | |

As is obvious from Table 4, it was found that the residue of the uncured black curable composition was decreased, the pattern shape was excellent, and the black curable composition was cured at low exposure amount in Examples 4-1 to 4-15 in which alkali-soluble resins having a weight average molecular weight of from 2000 to less than 20,000 (resins 4-1 to 4-11 in Table 4) were used, in comparison with Comparative Examples. Therefore, it is understood that when the black curable composition of the second embodiment is used, the black curable composition in an unexposed portion can be easily developed and removed and curing of the black curable composition layer is excellently so that the pattern shape is excellent without collapsing. It was also found that the black curable composition is cured at very high sensitivity in Example 4-14 in which alkali-soluble resin 4-10 having a small molecular weight distribution (Mw/Mn) (specifically Mw/Mn of 1.8) was used, in comparison with Example 4-1 in which resin 4-1 that has the same monomer composition and substantially same molecular weight, but having a larger Mw/Mn value, was used and Example 4-15 in which resin 4-11 was used.

On the other hand, in Comparative Examples 4-1 and 4-2 in which alkali-soluble resin 4-12 (resin 4-12 in Table 4) having a weight average molecular weight exceeding 20,000 was used, it was found that although the black curable composition is cured at low exposure amount, the removability by development of the black curable composition in an unexposed portion is insufficient, residues are left, and the pattern shape is not satisfactory, in comparison with Examples 4-1 to 4-15.

### (Example 4-16)

### <Preparation of Solid-state Image Pickup Device>

### - Preparation of Chromatic Curable Composition -

Each of Red (R) Chromatic Curable Composition 2-C-1, Green (G) Chromatic Curable Composition 2-C-2 and Blue (B) Chromatic Curable Composition 2-C-3, was prepared in the same manner as the preparation of Black Curable Composition M-1-1 in Example 4-1, except that the black pigment titanium black 13M-T (trade name, manufactured by JEMCO Inc.) was replaced by the chromatic pigments described below.

### Chromatic Pigment for Forming Chromatic Pixels for Each of RGB Colors

### • Red (R) Pigment

C. I. Pigment Red 254

### • Green (G) Pigment

A 30/70 mixture (by mass ratio) of C. I. Pigment Green 36 and C. I. Pigment Yellow 219

### • Blue (B) Pigment

A 30/70 mixture (by mass ratio) of C. I. Pigment Blue 15:6 and C. I. Pigment Violet 23

### - Preparation of Full-color Color Filter for a Solid-state Image Pickup Device -

Light-shielding Color Filter m-1 for a solid-state image pickup device, which was prepared in Example 4-1, was used as a black matrix, and, on the black matrix, Red (R) Chromatic Curable Composition 2-C-1 was provided to form a red (R) colored pattern in a manner similar to that in Example 4-1. Similarly, a green (G) chromatic pattern and blue (B) chromatic pattern were sequentially formed, whereby a full-color color filter for a solid-state image pickup device was prepared.

### - Evaluation -

When the obtained full-color color filter was incorporated into a solid-state image pickup device, it was confirmed that the obtained solid-state image pickup device had high resolution and excellent color separation properties, and the light-shielding color filter therein had excellent light-shielding properties.

### (Examples Corresponding to Third Embodiment)

### (Synthesis Example 5-1) Synthesis of Resin 5-1

18 g of methacrylic acid, 80 g of benzyl methacrylate, 1.0 g of 2,2'-azobis(methyl 2-methylpropionate), and 100 g of 1-methoxy-2-propanol were mixed to prepare a monomer solution for dropwise addition. The monomer solution for dropwise addition was added dropwise under a nitrogen atmosphere over 6 hours into 100g of 1-methoxy-2-propanol heated at 80°C. Thereafter, 1.0 g of 2,2'-azobis(methyl 2-methylpropionate) was added, and the resultant mixture was heated to 90°C and maintained at that temperature for 2 hrs. To the solution, 1-methoxy-2-propanol was added, thereby providing a 30% by mass solution.

### (Synthesis Examples 5-2 to 5-9) Synthesis of Resins 5-2 to 5-9

Each of resins 5-2 to 5-9 was synthesized in the same manner as in Synthesis Example 1, except that the monomer and initiator contained in the monomer solution for dropwise addition are changed to those shown in Table 5. In Table 5, initiator A is 2,2'-azobis(2-methyl propionate methyl) and initiator B is 2,2'-azobis(isobutylonitrile). Furthermore, the structure of a compound X is same as the structure of X in Synthesis Example 4-8.

### (Synthesis Example 5-10) Synthesis of Resin 5-10

20 g of methacrylic acid, 80 g of benzyl methacrylate, 1.0 g of 2,2'-azobis(methyl 2-methylpropionate), and 100 g of 1-methoxy-2-propanol were mixed to prepare a monomer solution for dropwise addition. The monomer solution for dropwise addition was added dropwise under a nitrogen atmosphere over 6 hrs into 100g of 1-methoxy-2-propanol heated at 80°C, and heating was further continued for 2 hrs. After the dropwise addition, the resultant solution was added dropwise into a mixed solution of 200 mL of methanol and 800 mL of water. The resultant solid was collected by filteration, and, after drying, a 30% by mass 1-methoxy-2-propanol solution thereof was prepared.

### (Synthesis Example 5-11) Synthesis of Resin 5-11

20 g of methacrylic acid, 80 g of benzyl methacrylate, 1.0 g of 2,2'-azobis(methyl 2-methylpropionate), and 100 g of 1-methoxy-2-propanol were mixed to prepare a monomer solution for dropwise addition. The monomer solution for dropwise addition was added dropwise under a nitrogen atmosphere over 6 hrs into 100g of 1-methoxy-2-propanol heated at 80°C, and heating was further continued for 2 hrs. To the solution, 1-methoxy-2-propanol was added to prepare a 30% by mass solution.

### (Synthesis Example 5-12) Synthesis of Resin 5-12

A solution obtained by mixing 20 g of methacrylic acid, 80 g of benzyl methacrylate, and 100g of 1-methoxy-2-propanol was heated to 80°C under a nitrogen atmosphere. Then, 1.0 g of 2,2'-azobis(methyl 2-methylpropionate) was added thereto, and heating was continued for 2 hrs. Then, 0.05 g of 2,2'-azobis(methyl 2-methylpropionate) was added into the obtained mixture liquid, and heating was further continued for 2 hrs. Thereafter, 0.05 g of 2,2'-azobis(methyl 2-methylpropionate) was added thereto, and the resultant mixture liquid was heated to 90°C and maintained at that temperature for 2 hrs. 1-methoxy-2-propanol was added to the obtained solution, thereby providing a 30% by mass solution.

### (Synthesis Example 5-13) Synthesis of Resin 5-13

A solution for dropwise addition obtained by mixing 20 g of methacrylic acid, 80 g of benzyl methacrylate, 5.0 g of 2,2'-azobis(methyl 2-methylpropionate), and 100 g of 1-methoxy-2-propanol was added dropwise under a nitrogen atmosphere over 6 hrs into 100 g of 1-methoxy-2-propanol heated to 80°C. Thereafter, 1.0 g of 2,2'-azobis(methyl 2-methylpropionate) was added thereto, and the resultant mixture liquid was heated to 90°C and maintained at that temperature for 2 hrs. 1-methoxy-2-propanol was added to the obtained solution, thereby providing a 30% by mass solution.

In Table 5, the weight average molecular weight, degree of polydispersion, acid value, and residual monomer amount of each of resins 5-1 to 5-13 are shown. The residual monomer amount was quantified using high performance liquid chromatography (measuring device: WATERS 2695 (trade name, manufactured by Waters Inc.,), column: SHIM-PACK CLC-ODS (trade name, manufactured by Shimadzu Corporation)(6.0 mm × 15 cm, eluent: tetrahydrofuran/water (containing 0.1% by volume of phosphoric acid and 0.1% by volume of triethylamine) = 65/35)).

In Table 5, in brackets shown in the columns for monomer-1, monomer-2, monomer-3, and initiator, quantities of the respective materials in terms of parts by mass are shown.

**Table 5**

| | Monomer 1 | Monomer 2 | Monomer 3 | Initiator | Weight average molecular weight | Degree of Polydispersion | Acid value (mgKOH/g) | Residual monomer amount |
|---|---|---|---|---|---|---|---|---|
| Resin (5-1) | Methacrylic acid (18) | Benzyl methacrylate (82) | - | A (1.0) | 35000 | 2.4 | 130 | 3 |
| Resin (5-2) | Acrylic acid (12.5) | Benzyl methacrylate (70) | Butyl methacrylate (17.5) | B (1.0) | 33000 | 2.3 | 98 | 3 |
| Resin (5-3) | Methacrylic acid (10) | Cyclohexyl methacrylate (90) | - | A (0.5) | 45000 | 2.1 | 65 | 4 |
| Resin (5-4) | Methacrylic acid (15) | Methyl methacrylate (85) | - | A (1.0) | 31000 | 2.2 | 100 | 3 |
| Resin (5-5) | Acrylic acid (20) | Benzyl methacrylate (70) | Butyl acrylate (10) | A (0.5) | 45000 | 2.5 | 155 | 3 |
| Resin (5-6) | Methacrylic acid (5) | Acrylic acid (5) | methacrylate (90) | B (1.0) | 32000 | 2.1 | 72 | 3 |
| Resin (5-7) | Acrylic acid (10.5) | Benzyl methacrylate (79.5) | 2-hydroxyethyl methacrylate (10) | B (2.0) | 25000 | 2.2 | 80 | 3 |
| Resin (5-8) | Methacrylic acid (20) | Benzyl methacrylate (70) | Butyl acrylate (10) | A (0.1) | 82000 | 2.1 | 130 | 3 |
| Resin (5-9) | Compound X (40) | Benzyl methacrylate (60) | - | A (1.0) | 31000 | 2.1 | 98 | 3 |
| Resin (5-10) | Methacrylic acid (20) | Benzyl methacrylate (80) | - | A (1.0) | 33000 | 1.8 | 130 | less than detection limit |
| Resin (5-11) | Methacrylic acid (20) | methacrylate (80) | - | A (1.0) | 35000 | 2.4 | 130 | 10 |
| Resin (5-12) | Methacrylic acid (20) | Benzyl methacrylate (80) | - | A (1.0) | 35000 | 3.1 | 130 | 3 |
| Resin (5-13) | Methacrylic acid (20) | Benzyl methacrylate (80) | - | B (5.0) | 19000 | 2.5 | 130 | 3 |

### (Example 5-1)

### (Preparation of Dispersion liquid)

45 parts of titanium black 13M-T (trade name, manufactured by JEMCO Inc.), 10 parts of SOLSPERSE 36000 (trade name, manufactured by Abisia Corp.), and 10 parts of resin (5-1) were mixed, and the resultant mixture was subjected to a high viscosity dispersing process using a two-roll mill. The viscosity of the resultant dispersion was taken as viscosity A.

Thereafter, 10 parts of resin (5-1) and 200 parts of propylene glycol monomethyl ether acetate were added to the resultant dispersion, and stirred with a homogenizer for 3 hrs under a condition of 3000 rpm. The resultant mixed solution was subjected to a finely-dispersing process for 5 hrs using a dispersing device (trade name: DISPERMAT, manufactured by GETZMANN Inc.) with 0.3 mm zirconia beads, whereby a dispersion liquid (L-2-1) was prepared. The viscosity of the obtained dispersion liquid (L-2-1) was taken as viscosity B.

### (Preparation of Black Curable Composition)

Black Curable Composition (M-2-1) having the following composition was prepared.

| | |
|---|---|
| • Resin (5-1): | 1.6 parts |
| • Dipentaerythritol hexaacrylate: | 2.3 parts |
| • Ethoxylated pentaerythritol tetraacrylate: | 0.8 parts |
| • Dispersion liquid (L-2-1): | 30 parts |
| • Propylene glycol monomethyl ether acetate: | 10 parts |
| • Ethyl 3-ethoxypropionate: | 8 parts |
| • Initiator shown in Table 6: | 0.8 parts |

### (Preparation and Evaluation of Light-shielding Color Filter for Solid-state Image Pickup Device)

Black Curable Composition M-2-1 was coated uniformly on a silicon wafer by spin coating while regulating the coating rotation number of the spin coating such that the thickness of the film after the prebaking described below became 1.0 µm, and the coating film was subjected to a heating (prebaking) treatment using a hot plate at a surface temperature of 120°C for 120 sec, whereby a silicon wafer having a coating film having a thickness of 1.0 µm was obtained.

Then, an i-line stepper FPA-3000iS+ (trade name, manufactured by Canon Inc.) was used to expose the coating film to light through a photomask having a 3.0µm line and space pattern at an exposure amount varied in the range of from 100 mJ/cm² to 5000 mJ/cm² at an interval of 100 mJ/cm².

After irradiation, the coating film was subjected to a paddle development at 23°C for 60 sec using a 0.3% aqueous solution of tetramethylammonium hydroxide (TMAH), rinsed with pure water for 20 sec by spin shower, and then washed with pure water. Thereafter, attached water drops were removed using a high-pressure air, and the substrate was allowed to naturally dry, whereby a black image pattern (3.0 µm line and space pattern) was obtained.

### (Evaluation)

Thus obtained Black Curable Composition M-2-1 was evaluated as described below. Results thereof are shown in Table 6.

### - Evaluation of Adhesiveness to Substrate -

100 lines of the pattern were observed with a SEM, and the minimum exposure amount at which pattern defect was not observed was measured. A smaller minimum exposure amount indicates higher adhesiveness to the substrate.

### - Evaluation of Stability over Time-

The black curable composition was stored at 25°C. The viscosity of the black curable composition at preparation thereof and the viscosity of the black curable composition after storage for 7 days were measured, and the difference (viscosity after 7-days storage - initial viscosity) is shown in Table 6 as stability over time. When the difference is smaller, stability over time is higher.

### (Examples 5-2 to 5-16 and Comparative Examples 5-1 and 5-2)

The adhesiveness to the substrate was evaluated in the same manner as in Example 5-1, except that resin (5-1) and the initiator used in Example 5-1 were replaced by the resin and initiator shown in Table 6.

Initiators A to E shown in Table 6 represent the following:
A: IRGACURE OXE02 (trade name, manufactured by Ciba Specialty Chemicals Inc.)
B: IRGACURE 379 (trade name, manufactured by Ciba Specialty Chemicals Inc.)
C: DAROCURE TPO (trade name, manufactured by Ciba Specialty Chemicals Inc.)
D: Compound shown above
E: Compound shown above

The structures of initiators A, B, C, D and E are respectively the same as those in Table 4.

**Table 6**

| | Resin | Initiator | Minimum Exposure Amount (mJ/cm²) | Stability over Time (mPa·s) |
|---|---|---|---|---|
| Example 5-1 | Resin (5-1) | A | 1000 | 2 |
| Example 5-2 * | Resin (5-1) | B | 1200 | 2 |
| Example 5-3 * | Resin (5-1) | C | 1400 | 2 |
| Example 5-4 | Resin (5-1) | D | 700 | 2 |
| Example 5-5 * | Resin (5-1) | B | 800 | 2 |
| Example 5-6 | Resin (5-2) | A | 1300 | 2 |
| Example 5-7 | Resin (5-3) | A | 900 | 3 |
| Example 5-8 | Resin (5-4) | D | 700 | Not more than 1 |
| Example 5-9 | Resin (5-5) | E | 800 | 4 |
| Example 5-10 * | Resin (5-6) | C | 1300 | 3 |
| Example 5-11 | Resin (5-7) | A | 1100 | Not more than 1 |
| Example 5-12 | Resin (5-8) | A | 1000 | 5 |
| Example 5-13 | Resin (5-9) | A | 800 | Not more than 1 |
| Example 5-14 | Resin (5-10) | A | 1700 | Not more than 1 |
| Example 5-15 | Resin (5-11) | A | 2100 | 5 |
| Example 5-16 * | Resin (5-12) | C | 2000 | 6 |
| Comparative Example 5-1 | Resin (5-13) | A | 3000 | 15 |
| Comparative Example 5-2 | Resin (5-13) | C | 5000 | 20 |

| | | | | |
|---|---|---|---|---|
| *Comparative | | | | |

From Table 6, it is found that in each of Examples 5-1 to 5-16, in which a black curable composition of the third embodiment is used, the minimum exposure amount was small and pattern defect did not occur even at a small exposure amount. On the other hand, it is found that in each of Comparative Examples 5-1 and 5-2, in which a resin having a weight average molecular weight outside the range of the third embodiment, the minimum exposure amount was large and pattern defects tend to occur at low exposure amounts.

Furthermore, in the Comparative Examples, the numerical value for stability over time is large, indicating poor stability of the black curable composition over time.. On the other hand, it is found that the Examples of the third embodiment are excellent also in stability over time.

### (Example 5-17)

### <Preparation of Solid-state Image Pickup Device>

### - Preparation of Chromatic Curable Composition -

Each of Chromatic Curable Composition 3-C-1 for Red (R), Chromatic Curable Composition 3-C-2 for Green (G), and Chromatic Curable Composition 3-C-3 for Blue (B) was prepared in the same manner as the preparation of Black Curable Composition M-2-1 prepared in Example 5-1, except that the black pigment titanium black 13M-T (trade name, manufactured by JEMCO Inc.) was replaced by the chromatic pigments shown below.

### Chromatic Pigment for Forming Chromatic Pixels of Each of RGB

### • Red (R) Pigment

C. I. Pigment Red 254

### • Green (G) Pigment

A 30/70 mixture (by mass ratio) of C. I. Pigment Green 36 and C. I. Pigment Yellow 219

### • Blue (B) Pigment

A 30/70 mixture (by mass ratio) of C. I. Pigment Blue 15:6 and C. I. Pigment Violet 23

### - Preparation of Color Filter for Solid-state Image Pickup Device -

The light-shielding color filter for a solid-state image pickup device that was prepared in Example 5-1 was used as a black matrix, and, on the black matrix, Red (R) Chromatic Curable Composition 3-C-1 was provided to form a red (R) colored pattern in a manner similar to that described in Example 5-1. Similarly, a green (G) chromatic pattern and a blue (B) chromatic pattern were sequentially formed, whereby a color filter for a solid-state image pickup device was prepared.

### - Evaluation -

When the resultant color filter for a solid-state image pickup device was incorporated into a solid-state image pickup device, it was confirmed that the obtained solid-state image pickup device had high resolution and excellent color separation properties, and the light-shielding color filter therein had excellent light-shielding properties.

## Claims

1. A polymerizable composition comprising a titanium black dispersion containing titanium black and an alkali-soluble resin having at least one unsaturated double bond, a polymerizable compound, and an oxime photopolymerization initiator.

2. A polymerizable composition according to Claim 1, wherein the alkali-soluble resin having at least one unsaturated double bond has, in a side chain or side chains thereof, Partial Structure (b) or Partial Structure (c): 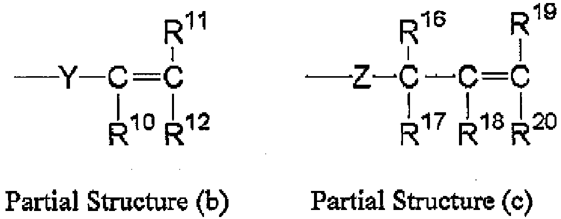 wherein R¹⁰ to R¹² and R¹⁶ to R²⁰ each independently represent a monovalent substituent, Z represents an oxygen atom, a sulfur atom, or -N(R²²)-, and R²² represents a hydrogen atom or a monovalent organic group, Y represents an oxygen atom, a sulfur atom, a phenylene group that may have a substituent, or -N(R²³)-, and R²³ represents a hydrogen atom or a monovalent organic group.

3. A polymerizable composition according to Claim 1, wherein the alkali-soluble resin having at least one unsaturated double bond contains a structural unit represented by the following Formula (4): 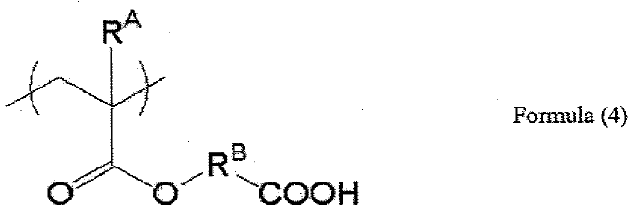 wherein, R^{A} represents a hydrogen atom or an alkyl group having 1 to 6 carbon atoms, and R^{B} represents a divalent linking group.

4. Use of the polymerizable composition of Claim 1 in preparation of a light-shielding color filter.

5. A light-shielding color filter comprising a colored region provided on a support, wherein the colored region is formed using the polymerizable composition of Claim 1.

6. A solid-state image pickup device comprising the light-shielding color filter of Claim 5.

7. A black curable composition comprising titanium black, an alkali-soluble resin having a weight average molecular weight of from 2000 to less than 20,000, a solvent, an oxime photopolymerization initiator, and a compound having an ethylenic unsaturated double bond.

8. A black curable composition of Claim 7, wherein the alkali-soluble resin having a weight average molecular weight of from 2000 to less than 20,000 has a ratio of weight average molecular weight to number average molecular weight (molecular weight distribution) of less than 3.0.

9. A black curable composition according to Claim 7 or Claim 8, wherein the acid value of the alkali-soluble resin having a weight average molecular weight of from 2000 to less than 20,000 is from 50 mgKOH/g to 200 mgKOH/g.

10. A method of producing a light-shielding color filter for a solid-state image pickup device, the method comprising applying the black curable composition as defined in Claim 7 or Claim 8 to a support, exposing the applied black curable composition to light through a mask, and developing the composition to form a pattern.

11. A light-shielding color filter for a solid-state image pickup device, having a pattern that is formed using the black curable composition as defined in Claim 7 or Claim 8.

12. A solid-state image pickup device comprising the light-shielding color filter of Claim 11.

13. A black curable composition comprising titanium black, an alkali-soluble resin having a weight average molecular weight of from 20,000 to 100,000, a solvent, an oxime photopolymerization initiator, and a compound having an ethylenic unsaturated double bond.

14. A black curable composition according to Claim 13, wherein the alkali-soluble resin has a ratio of weight average molecular weight to number average molecular weight of from 1.1 to 3.0.

15. A black curable composition according to Claim 13 or Claim 14, wherein the photopolymerization initiator is an oxime photopolymerization initiator represented by the following Formula (3): 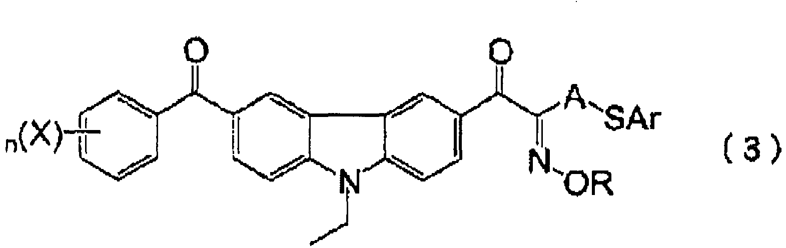 wherein R and X each independently represent a monovalent substituent, A represents a divalent organic group, Ar represents an aryl group, and n represents an integer of from 1 to 5.

16. A light-shielding color filter for a solid-state image pickup device, wherein the light-shielding color filter is formed using the black curable composition as defined in Claim 13 or Claim 14.

17. An antireflection film for a solid-state image pickup device, wherein the antireflection film is formed using the black curable composition as defined in Claim 13 or Claim 14.

18. A method of producing a light-shielding color filter for a solid-state image pickup device, the method comprising applying the black curable composition as defined in Claim 13 or Claim 14 to a support, exposing the applied black curable composition to light through a mask, and developing the composition to form a pattern.

19. A solid-state image pickup device comprising the light-shielding color filter as defined in Claim 16.

## Patentansprüche

1. Polymerisierbare Zusammensetzung, umfassend eine Titanschwarz-Dispersion, enthaltend Titanschwarz und ein alkalilösliches Harz mit zumindest einer ungesättigten Doppelbindung, eine polymerisierbare Verbindung und einen Oxim-Fotopolymerisationsinitiator.

2. Polymerisierbare Zusammensetzung gemäß Anspruch 1, worin das alkalilösliche Harz mit zumindest einer ungesättigten Doppelbindung in einer Seitenkette oder in Seitenketten hiervon die Teilstruktur (b) oder die Teilstruktur (c) aufweist: 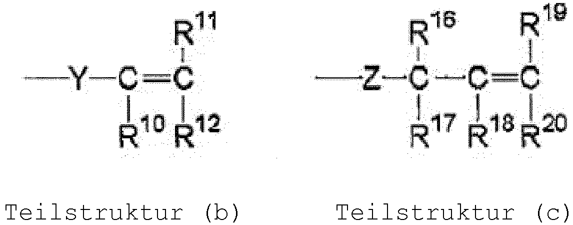 worin R¹⁰ bis R¹² und R¹⁶ bis R²⁰ jeweils unabhängig einen monovalenten Substituenten darstellen, Z ein Sauerstoffatom, ein Schwefelatom oder -N(R²²)- darstellt und R²² ein Wasserstoffatom oder eine monovalente organische Gruppe darstellt, Y ein Sauerstoffatom, ein Schwefelatom, eine Phenylengruppe, die einen Substituenten aufweisen kann, oder -N(R²³)- darstellt, und R²³ ein Wasserstoffatom oder eine monovalente organische Gruppe darstellt.

3. Polymerisierbare Zusammensetzung gemäß Anspruch 1, worin das alkalilösliche Harz mit zumindest einer ungesättigten Doppelbindung eine durch die folgende Formel (4) dargestellte Struktureinheit enthält: 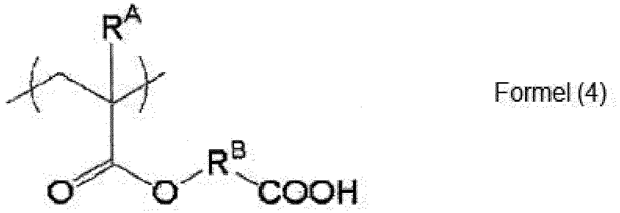 worin R^{A} ein Wasserstoffatom oder eine Alkylgruppe mit 1 bis 6 Kohlenstoffatomen darstellt und R^{B} eine divalente Verknüpfungsgruppe darstellt.

4. Verwendung der polymerisierbaren Zusammensetzung gemäß Anspruch 1 bei der Herstellung eines lichtabschirmenden Farbfilters.

5. Lichtabschirmender Farbfilter, umfassend einen gefärbten Bereich, der auf einen Träger vorgesehen ist, worin der gefärbte Bereich gebildet ist unter Verwendung der polymerisierbaren Zusammensetzung gemäß Anspruch 1.

6. Festphasen-Bildaufnahmevorrichtung, umfassend den lichtabschirmenden Farbfilter gemäß Anspruch 5.

7. Schwarze, härtbare Zusammensetzung, umfassend Titanschwarz, ein alkalilösliches Harz mit einem gewichtsgemittelten Molekulargewicht von 2.000 bis kleiner als 20.000, ein Lösungsmittel, einen Oxim-Fotopolymerisationsinitiator und eine Verbindung mit einer ethylenisch ungesättigten Doppelbindung.

8. Schwarze, härtbare Zusammensetzung gemäß Anspruch 7, worin das alkalilösliche Harz mit einem gewichtsgemittelten Molekulargewicht von 2.000 bis kleiner als 20.000 ein Verhältnis des gewichtsgemittelten Molekulargewichts zum zahlengemittelten Molekulargewicht (Molekulargewichtsverteilung) von kleiner als 3,0 aufweist.

9. Schwarze, härtbare Zusammensetzung gemäß Anspruch 7 oder Anspruch 8, worin der Säurewert des alkalilöslichen Harzes mit einem gewichtsgemittelten Molekulargewicht von 2.000 bis kleiner als 20.000 von 50 mgKOH/g bis 200 mg/KOH/g beträgt.

10. Verfahren zur Herstellung eines lichtabschirmenden Farbfilters für eine Festphasen-Bildaufnahmevorrichtung, wobei das Verfahren das Auftragen der schwarzen, härtbaren Zusammensetzung, wie sie in Anspruch 7 oder Anspruch 8 definiert ist, auf einen Träger, Belichten der aufgetragenen schwarzen, härtbaren Zusammensetzung durch eine Maske und Entwickeln der Zusammensetzung, um eine Struktur zu bilden, umfasst.

11. Lichtabschirmender Farbfilter für eine Festphasen-Bildaufnahmevorrichtung mit einer Struktur, die unter Verwendung der schwarzen, härtbaren Zusammensetzung, wie sie in Anspruch 7 oder Anspruch 8 definiert ist, gebildet ist.

12. Festphasen-Bildaufnahmevorrichtung, umfassend den lichtabschirmenden Farbfilter gemäß Anspruch 11.

13. Schwarze, härtbare Zusammensetzung, umfassend Titanschwarz, ein alkalilösliches Harz mit einem gewichtsgemittelten Molekulargewicht von 20.000 bis 100.000, ein Lösungsmittel, einen Oxim-Fotopolymerisationsinitiator und eine Verbindung mit einer ethylenisch ungesättigten Doppelbindung.

14. Schwarze, härtbare Zusammensetzung gemäß Anspruch 13, worin das alkalilösliche Harz ein Verhältnis des gewichtsgemittelten Molekulargewichts zum zahlengemittelten Molekulargewicht von 1,1 bis 3,0 aufweist.

15. Schwarze, härtbare Zusammensetzung gemäß Anspruch 13 oder Anspruch 14, worin der Fotopolymerisationsinitiator ein durch die folgende Formel (3) dargestellter Oxim-Fotopolymerisationsinitiator ist: 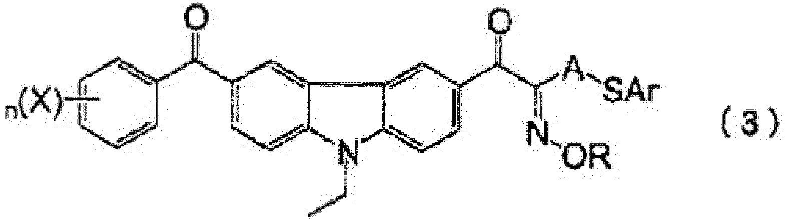 worin R und X jeweils unabhängig einen monovalenten Substituenten darstellen, A eine divalente organische Gruppe darstellt, Ar eine Arylgruppe darstellt und n eine ganze Zahl von 1 bis 5 darstellt.

16. Lichtabschirmender Farbfilter für eine Festphasen-Bildaufnahmevorrichtung, worin der lichtabschirmende Farbfilter gebildet ist unter Verwendung der schwarzen, härtbaren Zusammensetzung, wie sie in Anspruch 13 oder Anspruch 14 definiert ist.

17. Antireflektionsfilm für eine Festphasen-Bildaufnahmevorrichtung, worin der Antireflektionsfilm gebildet ist unter Verwendung der schwarzen, härtbaren Zusammensetzung, wie sie in Anspruch 13 oder Anspruch 14 definiert ist.

18. Verfahren zur Herstellung eines lichtabschirmenden Farbfilters für eine Festphasen-Bildaufnahmevorrichtung, worin das Verfahren das Auftragen der schwarzen, härtbaren Zusammensetzung, wie sie in Anspruch 13 oder Anspruch 14 definiert ist, auf einen Träger, Belichten der aufgetragenen schwarzen, härtbaren Zusammensetzung durch eine Maske und Entwickeln der Zusammensetzung, um eine Struktur zu bilden, umfasst.

19. Festphasen-Bildaufnahmevorrichtung, umfassend den lichtabschirmenden Farbfilter, wie er in Anspruch 16 definiert ist.

## Revendications

1. Composition polymérisable comprenant une dispersion de noir de titane contenant un noir de titane et une résine soluble dans les alcalins ayant au moins une liaison double insaturée, un composé polymérisable, et un initiateur de photopolymérisation de type oxime.

2. Composition polymérisable selon la revendication 1, dans laquelle la résine soluble dans les alcalins ayant au moins une liaison double insaturée présente, dans une chaîne latérale ou des chaînes latérales de celle-ci, la Structure Partielle (b) ou la Structure Partielle (c) : 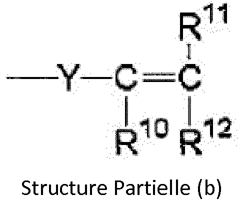 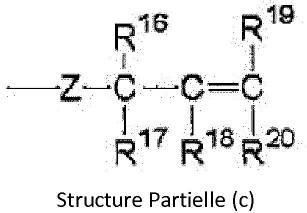 dans lesquelles R¹⁰ à R¹² et R¹⁶ à R²⁰ représentent chacun indépendamment un substituant monovalent, Z représente un atome d'oxygène, un atome de soufre, ou -N(R²²)-, et R²² représente un atome d'hydrogène ou un groupe organique monovalent, Y représente un atome d'oxygène, un atome de soufre, un groupe phénylène qui peut avoir un substituant, ou -N(R²³)-, et R²³ représente un atome d'hydrogène ou un groupe organique monovalent.

3. Composition polymérisable selon la revendication 1, dans laquelle la résine soluble dans les alcalins ayant au moins une liaison double insaturée contient un motif structurel représenté par la formule (4) suivante : 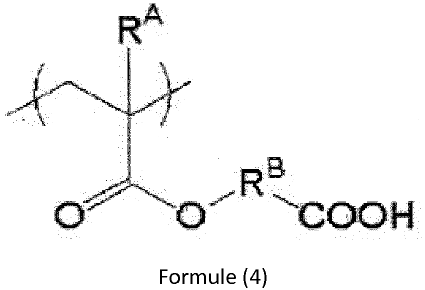 dans laquelle, R^{A} représente un atome d'hydrogène ou un groupe alkyle ayant 1 à 6 atomes de carbone, et R^{B} représente un groupe de liaison divalent.

4. Utilisation de la composition polymérisable selon la revendication 1 dans la préparation d'un filtre coloré de protection contre la lumière.

5. Filtre coloré de protection contre la lumière comprenant une région colorée fournie sur un support, dans lequel la région colorée est formée en utilisant la composition polymérisable selon la revendication 1.

6. Dispositif de prise d'image à semi-conducteur comprenant le filtre coloré de protection contre la lumière selon la revendication 5.

7. Composition durcissable noire comprenant un noir de titane, une résine soluble dans les alcalins présentant un poids moléculaire moyen en poids allant de 2000 à moins de 20 000, un solvant, un initiateur de photopolymérisation de type oxime, et un composé ayant une liaison double insaturée éthylénique.

8. Composition durcissable noire selon la revendication 7, dans laquelle la résine soluble dans les alcalins présentant un poids moléculaire moyen en poids allant de 2000 à moins de 20 000 présente un rapport entre un poids moléculaire moyen en poids et un poids moléculaire moyen en nombre (répartition de poids moléculaire) inférieur à 3,0.

9. Composition durcissable noire selon la revendication 7 ou la revendication 8, dans laquelle l'indice d'acidité de la résine soluble dans les alcalins présentant un poids moléculaire moyen en poids allant de 2000 à moins de 20 000 est de 50 mg de KOH/g à 200 mg de KOH/g.

10. Procédé de production d'un filtre coloré de protection contre la lumière pour un dispositif de prise d'image à semi-conducteur, le procédé comprenant l'application de la composition durcissable noire telle que définie dans la revendication 7 ou la revendication 8 sur un support, l'exposition de la composition durcissable noire appliquée à une lumière à travers un masque, et le développement de la composition pour former un motif.

11. Filtre coloré de protection contre la lumière pour un dispositif de prise d'image à semi-conducteur, ayant un motif qui est formé en utilisant la composition durcissable noire telle que définie dans la revendication 7 ou la revendication 8.

12. Dispositif de prise d'image à semi-conducteur comprenant le filtre coloré de protection contre la lumière selon la revendication 11.

13. Composition durcissable noire comprenant un noir de titane, une résine soluble dans les alcalins présentant un poids moléculaire moyen en poids allant de 20 000 à 100 000, un solvant, un initiateur de photopolymérisation de type oxime, et un composé ayant une liaison double insaturée éthylénique.

14. Composition durcissable noire selon la revendication 13, dans laquelle la résine soluble dans les alcalins présente un rapport entre un poids moléculaire moyen en poids et un poids moléculaire moyen en nombre de 1,1 à 3,0.

15. Composition durcissable noire selon la revendication 13 ou la revendication 14, dans laquelle l'initiateur de photopolymérisation est un initiateur de photopolymérisation de type oxime représenté par la formule (3) suivante : 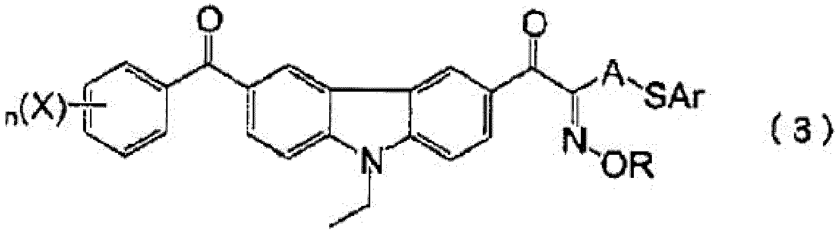 dans laquelle R et X représentent chacun indépendamment un substituant monovalent, A représente un groupe organique divalent, Ar représente un groupe aryle, et n représente un nombre entier allant de 1 à 5.

16. Filtre coloré de protection contre la lumière pour un dispositif de prise d'image à semi-conducteur, dans lequel le filtre coloré de protection contre la lumière est formé en utilisant la composition durcissable noire telle que définie dans la revendication 13 ou la revendication 14.

17. Film antireflet pour un dispositif de prise d'image à semi-conducteur, dans lequel le film antireflet est formé en utilisant la composition durcissable noire telle que définie dans la revendication 13 ou la revendication 14.

18. Procédé de production d'un filtre coloré de protection contre la lumière pour un dispositif de prise d'image à semi-conducteur, le procédé comprenant l'application de la composition durcissable noire telle que définie dans la revendication 13 ou la revendication 14 sur un support, l'exposition de la composition durcissable noire appliquée à une lumière à travers un masque, et le développement de la composition pour former un motif.

19. Dispositif de prise d'image à semi-conducteur comprenant le filtre coloré de protection contre la lumière tel que défini dans la revendication 16.
